# EUROPEAN PATENT APPLICATION

(11) **EP 1 392 027 A1**
(43) Date of publication of application: **25.02.2004**
(21) Application number: 01274268.0
(22) Date of filing: 28.11.2001
(51) Int. Cl.: H04L 12/66, H04L 12/56, H04M 11/00

(54) **INTERNET COMMUNICATION SYSTEM**

(30) Priority: 25.05.2001 WO PCT/JP01/04390
(71) Applicant: MITSUBISHI DENKI KABUSHIKI KAISHA, Tokyo 100-8310 (JP)
(72) Inventor: NAITO, Akihiko, Chiyoda-ku, Tokyo 100-8310 (JP); MIYAUCHI, Nobuhito, Chiyoda-ku, Tokyo 100-8310 (JP); KIMURA, Shun, Chiyoda-ku, Tokyo 100-8310 (JP); MORIOKA, Hiroki, Chiyoda-ku, Tokyo 100-8310 (JP)
(74) Representative: Pfenning, Meinig & Partner GbR
(86) International application number: PCT/JP2001/010373
(87) International publication number: WO 2002/098085

(57) **Abstract**

An internet communication system, which is provided with sessionmanaging servers 210 and 220. In the system, each session managing server manages communication adapters 110 and 120 and call relay servers 310 and 320. For that reason, the processing load of each session managing server is allowed to be equalized. As a result, the operational efficiency of the system may be enhanced, and quality of services offered to the user of the system may be improved.

## Description

### Technical Field

This invention relates to an internet communication system, inwhich a communication apparatus for transmitting and receiving such as voice data (data for displaying moving pictures or 3D graphics is similarly applicable as data having a real-time characteristic) is connected with a communication adapter, and voice data is transmitted and received over the Internet between a calling party's communication apparatus and a called party's communication apparatus which are connected, respectively, with communication adapters, and its internet communication method. More specifically, this invention relates to an internet communication system which is provided with a calling party's session managing server for managing a calling party's communication adapter and a called party's session managing server for managing a called party's communication adapter, and its internet communication method.

In addition, this invention relates to a session managing server, which is connected with the calling party's communication adapter and the called party's communication adapter, for managing both the communication adapters of a calling party and a called party, and a program, which operates on the session managing server.

Furthermore, this invention relates to a communication adapter, which is connected with the calling party's session managing server and the called party's session managing server, for communicating with both the session managing servers of the calling party and the called party, and a program, which operates on the communication adapter.

Still further, this invention relates to an internet communication system, which carries out data communications between two of the calling party's communication adapter, a calling party's communication relay server, the called party's communication adapter and a called party's communication relay server, by using a predetermined communication procedure, and its internet communication method.

Still more, this invention relates to a communication relay server, which carries out data communications between a communication adapter and a server apparatus by using a predetermined communication procedure, and a program which operates on the communication relay server.

### Background Art

According to an Internet telephone network system, in which voice data is transmitted and received over the Internet, IP (Internet Protocol) addresses are allocated for communication to the communication adapters of a calling party and a called party. It is to be noted that an IP address is an address for discriminating between a transmission source and a destination in TCP/IP (Transmission Control Protocol/ Internet Protocol) communications. IP addresses include a global IP address, which has a globally unique identification attribute, and a local IP address (or a private IP address in some cases) which is set up by the user privately. However, it is to be noted that "IP address" used by itself hereinafter, means a global IP address.

In addition, it is to be noted that when a calling party's communication adapter and a called party's communication adapter communicate with each other, a relay server may be provided for relaying communications between the calling party's communication adapter and the called party's communication adapter. For example, in the case where the called party is in the network environment where it is protected by the firewall, an appropriate communication means may be selected according to the network environment of the called party to connect the calling party and the called party by the relay server.

Furthermore, it is to be noted that in the case where the called party is arranged in a lower layer than an ADSL (Asymmetric digital subscriber line) connection apparatus, an address may be allocated dynamically, or a local IP address may be allocated. In this case, the calling party's communication adapter may be in the network environment where it is not allowed to be connected with the called party's communication adapter directly. In such a network environment, an appropriate communication means may be selected according to the network environment of the called party to connect the calling party and the called party by the relay server.

Still further, it is to be noted that the communication adapter may be arranged in a lower layer, which is set by a router apparatus, in a variety of internet connection environments such as CATV (Cable Television), FTTH (Fiver To The Home), the Internet apartment and so forth as well as ADSL. In this case, the address of the communication adapter is allocated dynamically or a local IP address is assigned to the communication adapter. As a result, the calling party's communication adapter may not be allowed to be connected with the called party's communication adapter directly. In such a network environment, an appropriate communication means may be selected according to the network environment of the called party to connect the calling party and the called party by the relay server.

Fig. 27 shows a block diagram of an internet telephone network system which is disclosed in PCT/JP1/04003. (This PCT application has a filing date of May 15, 2001 and therefore had not yet been published at the time of filing the application upon which the priority of the present application is based. Refer to the application of PCT/JP1/04003 for further details thereof. The application of PCT/JP1/04003 is incorporated herein for reference.) Reference numerals 910 and 920 in Fig. 27 denote telephone sets, which are connected with telephone adapters 912 and 922 through indoor telephone lines 911 and 912, respectively. A relay server 918 is provided between the telephone sets 910 and 920 for relaying the transmission and reception of call data. The relay server 918 consists of a plurality of HTTP (Hyper Text Transfer Protocol) relay servers 918a and 918b, and an HTTP relay server managing server 980 which manages the HTTP relay server. In addition, the relay server 918 is connected with the telephone sets 910 and 920 over the Internet 16. Assuming that the telephone set 910 is in the calling party and the telephone set 920 is in the called party, when a connection is made by the calling party with the called party for a call, the relay server managing server 980 receives a call request from the calling party over the Internet. The HTTP relay servermanaging server 980 selects an HTTP relay server available for relaying based on the call request received. A selected HTTP relay server relays a communication between the calling party and the called party.

In such a system, a single unit of HTTP relay servermanaging server manages all the telephone adapters and HTTP relay servers to implement communication relaying.

According to the above mentioned internet telephone network system, if telephone adapters become more popular and some hundreds of thousands of telephone adapters come to be installed all over Japan and all over the world, it is impossible for a single unit of relay server managing server to manage all the relay servers and communication adapters issuing call requests. This poses a problem in the implementation of the system. Another possible problem is that, even if the relay server managing server is capable of managing all the relay servers, the quality of services which can be offered may be degraded.

It is an object of this invention, for example, to make a communication system operable even in the case where the number of telephone (communication) adapters is increased.

### Disclosure of the Invention

An internet communication system according to this invention, which carries out data communications by using the Internet, is characterized by including a calling party's communication adapter; a called party's communication adapter; a calling party's session managing server which manages the calling party's communication adapter; and a called party's session managing server which manages the called party's communication adapter. The calling party's communication adapter may transmit the adapter ID of the called party's communication adapter to the calling party's session managing server. The calling party's session managing server may receive the adapter ID of the called party's communication adapter from the calling party's communication adapter, and transmits back to the calling party's communication adapter the server ID of the called party's session managing server managing the called party's communication adapter which is identified by the adapter ID. The calling party's communication adapter may receive the server ID of the called party's session managing server from the calling party's session managing server, transmit the adapter ID of the called party's communication adapter to the called party's session managing server which is identified by the server ID received, and transmit an establishment request of a session with the called party's communication adapter. The called party's session managing server may receive the adapter ID of the called party's communication adapter f rom the calling party's communication adapter, and store that the establishment request of the session with the adapter identified by the adapter ID received is received. The called party's communication adapter may search by using the adapter ID of self for the establishment request of the session if it is stored in the called party's session managing server, and transmit a communication enable state of the self to the called party's session managing server in the case where the establishment request of the session is stored in the called party's session managing server and also the self is in the communication enable state. The called party's session managing server may allow the calling party's communication adapter and the called party's communication adapter to establish the session by using the Internet in the case where the communication enable state is notified from the called party's communication adapter.

In addition, an internet communication system according to this invention, which carries out data communications by using the Internet, is characterized by having a calling party's communication adapter; a called party's communication adapter; a calling party's session managing server which manages the calling party's communication adapter; and a called party's session managing server which manages the called party's communication adapter. The calling party's communication adapter may transmit an establishment request of a session including the adapter ID of the called party's communication adapter to the calling party's session managing server. The calling party's session managing server may receive the adapter ID of the called party's communication adapter from the calling party's communication adapter, transfer a call message including the adapter ID of the called party's communication adapter to the called party's session managing server identified by the server ID which manages the called party's communication adapter identified by the adapter ID, and transmit the establishment request of the session with the called party's communication adapter. The called party's session managing server may receive the adapter ID of the called party's communication adapter from the calling party's communication adapter, and store that it has received the establishment request of the session with the adapter identified by the adapter ID received. The called party's communication adapter may transmit, in advance, that it is in a communication enable state to the called party's session managing server if it is in a communication enable state, and receive information that the establishment request of the session has been made with the called party's communication adapter, as a result of the called party's session managing server searching for the establishment request of the session stored based on its adapter ID. The called party's session managing server may allow the calling party's communication adapter and the called party's communication adapter to establish the session using the Internet in the case where the communication enable state is notified from the called party's communication adapter. The calling party's communication adapter may receive communication enable state information from the calling party's session managing server when it is in a communication enable state, and then establish the session using the Internet.

An internet communication system according to this invention, the internet communication system carrying out data communications by using the Internet, is characterized by including:
a calling party's communication adapter;
a called party's communication adapter;
a calling party's session managing server which manages the calling party's communication adapter; and
a called party's session managing server which manages the called party's communication adapter;
wherein the calling party's communication adapter may transmit an establishment request of a session including the adapter ID of the called party's communication adapter to the calling party's session managing server;
wherein the calling party's session managing server may receive the adapter ID of the called party's communication adapter from the calling party's communication adapter, search for the server ID of the called party's session managing server which manages the called party's communication adapter, the server ID being identified by the adapter ID, transmit the adapter ID to the called party's session managing server identified by the server ID searched for, and transmit the establishment request of the session with the called party's communication adapter;
wherein the called party's session managing server may receive the adapter ID of the called party's communication adapter from the calling party's session managing server, store that the establishment request of the session with an identified adapter by the received adapter ID is received, receive a communication enable state from the called party's communication adapter, and allow the session between the calling party's session managing server and the called party's communication adapter using the Internet to be established in the case where the establishment request of the session with the called party's communication adapter in the communication enable state received is stored;
wherein the called party's communication adapter, in the communication enable state, may transmit that self is in the communication enable state to the called party's session managing server; and
wherein the calling party's communication adapter may receive from the calling party's session managing server that the session using the Internet is allowed to be established by the called party's session managing server.

In addition, the internet communication system according to this invention is characterized by further including an assignment notification server which receives an adapter ID from a communication adapter, assigns a session managing server which manages the communication adapter based on the adapter ID, and notifies the communication adapter of the server ID of the session managing server assigned.

In addition, the internet communication system according to this invention is characterized by further including a called party's communication relay server, which relays communications between the calling party's communication adapter and the called party's communication adapter. The called party's session managing server may transmit a called party's communication relay server ID for identifying the called party's communication relay server to the calling party's communication adapter and the called party's communication adapter. The calling party's communication adapter and the called party's communication adapter, upon reception of the called party's communication relay server ID, may establish the session via the called party's communication relay server which is identified by the called party's communication relay server ID.

In addition, the internet communication system according to this invention is characterized by further including a calling party's communication relay server, which relays communications between the calling party's communication adapter and the called party's communication adapter. The calling party's session managing server may transmit a calling party's communication relay server ID for identifying the calling party's communication relay server to the calling party's communication adapter. The calling party's communication adapter may receive the calling party's communication relay server ID, and transmit the calling party's communication relay server ID to the called party's session managing sever. The called party's session managing server may transmit the calling party's communication relay server ID to the called party's communication adapter. The called party's communication adapter may receive the calling party's communication relay server ID. The calling party's communication adapter and the called party's communication adapter may establish the session via the called party's communication relay server which is identified by the calling party's communication relay server ID.

In addition, the adapter ID is characterized by including the identifier of the domain where respective connection terminals may be managed based on their individual local IP addresses such as an internet service provider (ISP).

In addition, the adapter ID is characterized by including the identifier of the domain of a local IP (Internet Protocol) address which may be managed by the internet service provider (ISP).

In addition, the adapter ID is characterized by including the identifier of the area where the communication adapter may be installed. (The area here may mean not only a physical area but also a group of a plurality of terminals which are grouped logically.)

In addition, the adapter ID is characterized by including a group identifier for grouping communication adapters.

An internet communication method according to this invention for carrying out data communications by using the Internet is characterized by making an inquiry with the calling party's session managing server for a called party's session managing server which manages a called party's communication adapter, by a calling party's communication adapter; responding to the calling party's communication adapter about the called party's session managing server which manages the called party's communication adapter, by the calling party's session managing server; transmitting an establishment request of a session with the called party's communication adapter to the called party's session managing server from the calling party's communication adapter; storing in the called party's session managing server that the establishment request of the session with the called party's communication adapter has been issued, by the calling party's communication adapter; making an inquiry with the called party's session managing server for the establishment request if it is issued, by the called party's communication adapter; notifying the called party's session managing server that the called party's communication adapter is in a communication enable state, from the called party's communication adapter, in the case where the establishment request is issued and where the called party's communication adapter is in the communication enable state; and allowing a session between the calling party's communication adapter and the called party's communication adapter to be established by using the Internet by the called party's session managing server in the case where it is notified that the called party's communication adapter is in the communication enable state.

An internet communication method according to this invention for carrying out data communications by using the Internet is characterized by transmitting an establishment request of a session with a called party's communication adapter including the adapter ID of the called party's communication adapter to the calling party's session managing server by a calling party's communication adapter, further transferring from the calling party's session managing server the establishment request of the session to the called party's session managing server which manages the called party's communication adapter, storing in the called party's session managing server that the establishment request of the session with the called party's communication adapter has been made from the calling party's communication adapter, transmitting by the called party's communication adapter, in advance, when it is in a communication enable state, its communication enable state to the called party's session managing server, allowing by the called party's session managing server the establishment of the session using the Internet between the calling party's communication adapter and the called party's communication adapter, in the case of the called party's session managing server receiving information indicating that the establishment request of the session has been issued with the called party's communication adapter, as a result of searching for the establishment request of the session stored based on the adapter ID of the called party's communication adapter itself by the called party's session managing server, and transmitting by the calling party's session managing server communication enable state information based on the allowed establishment of the session to the calling party's communication adapter if the calling party's communication adapter is in a communication enable state.

An internet communication method according to this invention, the internet communication method carrying out data communications by using the Internet, is characterized by:
transmitting an establishment request of a session with a called party's communication adapter to a calling party's session managing server from a calling party's communication adapter;
transmitting from the calling party's session managing server to a called party's session managing server which manages the called party's communication adapter the establishment request of the session received from the calling party's communication adapter;
storing in the called party's session managing server that the establishment request of the session with the called party's communication adapter has been received from the calling party's communication adapter;
notifying the called party's session managing server from the called party's communication adapter that the called party's communication adapter itself is in a communication enable state in the case where the called party's communication adapter is in the communication enable state;
allowing by the called party's session managing server the session between the calling party's session managing server and the called party's communication adapter using the Internet to be established in the case where it is notified of the communication enable state from the called party's communication adapter, and where the establishment request of the session has been issued with the called party's communication adapter which is in the communication enable state; and
notifying by the calling party's session managing server the calling party's communication adapter that the session using the Internet has been allowed to be established between the calling party's session managing server and the called party's communication adapter in the case where the session is allowed to be established.

A session managing server according to this invention, which is connected to a calling party's communication adapter and a called party's communication adapter, is characterized by having a calling party's session managing unit, which may receive the adapter ID of the called party's communication adapter from the calling party's communication adapter, and transmit back to the calling party's communication adapter the server ID of a called party's session managing server which manages the called party's communication adapter identified by the adapter ID; and a called party's session managing unit, which may receive the adapter ID of the called party's communication adapter from the calling party's communication adapter, store that an establishment request of a session with the adapter identified by the adapter ID received is received, make the called party's communication adapter search for the establishment request of the session stored, and allow the session between the calling party's communication adapter and the called party's communication adapter using the Internet to be established in the case where a communication enable state is notified by the called party's communication adapter.

A session managing server according to this invention, which is connected to a calling party's communication adapter and a called party's communication adapter, is characterized by having a calling party's session managing unit, which may receive an establishment request of a session including the adapter ID of the called party's communication adapter from the calling party's communication adapter, transfer a message of the establishment request of the session including the adapter ID of the called party's communication adapter to the called party's session managing server which manages the called party's communication adapter identified by the adapter ID, and return information indicating a communication enable state or not to the calling party's communication adapter; and a called party's session managing unit, which may receive the adapter ID of the called party's communication adapter from the calling party's communication adapter, store that the establishment request of the session with the adapter identified by the received adapter ID has been received, control the called party's session managing server to search for the establishment request of the session stored, and allow the establishment of the session between the calling party's communication adapter and the called party's communication adapter using the Internet in the case where it is determined that the called party's communication adapter is in a communication enable state.

A session managing server according to this invention, which is connected to a calling party's communication adapter and a called party's communication adapter, is characterized by having a calling party's session managing unit, which may receive an establishment request of a session including the adapter ID of the called party's communication adapter from the calling party's communication adapter, and transmit the establishment request of the session including the adapter ID of the called party's communication adapter received from the calling party's communication adapter to a called party's session managing server which manages the called party's communication adapter identified by the adapter ID, and a called party's session managing unit, which may receive the adapter ID of the called party's communication adapter from the calling party's session managing server, store that the establishment request of the session with the adapter identified by the adapter ID received has been received, search for the establishment request of the session stored and allow the establishment of the session between the calling party's communication adapter and the called party's communication adapter using the Internet in the case where the communication enable state is notified from the called party's communication adapter.

A communication adapter according to this invention, which is connected to a calling party's session managing server and a called party's session managing server, is characterized by having a calling party's communication adapter unit, which may transmit the adapter ID of a called party's communication adapter to the calling party's session managing server, receive from the calling party's session managing server a server ID of the called party's session managing server which manages the called party's communication adapter, transmit the adapter ID of the called party's communication adapter to the called party's session managing server which is identified by the server ID received, and transmit an establishment request of a session; and a called party's communication adapter unit, which may search for the establishment request of the session whether or not it is stored in the called party's session managing server by using the adapter ID of self, and transmit to the called party's session managing server that the called party's communication adapter itself is in a communication enable state in the case where the establishment request of the session is stored in the called party's session managing server and where the called party's communication adapter itself is in the communication enable state.

A communication adapter according to this invention, which is connected to a calling party's session managing server and a called party's session managing server, is characterized by having a calling party's communication adapter unit, which may transmit an establishment request of a session including the adapter ID of a called party's communication adapter to the calling party's session managing server, wherein the calling party's session managing server may transfer a message of the establishment request of the session including the adapter ID of the called party's communication adapter to the called party's session managing server which manages the called party's communication adapter, and receive from the calling party's session managing server information indicating that the called party's communication adapter is in a communication enable state or not from the called party's session managing server which manages the called party's communication adapter; and the called party's communication adapter unit, which may transmit, in advance, that it is in a communication enable state to the called party's session managing server if it is in a communication enable state, and receive information that the establishment request of the session has been made with the called party's communication adapter, as a result of the called party's session managing server searching for the establishment request of the session stored based on its adapter ID.

An internet communication system according to this invention which carries out data communications by using the Internet between a calling party's communication adapter and a called party's communication adapter, is characterized by having a calling party's communication relay server, which may carry out data communications with the calling party's communication adapter over the Internet by using Hyper Text Transfer Protocol (HTTP); and a called party's communication relay server, which may carry out data communications with the called party's communication adapter over the Internet by using HTTP, and also carry out data communications with the calling party's communication relay server by using a protocol other than HTTP.

In addition, it is characterized in that the protocol other than HTTP is a User Datagram Protocol (UDP).

In addition, it is characterized in that the protocol other than HTTP is a Real-time Transport Protocol (RTP).

In addition, it is characterized in that the protocol other than HTTP is a protocol designed for an application based on Transmission Control Protocol (TCP).

In addition, it is characterized in that the protocol other than HTTP is a protocol designed for an application based on Simple Control Transmission Protocol (SCTP).

In addition, it is characterized in that the calling party's communication relay server and the called party's communication relay server are connected through a private network of an Internet Service Provider (ISP).

In addition, it is characterized in that the calling party's communication relay server and the called party's communication relay server are connected over a general internet network.

An internet communication method for carrying out data communications between a calling party's communication adapter and a called party's communication adapter by using the Internet according to this invention is characterized by carrying out data communications between the calling party's communication adapter and the calling party's communication relay server over the Internet by using Hyper Text Transfer Protocol (HTTP); carrying out data communications between the calling party's communication relay server and the called party's communication relay server by using a protocol other than HTTP; and carrying out data communications between the called party's communication relay server and the called party's communication adapter over the Internet by using HTTP.

A communication relay server according to this invention which relays data communications between a communication adapter and a server apparatus is characterized by having an HTTP communication unit, which may carry out data communications with the communication adapter over the Internet by using Hyper Text Transfer Protocol (HTTP); and a UDP communication unit, which may carry out data communications with the server apparatus by using User Datagram Protocol (UDP).

A program operating with a session managing server which is connected with a calling party's communication adapter and a called party's communication adapter according to this invention is characterized by causing a computer to carry out a calling party's session managing process for receiving the adapter ID of the called party's communication adapter from the calling party's communication adapter, and transmitting back to the calling party's communication adapter the server ID of a called party's session managing server which manages the called party's communication adapter identified by the adapter ID, and a called party's session managing process for receiving the adapter ID of the called party's communication adapter from the calling party's communication adapter, storing that an establishment request of a session with the adapter identified by the adapter ID received has been received, making the called party's communication adapter search for the establishment request of the session stored, and allowing the session between the calling party's communication adapter and the called party's communication adapter using the Internet to be established in the case where a communication enable state is notified from the called party's communication adapter.

A program operating with a session managing server which is connected to a calling party's communication adapter and a called party's communication adapter according to this invention is characterized by causing a computer to carry out a calling party's session managing process and a called party's session managing process. The calling party's session managing process may include receiving an establishment request of a session including the adapter ID of the called party's communication adapter from the calling party's communication adapter, transferring the establishment request of the session to the called party's session managing server which manages the called party's communication adapter identified by the adapter ID, receiving from the called party's session managing server information indicating whether or not the called party's communication adapter is in a communication enable state, and returning the information to the calling party's communication adapter. The called party's session managing process may include receiving the establishment request of the session including the adapter ID of the called party's communication adapter from the calling party's communication adapter, storing that the establishment request of the session with the adapter identified by the adapter ID received has been received, searching the called party's session managing server for the establishment request of the session stored, allowing the session to be established between the calling party's communication adapter and the called party's communication adapter using the Internet, in the case where the communication enable state of the called party's communication adapter is judged, and transmitting information indicating that the establishment request of the session with the called party's communication adapter has been received to the called party's communication adapter.

A program according to this invention is characterized by operating with a session managing server connected with a calling party's communication adapter and a called party's communication adapter, and causing a computer to carry out:
a calling party's session managing process for receiving an establishment request of a session including the adapter ID of the called party's communication adapter from the calling party's communication adapter, and transmitting back to a called party's session managing server which manages the called party's communication adapter identified by the adapter ID the establishment request of the session received from the calling party's communication adapter, and
a called party's session managing process for receiving the establishment request of the session including the adapter ID of the called party's communication adapter from the calling party's session managing server, storing that the establishment request of the session with the adapter identified by the adapter ID received has been received, searching in the case where a communication enable state of the called party's communication adapter is notified for the establishment request of the session stored, allowing the session between the calling party's communication adapter and the called party's communication adapter using the Internet to be established, and notifying the called party's communication adapter that the establishment request of the session has been received.

A program operating with a communication adapter which is connected with a calling party's session managing server and a called party's session managing server according to this invention is characterized by causing a computer to carry out a calling party's communication adapter process for transmitting the adapter ID of a called party's communication adapter to the calling party's session managing server, receiving the server ID of the called party's session managing server which manages the called party's communication adapter from the calling party's session managing server, transmitting the server ID of the called party's communication adapter to the called party's session managing server identified by the server ID received, and transmitting an establishment request of a session, and a called party's communication adapter process for searching for the establishment request of the session stored by the called party's session managing server by using the adapter ID of the called party's communication adapter itself, and transmitting to the called party's session managing server that the called party's communication adapter itself is in a communication enable state in the case where the establishment request of the session is stored in the called party's session managing server and the called party's communication adapter itself is in the communication enable state.

A program operating with a communication adapter which is connected with a calling party's session managing server and a called party's session managing server according to this invention is characterized by causing a computer to carry out a calling party's communication adapter process and a called party's communication adapter process. The calling party's communication adapter process may include transmitting an establishment request of a session including the adapter ID of a called party's communication adapter to the calling party's session managing server, and receiving information indicating whether or not the called party's communication adapter is in a communication enable state from the calling party's session managing server by way of the called party's session managing server which manages the called party's communication adapter. The called party's communication adapter process may include transmitting its communication enable state to the called party's session managing server when the called party's communication adapter is in the communication enable state, and receiving information that the establishment request of the session has been received from the calling party's communication adapter.

A program according to this invention is characterized by operating with a communication adapter which is connected with a calling party's session managing server and a called party's session managing server and causing a computer to carry out:
a calling party's communication adapter process for transmitting an establishment request of a session including the adapter ID of a called party's communication adapter to the calling party's session managing server, and
a called party's communication adapter process for transmitting to the called party's session managing server that the called party's communication adapter itself is in a communication enable state in the case where the called party's communication adapter itself is in the communication enable state, and receives from the called party's session managing server that the establishment request has been received.

A program according to this invention is characterized by operating with a communication relay server for relaying data communication between a communication adapter and a server apparatus and causing a computer to carry out an HTTP communication process for carrying out data communications with the communication adapter over the Internet by using Hyper Text Transfer Protocol (HTTP), and a UDP communication process for carrying out data communication with the server apparatus by using User Datagram Protocol (UDP).

A communication adapter according to this invention, with the called party's session managing server, is characterized by transmitting to a communication apparatus connected to the communication adapter information indicating that the other party is busy communicating with a third party terminal, when the called party's communication adapter is busy communicating with a third party terminal, and therefore in a state of communication disenabled, and the communication adapter receives information indicating the state by way of the calling party's session managing server at the time of issuing a call.

A communication adapter according to this invention is characterized by a calling party's communication adapter which is connected with a calling party's session managing server and a called party's session managing server and also connects a communication apparatus which outputs information at least, and the calling party's communication adapter may make the communication apparatus output that the called party's communication adapter is busy communicating and therefore is in a state of communication disenabled at the moment, upon reception from the called party's session managing server by way of the calling party's session managing server that the called party's communication adapter is busy communicating now and therefore is in a state of communication disenabled at the moment.

It is characterized in that the called party's communication adapter transmits the information indicating that communication will be started with the third party terminal to the called party's session managing server at the time of starting the communication, and the called party's communication adapter transmits information indicating that the communication has ended with the third party terminal to the called party's session managing server at the end of the communication.

A communication adapter according to this invention is characterized by being connected to a calling party's session managing server and a called party's session managing server, and transmitting the start of a communication to the called party's session managing server in the case of starting the communication, and transmitting the end of the communication to the called party's session managing server in the case of ending the communication.

In addition, the communication state with the third party terminal may include communications by way of the public line based communications the function of which is equipped in the communication adapter and communications based on other call control systems such as H.323 system and SIP system by way of an IP network in addition to communications based on a call control system according to this invention. Then, it is characterized in that the communication adapter transmits the session managing server information indicating the type of communication to be used in the communication, and the session managing server holds the information so as to recognize the type of communication being carried out between the calling party's session managing server and communication adapter.

In addition, the communication adapter is characterized by starting the communication based on a predetermined call control method, and transmitting the start of the communication to the called party's session managing server together with information for identifying the predetermined call control method.

In addition, it is characterized in that, in addition to the communication state with the third party terminal mentioned above, the communication adapter transmits information indicating the operational state of the telephone connected to the communication adapter to the session managing server, the session managing server transfers to the session managing server of the other party in communication the information indicating the operational state of the telephone, and also transfers it to the communication adapter of the other party in communication, and as a result the operational state of the telephone is recognizable by the other party in communication.

In addition, the calling party's communication adapter is characterized by connecting a communication apparatus, which is capable at least of performing a predetermined operation, inputting information indicating that the predetermined operation has been performed from the communication apparatus, and transmitting the information inputted indicating that the predetermined operation has been performed to the calling party's session managing server,
wherein the calling party's session managing server is characterized by transmitting the information received indicating that the predetermined operation has been performed to the called party's session managing server, and
wherein the called party's session managing server is characterized by transmitting the information received indicating that the predetermined operation has been performed to the called party's communication adapter.

A communication adapter according to this invention is characterized by setting up a connection type of the communication adapter according to an IP address acquisition type based on the environment of a connected network, and transmitting the connection type of the communication adapter to the session managing server of the calling party or called party when requesting the establishment of the session, and the session managing server is characterized by selecting HTTP or UDP based on the connection type for data communications with a server apparatus or a third party's communication adapter.

In addition, the calling party's communication adapter and the called party's communication adapter each are characterized by being installed in a predetermined network environment and assigned an IP (Internet Protocol) address according to the predetermined network environment, and storing a connection type of the communication adapter which is determined according to an assignment type of the IP address,
wherein the calling party's communication adapter is characterized by transmitting the connection type of the calling party's communication adapter to the calling party's session managing server,
wherein the called party's communication adapter is characterized by transmitting the connection type of the called party's communication adapter to the called party's session managing server,
wherein the called party's session managing server is characterized by determining to communicate data with the called party's communication adapter by using one communication protocol of Hyper Text Transfer Protocol (HTTP) and User Datagram Protocol (UDP) based on the connection type transmitted from the called party's communication adapter, and then transmitting information notifying of the one communication protocol determined to the called party's communication adapter,
wherein the calling party's session managing server is characterized by determining to communicate data with the calling party's communication adapter by using one communication protocol of Hyper Text Transfer Protocol (HTTP) and User Datagram Protocol (UDP) based on the connection type transmitted from the calling party's communication adapter, and then transmitting information notifying of the communication protocol determined to the calling party's communication adapter,
wherein the calling party's communication adapter is characterized by communicating the data according to the information notifying of the communication protocol transmitted from the calling party's session managing server, and
wherein the called party's communication adapter is characterized by communicating the data according to the information notifying of the communication protocol transmitted from the called party's session managing server.

The connection type of the communication adapter according to this invention is characterized by including five types below depending on an IP address type allocated in the domain such as an ISP, which the communication adapter belong to and is managed:
(1) A global IP address is statically allocated.
(2) A private IP address is statically allocated.
(3) A global IP address is dynamically allocated by using DHCP.
(4) A private IP address is dynamically allocated by using DHCP.
(5) One of (1) to (4) above. Such as a router equipped with network address translation (NAT function) may be installed between the communication adapter and the network connecting point to the network whose IP address is allocated to the communication adapter. As a result, the communication adapter may be allocated a further localized local IP address.

In addition, it is characterized in that the IP address which is assigned to the calling party's communication adapter according to the predetermined network environment and the IP address which is assigned to the called party's communication adapter according to the predetermined network environment eachare assigned based on at least one of the cases in which a global IP (Internet Protocol) address is statically assigned, a private IP address is statically assigned, a global IP address is dynamically assigned by using Dynamic Host Configuration Protocol (DHCP), a private IP address is dynamically assigned by using DHCP, and a local IP address is assigned.

A called party's communication adapter according to this invention is characterized by issuing the GET method of HTTP to the called party's session managing server in order to receive information indicating that the establishment request of a session has been made from the calling party's communication adapter, and receiving the information indicating that the establishment request of a session has been made from the calling party's communication adapter based on the content information of the status response.

In addition, the called party's communication adapter is characterized by issuing a GET method of Hyper Text Transfer Protocol (HTTP) to the called party's session managing server in order to confirm that the establishment request of the session from the calling party's communication adapter is stored in the called party's session managing server,
wherein the called party's session managing server is characterized by searching, upon reception of the GET method issued by the called party's communication adapter, for the establishment request of the session with the called party's communication adapter which issued the GET method if it is stored, and transmitting a result of the establishment request of the session searched for, which is included in a GET response to the GET method, to the called party's communication adapter.

A calling party's communication adapter according to this invention is characterized by issuing the GET method of HTTP to the calling party's session managing server in order to receive information via the called party's communication adapter on events including that the receiver is off-hooked so that the other party is answering the call and that the receiver is on-hooked to cut the line, and receiving the information from the called party's communication adapter indicating various events occurred based on the content information of the status response.

In addition, the called party's communication adapter is characterized by connecting a communication apparatus, which is capable of performing a predetermined operation, inputting information indicating contents of the predetermined operation of the communication apparatus connected, and transmitting the information to the calling party's session managing server,
wherein the calling party's session managing server is characterized by storing the information, which is transmitted from the called party's communication adapter, indicating the contents of the predetermined operation of the communication apparatus connected to the called party's communication adapter, and
wherein the calling party's communication adapter is characterized by acquiring the information, which is stored in the calling party's session managing server, indicating the contents of the predetermined operation of the communication apparatus connected to the called party's communication adapter by using a GET method of Hyper Text Transfer Protocol (HTTP).

In addition, it is characterized in that the called party's communication adapter issues the GET method of HTTP to the called party's session managing server in a fixed cycle, receives from the called party's session managing server information indicating that no establishment request of a session has been made from the calling party's communication adapter while no call processing is performed, and receives from the called party's session managing server information indicating that the establishment request of a session has been made by the calling party's communication adapter at the start of call processing only when the establishment request of the session is received from the calling party's communication adapter.

In addition, the called party's communication adapter is characterized by transmitting a GET method of Hyper Text Transfer Protocol (HTTP) to the called party's session managing server at fixed intervals, and
wherein the called party's session managing server is characterized by, upon reception of the GET method from the called party's communication adapter, transmitting information to the called party's communication adapter indicating that there is no establishment request of the session from the calling party's communication adapter in the case where the establishment request of the session has been issued by the calling party's communication adapter but a communication has not been started yet between the calling party's communication adapter and the called party's communication adapter, and transmitting information indicating that the establishment request of the session is received from the calling party's communication adapter to the called party's communication adapter in the case where the establishment request of the session has been issued by the calling party's communication adapter and a communication has been started between the calling party's communication adapter and the called party's communication adapter.

In addition, it is characterized in that the called party's communication adapter issues the GET method of HTTP to the called party's session managing server once at the time of initialization, and receives, at the start of call processing, information indicating that the establishment request of the session has been made by the calling party's communication adapter based on the content information of the status response transmitted to the called party's communication adapter from the calledparty's sessionmanaging serverwhen the establishment request of the session is made by the calling party's communication adapter.

In addition, the called party's communication adapter is characterized by transmitting a GET method of Hyper Text Transfer Protocol (HTTP) to the called party's session managing server when one of applying power and preparing for a start of a call immediately after completing a call processing, and
wherein the called party's session managing server is characterized by holding the GET method transmitted from the called party's communication adapter, and transmitting to the called party's communication adapter as a response to the GET method held that the establishment request of the session is received from the calling party's communication adapter in the case where the establishment request of the session is received from the calling party's communication adapter.

In addition, it is characterized in that the called party's communication adapter issues the GET method of HTTP to the called party's session managing server once at the time of initialization, the called party's session managing server transmits immediately header information alone except body information as a response to the called party's communication adapter, the called party's session managing server keeps transmitting Keep-Alive information (information for confirming alive by issuing continuous signals) for keeping the TCP connection to the called party's communication adapter as part of the body information in a fixed cycle while no call processing is performed, and the called party's communication adapter receives at the start of call processing information indicating that the establishment request of the session has been made by the calling party's communication adapter based on the content information of the status response transmitted to the called party's communication adapter from the called party's session managing server when the establishment request of the session is made by the calling party's communication adapter.

In addition, the called party's communication adapter is characterized by transmitting a GET method of Hyper Text Transfer Protocol (HTTP) to the called party's session managing server when power is applied or when a call is prepared to be started immediately after completing call processing, and
wherein the called party's session managing server is characterized by, upon reception of the GET method transmitted from the called party's communication adapter, continuing transmitting to the called party's communication adapter alive confirmation information for maintaining a line connection between the called party's communication adapter and the called party's session managing server, in the case where the establishment request of the session is not issued by the calling party's communication adapter, and transmitting to the called party's communication adapter that the establishment request of the session is received from the calling party's communication adapter in the case where the establishment request of the session is issued by the calling party's communication adapter.

In addition, the called party's communication adapter which issues the GET method of HTTP is characterized in that while the called party's session managing server is in process of keeping transmitting the Keep-Alive information for keeping the TCP connection in a fixed cycle to the called party's communication adapter, the communication adapter makes a new TCP connection in case of not receiving the Keep-Alive information in the fixed cycle and even after a given timeout value, and then reissues another GET method of HTTP to the called party's session managing server in order to receive information indicating that an establishment request of a session has been made. Thus, the communication adapter resets the condition for receiving the information indicating that the establishment request of the session has been made from the calling party's communication adapter.

In addition, the called party's communication adapter is characterized by transmitting the GET method of Hyper Text Transfer Protocol (HTTP) again to the called party's session managing server in the case of not receiving the alive confirmation information to be transmitted from the called party's session managing server even after a predetermined period of time.

In addition, it is characterized in that the called party's communication adapter, which issued the GET method of HTTP, connected by TCP may disconnect the current TCP connection depending on such as a timeout condition, make a new TCT reconnection, reissue the GET method of HTTP to the called party's session managing serer in order to receive information indicating that an establishment request of a session has been made, and add information indicating that it is a reissue to the reissued GET method of HTTP in consideration of possible failure in reception of the information, in case of retrying preparation for receiving information indicating that the establishment request of the session has been made from the calling party's communication adapter, and upon reception of the information indicating that the establishment request of the session has been made with the calling party's communication adapter from the session managing server, and the session managing server, upon reception of the GET method, may transmit again the information indicating that the establishment request of the session has been received to the called party's communication adapter.

In addition, the called party's communication adapter is characterized by transmitting the GET method of Hyper Text Transfer Protocol (HTTP) again to the called party's session managing server together with information indicating a repeated transmission.

A communication adapter and an assignment notification server which notifies the communication adapter of the server ID of a session managing server according to this invention are characterized in that the communication adapter may transmit information indicating the operational state of the communication adapter to the assignment notification server in a fixed cycle or at every operation for making a telephone call, and the assignment notification server may confirm based on the information indicating that the operational state of the communication adapter is normal or not, and return information indicating the operational state of an internet telephone system including the session managing server and the call relay server as a response of the above transmission.

In addition, the calling party's communication adapter is characterized by transmitting information notifying of an operational state of the calling party's communication adapter to the assignment notification server, and
wherein the assignment notification server is characterized by checking the calling party's communication adapter if it is normal or not based on the information notifying of the operational state transmitted from the calling party's communication adapter, and transmitting an operational state of the assignment notification server itself together with a check result to the calling party's communication adapter as a response to the information notifying of the operational state transmitted from the calling party's communication adapter.

In addition, it is characterized in that as an operational state of the internet telephone system, information indicating that the assignment notification server or the session managing server is to be replaced by another assignment notification server or session managing server for such as a maintenance or expansion purpose may be included in the transmission response to the communication adapter. Hence, the communication adapter may change the assignment notification server or session managing server accessed.

In addition, it is characterized in that as an operational state of the internet telephone system, information about not only the IP address of the assignment notification server or the session managing server each alone but also the IP address of an alternative server to the assignment notification server or session managing server, which is accessible in case that the assignment notification server or session managing server is not available due to some fault such as a failure, may be included in the transmission response to the communication adapter. Hence, if the assignment notification server or the session managing server is inaccessible due to a failure, the communication adapter may continue processing without brake by accessing the alternative server.

In addition, the assignment notification server is characterized by being configured with a plurality of server devices, which may include one as a primary server for acting as the assignment notification server and another as a secondary server. Then, the assignment notification server is characterized by being switched over from the primary server to the secondary server so thatthe secondary server acts as the assignment notification server, in case of the primary server operating abnormally, and notifying the calling party's communication adapter that the secondary server is replaced to act as the assignment notification server.

In addition, the calling party's session managing server is characterized by being configured with a plurality of server devices, which may include one as a primary server for acting as the calling party's session managing server and another as a secondary server. Then, the calling party's session managing server is characterized by being switched over from the primary server to the secondary server so that the secondary server acts as the calling party's session managing server, in case of the primary server operating abnormally, and notifying the calling party's communication adapter that the secondary server is replaced to act as the calling party's session managing server.

In addition, the called party's session managing server is characterized by being configured with a plurality of server devices, which may include one as a primary server for acting as the called party's session managing server and another as a secondary server. Then, the called party's session managing server is characterized by being switched over from the primary server to the secondary server so that the secondary server acts as the called party's session managing server, in case of the primary server operating abnormally, and notifying the called party's communication adapter that the secondary server is replaced to act as the called party's session managing server.

In addition, it is characterized in that, in the case where information indicating the state of accessing the assignment notification server is transmitted based on service charge information for an internet telephone system of the user of the communication adapter and response information to it is received, if the service charge is not paid, the response information may include information indicating the fact accordingly. Then, the communication adapter, upon reception of the response information, may set the communication function of the internet telephone system to be inoperable.

In addition, the internet communication system is characterized by further having a customer management database for managing the service charge for a system for each calling party's communication adapter,
wherein the assignment notification server is characterized by acquiring the service charge for the calling party's communication adapter from the customer management database in the case of transmitting the server ID of the session managing server which manages the communication adapter to the calling party's communication adapter, and transmitting the service charge acquired and the server ID to the calling party's communication adapter, and
wherein the calling party's communication adapter is characterized by determining whether to set the communication function of itself to be inoperable based on the service charge received from the assignment notification server.

In addition, it is characterized in that information indicating that the user of the communication adapter of which the communication function of the internet telephone system is made inoperable as aforementioned has paid the service charge may also be included in the response information from the assignment notification server. Then, upon reception of the information indicating that the service charge has been paid, the communication adapter may set the communication function of the internet telephone system to be operable.

In addition, the calling party's communication adapter is characterized by determining whether to set the communication function of itself to be operable based on the service charge received from the assignment notification server in the case where the communication function of itself is set to be inoperable.

In addition, it is characterized in that, in the case where information indicating the state of accessing the assignment notification server is transmitted based on the version information of built-in software which is installed in the communication adapter, and response information thereto is received, information indicating that a new version of the built-in software may be obtained from the administrator side of the internet telephone system based on the response information may be included. Then, the communication adapter, upon reception of the response information, may set up so that predetermined updating processing of the built-in software of the communication adapter may be started.

In addition, the calling party's communication adapter is characterized by installing software, which may include version information, for executing the function of the communication adapter, and transmitting the version information of the software together with the information notifying of the operational state of the calling party's communication adapter to the assignment notification server,
wherein the assignment notification server is characterized by determining whether to replace the software installed in the calling party's communication adapter by another software with a different version based on the version information transmitted from the calling party's communication adapter, and transmitting a determination result to the calling party's communication adapter.

In addition, it is characterized in that, as the predetermined processing for updating the built-in software of the communication adapter, the communication adapter downloads it from the Web server having an assigned URL address which is notified by the response information from the assignment notification server, updates it and start it again.

In addition, the assignment notification server is characterized by managing the address of a Web server which manages the software installed in the calling party's communication adapter, and transmitting the address of a Web server of the another software with the different version to the calling party's communication adapter in the case of determining that the software installed in the calling party's communication adapter is to be replaced by the another software with the different version.

A communication adapter according to this invention is characterized, in the case of an excess performance of relaying beyond the relayable communication capacity by a communication relay server managed by a session managing server so that communication is disenabled by way of the communication relay server, and when trying to start communication by way of the communication relay server, by receiving information indicating that relaying by the communication relay server is saturated which is transmitted by the session managing server at the time of the calling party's communication adapter issuing a call. Hence, the user of a communication apparatus connected with the communication adapter is allowed to be notified by means of such as a voice reproduction device or a display device that relaying by the communication relay server is saturated, so that relayed communication is not available.

In addition, the session managing server is characterized by managing a number of communication relaying by the calling party's communication relay server, and transmitting to the calling party's communication adapter information indicating that relaying by the communication relay server is saturated in the case where the establishment request of the session is received from the calling party's communication adapter and the number of communication relaying exceeds a preset number of communication relaying,
wherein the calling party's communication adapter is characterized by connecting a communication apparatus, which is equipped with an information output function at least, and making the communication apparatus output information indicating that the relaying by the calling party's communication relay server is saturated and therefore no communication is available via the calling party's communication relay server upon reception of the information indicating that the relaying by the calling party's communication relay server is saturated from the session managing server.

In addition, the session managing server is characterized by managing a number of communication relaying by the called party's communication relay server, and transmitting to the calling party's communication adapter information indicating that relaying by the communication relay server is saturated in the case where the establishment request of the session is received from the calling party's communication adapter and the number of communication relaying exceeds a preset number of communication relaying,
wherein the calling party's communication adapter is characterized by connecting a communication apparatus, which is equipped with an information output function at least, and making the communication apparatus output information indicating that the relaying by the called party's communication relay server is saturated and therefore no communication is available by the called party's communication relay server upon reception of the information indicating that the relaying by the called party's communication relay server is saturated from the session managing server.

A communication adapter according to this invention is characterized, in the case of having another communication line such as a public line other than an IP network, by carrying out communications by using the another communication line if relaying capacity by a communication relay server is saturated, or a session managing server or a communication relay serve is not available due to a network condition.

In addition, the internet communication system is characterizedby further having a PSTN (Public Switched Telephone Network),
wherein the calling party's communication adapter is characterized by connecting the PSTN, and calling the called party's communication adapter by using the PSTN, upon reception of the information indicating that the relaying by the calling party's communication relay server is saturated from the session managing server.

In addition, the internet communication system is characterized byfurther having a PSTN (Public Switched Telephone Network),
wherein the calling party's communication adapter is characterized by connecting the PSTN and calling the called party's communication adapter by using the PSTN upon reception of the information indicating that the relaying by the called party's communication relay server is saturated from the session managing server.

A communication adapter according to this invention is characterized, when making a connection by using such as TCP with the session managing server or the communication relay server, by performing cancellation of processing which interrupts the connection processing in case of not having a successful connection even after a fixed timeout value, and repeating the start of connection processing until a successful connection is achieved, and the number of times of reconnection reaches a maximum number.

In addition, the communication adapter is characterized by issuing a connection request to the session managing server, prior to starting communication with the session managing server, by using TCP (Transmission Control Protocol), canceling the connection request upon reception of no response from the session managing server to the connection request after a preset fixed timeout value, and repeating the connection request until the connection succeeds or the number of repetitions of the connection request reaches a preset maximum number.

In addition, the communication adapter is characterized by issuing a communication request to the communication relay server, prior to starting communication with the communication relay server, by using TCP (Transmission Control Protocol), canceling the connection request upon reception of no response from the communication relay server to the connection requesteven after a preset fixed timeout value, and repeating the connection request until the connection succeeds or the number of repetitions of the connection request reaches a preset maximum number.

In addition, it is characterized in that, with respect to processing timeout value for connection by using such as TCP of the communication adapter to the session managing server or the communication relay server and a maxim number of times of reconnections, automatic changes are made to the timeout value so as to extend the period of time and to the maximum number of times of reconnections so as to increase the number whenever a connection by using such as TCP ends in failure, and automatic changes are made to the timeout value so as to shorten the period of time and to the maximum number of times of reconnections so as to decrease the number whenever a connection by using such as TCP ends in success.

In addition, the communication adapter is characterized by making one of the changes of increasing the timeout value and increasing the maximum number in the case where the request for making the connection by using TCP (Transmission control Protocol) ends in failure, and making one of the changes of reducing the timeout value and decreasing the maximum number in the case where the request for making the connection by using TCP (Transmission control Protocol) ends in success.

In addition, the communication adapter is characterized by making one of the changes of increasing the timeout value and increasing the maximum number of times in the case where the request for making the connection by using TCP (Transmission control Protocol) ends in failure, and making one of the changes of reducing the timeout value and decreasing the maximum number in the case where the request for making the connection by using TCP (Transmission control Protocol) ends in success.

A communication adapter according to this invention, in the process of connecting the session managing server or the communication relay server by using such as TCP, is characterized by notifying through a voice reproduction device or a display device the user of a communication apparatus connected with the communication adapter that relayed communication is not available due to the network condition, in the case of failing to achieve a successful connection even after a given timeout value, or even after repeating the reconnection a predetermined maximum number of times.

In addition, the communication adapter is characterized by connecting a communication apparatus which has at least an information output function, making the communication apparatus output information indicating that the communication cannot be relayed by using the Internet in one of the cases where the request for making the connection by using TCP (Transmission Control Protocol) ends in failure even after the preset fixed timeout value and the connection does not succeed even after the preset maximum number.

In addition, the communication adapter is characterized by making one of the changes of increasing the timeout value and increasing the maximum number of timesin the case where the request for making the connection by using TCP (Transmission control Protocol) ends in failure, and making one of the changes of reducing the timeout value and decreasing the maximum number in the case where the request for making the connection by using TCP (Transmission control Protocol) ends in success.

A session managing server or a communication relay server according to this invention is characterized by measuring regularly the arrival time interval between the transmission of a general IP packet and the reception thereof at another party's session managing server, communication relay server, or communication adapter, judging the traffic condition of the communication path based on whether a given value is exceeded or not, and notifying, when determining that the network is very congested, through a voice reproduction device or a display device the user of a communication apparatus connected with the communication adapter, before the communication adapter starts communication, that the network is very congested so that the quality of communication is deteriorated.

In addition, the session managing server is characterized by transmitting a packet to the communication adapter managed by the session managing server and the communication relay server, measuring an arrival time interval between a transmission of the packet and a reception of response information thereto received from the communication adapter and the communication relay server, judging a level of congestion for each communication path, and transmitting a judgement result to the communication adapter; and
wherein the communication adapter is characterized by connecting a communication apparatus which has an information output function at least, and making the communication apparatus output the judgement result transmitted from the session managing server.

In addition, the communication relay server is characterized by transmitting a packet to the communication adapter and the session managing server, measuring an arrival time interval between a transmission of the packet and a reception of response information received from the communication adapter and the session managing server, judging a level of congestion for each communication path, and transmitting a judgement result of the level of congestion to the communication adapter; and
wherein the communication adapter is characterized by connecting a communication apparatus which has an information output function at least, and making the communication apparatus output the judgement result transmitted from the communication relay server.

A session managing server or a communication relay server according to this invention is characterized by measuring regularly the arrival time interval between the transmission of a general IP packet and the reception thereof at another party's session managing server, communication relay server, or communication adapter while the communication adapter is communicating, judging the traffic condition of the communication path based on whether a give value is exceeded or not, and notifying through a voice reproduction device or a display device, when the network becomes very congested and the arrival of communication data is likely to delay, the user of a communication apparatus connected with the communication adapter that the network is very congested so that the quality of communication is deteriorated as poor as it is not practically applicable.

A session managing server according to this invention is characterized by setting up a communication path such that communications may be relayed not only between a calling party's communication relay server and a called party's communication relay server in a two-stage relay, but also with third and other communication relay servers added between the calling party's communication relay server and the called party's communication relay server.

In addition, the internet communication system is characterized by further having a bypass communication relay server for bypassing communication paths, other than the communication relay server,
wherein the session managing server is characterized by switching over from a first communication path through which communications are relayed between the calling party's communication adapter and the called party's communication adapter by way of the communication relay server, to a second communication path through which communications are relayed between the calling party's communication adapter and the called party's communication adapter by way of the bypass communication relay server, based on the judgement result of the level of congestion of the communication path.

In addition, it is characterized, with respect to the selection of the third and other communication relay servers mentioned above, in that when the network is congested, communications may be carried out between the communication adapters of the calling party and the called party by selecting a communication relay server in the path through which no or little delay is caused in communication based on communication path delay measurement information which is obtained from such as the session managing server, and setting up a communication path so that the third and other communication relay servers carry out communication relaying between both the servers.

In addition, the bypass communication relay server is characterized by being replaced with a plurality of bypass communication relay servers, and
wherein the session managing server is characterized by transmitting the packet to the plurality of bypass communication relay servers, measuring an arrival time at which response information to the packet is received from each of the plurality of bypass communication relay servers, judging a level of congestion for each communication path including one of the plurality of bypass communication relay servers connected, selecting one of the plurality of bypass communication relay servers whose communication path is less congested, and switching over from the first communication path to the second communication path through which communications are relayed between the calling party's communication adapter and the called party's communication adapter by way of a selected one of the plurality of the bypass communication relay servers.

In addition, when the communication adapters of the calling party and the called party are communicating with each other by way of a communication relay server, the condition in network communication may get deteriorated, so that the communication path should be switched over to one having a better condition in network communication so that the third and other communication relay servers relay comminations between both the servers mentioned above. In this case, it is characterized in that the user of the communication apparatus connected with the communication adapter is notified through a voice reproduction device or a display device that the network gets heavily congested, and therefore the quality of communication is deteriorated as poor as it is practically inapplicable, so that the communication path will be changed.

In addition, the session managing server is characterized by transmitting to the communication adapter that the first communication path is to be switched over to the second communication path, and
wherein the communication adapter is characterized by connecting a communication apparatus having at least an information output function, and making the communication apparatus output the information transmitted from the session managing server indicating that the first communication path is to be switched over to the second communication path.

A session managing server according to this invention is characterized, when installed in a LAN environment of a specific limited area such as a company or an organization, by setting up extension numbers which are only applicable within the area through the telephones connected to communication adapters installed in that area. Consequently, when one of the extension numbers is inputted through a telephone for making a telephone call, extension number information thereof is transmitted to the session managing server. Then, a call may be made with a communication adapter corresponding to the extension number based on a table which is set up in the session managing server for translating the telephone number to the IP address or identifier of the communication adapter.

In addition, the internet communication system is characterized by further having a LAN (Local Area Network) which communicates by using extension number information available within a specific network area;
wherein the calling party's communication adapter and the calling party's session managing server are characterized by being connected to the LAN;
wherein the calling party's communication adapter is characterized by inputting the extension number information of a destination, and transmitting the extension number information inputted to the calling party's session managing server; and
wherein the calling party's session managing server is characterized by including an extension_number_information_storing_unit which manages the extension number information and the adapter ID of the called party's communication adapter, making them correspond, acquiring the adapter ID of the called party's communication adapter corresponding to the extension number information from the extension_number_information_storing_unit by using the extension number information transmitted from the calling party's communication adapter, and transmitting the server ID of the called party's session managing server which is identified by the adapter ID acquired back to the calling party's communication adapter.

In addition, the internet communication system is characterized by further having a LAN (Local Area Network) which communicates by using extension number information available within a specific network area;
wherein the calling party's communication adapter and the calling party's session managing server are characterized by being connected to the LAN;
wherein the calling party's communication adapter is characterized by inputting the extension number information of a destination, and transmitting the extension number information inputted to the calling party's session managing server; and
wherein the calling party's session managing server is characterized by including an extension_number_information_storingunit_which manages the extension number information and the adapter ID of the called party's communication adapter, making them correspond, acquiring the adapter ID of the called party's communication adapter corresponding to the extension number information from the extension_number_information_storing_unit by using the extension number information transmitted from the calling party's communication adapter, transmitting the adapter ID acquired and the server ID of the called party's session managing server which manages the called party's communication adapter identified by the adapter ID acquired to the called party's session managing server, and transmitting the establishment request of the session with the called party's communication adapter.

In addition, it is characterized in that the determination process may be carried out by recognizing, when an extension number is inputted through the telephone, that the inputted is an extension number based on the prefix number of the extension number previously set up in a communication adapter, so that call control may be carried out by referring not to a built-in translation table in the communication adapter but to a translation table in a session managing server.

A session managing server according to this invention is characterized, when installed in a LAN environment of a specific limited area such as a company or an organization, by having a storage unit for registering communication adapters in groups which are substitutable for busy communication adapters in the case where an outside call is received through an IP line but the called communication adapter is busy with another call, and automatically transferring the telephone call to one of the substitutable communication adapters registered therein.

In addition, the internet communication system is characterized by having a plurality of called party's communication adapters,
wherein the calling party's session managing server is characterized by storing a group ID for grouping and managing the plurality of called party's communication adapters, the extension number information, and the adapter IDs of the called party's communication adapters, making them correspond, in the extension_number_information_storing_unit, acquiring the adapter ID of a called party's communication adapter whose group ID is the same as the group ID of a called party's communication adapter which is busy with a call from the extension_number_information_storing_unit in the case where the called party's communication adapter which is requested by the calling party's communication adapter to establish the session is busy with the call, and transmitting the adapter ID acquired and a server ID of the called party's session managing server, which manages the called party's communication adapter identified by the adapter ID acquired, back to the calling party's communication adapter, and
wherein the calling party's communication adapter is characterized by receiving the adapter ID of the called party's communication adapter and the server ID of the called party's session managingserverfromthe calling party's session managing server, transmitting the adapter ID received to the called party's session managing server identified by the server ID received, and transmitting the establishment request of the session with the called party's communication adapter.

In addition, the internet communication system is characterized by having a plurality of called party's communication adapters;
wherein the calling party's session managing server is characterized by storing a group ID for grouping and managing the plurality of called party's communication adapters, the extension number information, and the adapter IDs of the called party's communication adapters, making them correspond, in the extension_number_information_storing_unit, acquiring the adapter ID of a called party's communication adapter whose group ID is the same as the group ID of a called party's communication adapter which is busy with a call from the extension_number_information_storing_unit in the case where the called party's communication adapter which is requested by the calling party's communication adapter to establish the session is busy with the call, transmitting the adapter ID acquired to the called party's session managing server which manages the called party's communication adapter identified by the adapter ID acquired, and transmitting the establishment request of the session with the called party's communication adapter.

About the GET method of HTTP of the communication adapter for the communication relay server transmitting and receiving voice information, in the process of continuing transmitting Keep-Alive information for holding TCP connection from the communication adapter of the other party in communication to the communication adapter in a fixed cycle by way of the communication relay server mentioned above, the communication adapter according to this invention is characterized by making a new TCP connection and at the same time requesting the communication adapter of the other party to make another TCP connection by way of the session managing server, in case that the Keep-Alive information did not arrive at the communication adapter in the fixed cycle and even after a given timeout value.

The communication adapter according to this invention is characterized by forming an IP packet by accumulating at least one piece of voice frame data, which is an encoding and decoding unit of a voice codec (a device or software for voice encoding and decoding), within a specified period of time determined by the communication adapter, and transmitting the IP packet, wherein the communication adapter is characterized by transmitting the IP packet immediately after storing voice frame data indicating an end of a sequence in the IP packet, even before the specified period of time passes, at a time when the voice frame data indicating the end is generated, at an end of the sequence of the voice data when it has silence.

### Brief Description of the Drawings

Fig. 1 is a diagram illustrating the system configuration of an internet communication system according to a first embodiment.
Fig. 2 is a diagram illustrating procedure of data transmission and reception carried out between a calling party and a called party according to the first embodiment.
Fig. 3 is a diagram illustrating an environment of an assignment notification server according to the first embodiment.
Fig. 4 is a diagram explaining the acquisition of an assigned session managing server name according to the first embodiment.
Fig. 5 is a diagram illustrating the acquisition procedure of the assigned session managing server name according to the first embodiment.
Fig. 6 is a diagram illustrating the acquisition procedure of the assigned session managing server name of the called party according to the first embodiment.
Fig. 7 is a diagram explaining the acquisition of the assigned session managing server name of the called party according to the first embodiment.
Fig. 8 is a diagram explaining a call control system according to the first embodiment.
Fig. 9 is a diagram illustrating the procedure of making an establishment request of a session according to the first embodiment.
Fig. 10 is a diagram illustrating the processing procedure of receiving a session request by the called party according to the first embodiment.
Fig. 11 is a diagram illustrating the items and details of call relay server response information according to the first embodiment.
Fig. 12 is a diagram explaining the transmission of a call message according to the first embodiment.
Fig. 13 is a diagram illustrating the items and details of calling party's voice data transmission information according to the first embodiment.
Fig. 14 is a diagram illustrating the items and details of called party's voice data reception information according to the first embodiment.
Fig. 15 is a diagram explaining the transmission of a call message according to the first embodiment.
Fig. 16 is a diagram illustrating an example of the operation and configuration of an internet communication system according to a second embodiment.
Fig. 17 is a diagram illustrating the procedure of data transmission and reception carried out between the calling party and the called party in the operation and configuration shown in Fig. 16.
Fig. 18 is a diagram illustrating an example of the configuration of an internet communication system according to a plurality of ISP networks according to the second embodiment.
Fig. 19 is a diagram illustrating an example of the configuration of an internet communication systemusing a private ISP network according to the second embodiment.
Fig. 20 is a diagram illustrating an example of the configuration of an internet communication system according to a private ISP network of the second embodiment.
Fig. 21 is a diagram illustrating an internet communication system according to a CATV network of the second embodiment.
Fig. 22 is a diagram illustrating an example of the configuration of an internet communication system including a predetermined ISP network and CATV networks according to the second embodiment.
Fig. 23 is a diagram explaining an environment of a session managing server according to a third embodiment.
Fig. 24 is a diagram illustrating the items and details of assigned session managing server data file information according to the third embodiment.
Fig. 25 is a diagram illustrating the items of area managing data according to the third embodiment.
Fig. 26 is a diagram illustrating the items of call relay managing data and session managing data according to the third embodiment.
Fig. 27 is a diagram illustrating an example of the system configuration of an internet communication system.
Fig. 28 is a diagram illustrating the procedure of data transmission and reception carried out between the calling party and the called party according to the first embodiment.
Fig. 29 is a diagram explaining that a call arrival inquiry is issued to a session managing server by a called party's telephone adapter according to the first embodiment.
Fig. 30 is a diagram explaining that a call arrival inquiry is issued to a session managing server by a called party's telephone adapter according to the first embodiment.
Fig. 31 is a diagram explaining that a call arrival inquiry is issued to a session managing server by a called party's telephone adapter according to the first embodiment.
Fig. 32 is a diagram explaining that a call arrival inquiry is issued to a session managing server by a called party's telephone adapter according to the first embodiment.
Fig. 33 is a diagram explaining that a call arrival inquiry is issued to a session managing server by a called party's telephone adapter according to the first embodiment.
Fig. 34 is a diagram illustrating a call control system according to the first embodiment.
Fig. 35 is a diagram explaining an environment of a session managing server according to the third embodiment.
Fig. 36 is a diagram explaining a call control function between a session managing server and a called party's communication adapter according to a fifth embodiment.
Fig. 37 is a diagram explaining a relation between a telephone operation and a call control message sequence according to the fifth embodiment.
Fig. 38 is a diagram illustrating an example of displaying call history information by day and by month according to the fifth embodiment.
Fig. 39 is a diagram illustrating the types of a call relay system between a communication adapter and a call relay server according to a sixth embodiment.
Fig. 40 is a diagram illustrating terminal connection types according to the sixth embodiment.
Fig. 41 is a diagram explaining a connection system between a communication adapter and a call relay server based on the terminal connection type according to the sixth embodiment.
Fig. 42 is a diagram explaining relay system determining method in a communication carried out within the same domain according to the sixth embodiment.
Fig. 43 is a diagram explaining a relay system determining method in a communication carried out between different domains according to the sixth embodiment.
Fig. 44 is a diagram illustrating the procedure of transmission and reception of a call control message according to the connection type of the communication adapter in the internet telephone network system configuration according to the sixth embodiment.
Fig. 45 is a diagram illustrating an example of the procedure of transmission and reception of a message according to the sixth embodiment.
Fig. 46 is a diagram illustrating an example of the procedure of transmission and reception of a message according to the sixth embodiment.
Fig. 47 is a diagram illustrating an example of the procedure of transmission and reception of a message according to the sixth embodiment.
Fig. 48 is a diagram illustrating an example of the procedure of transmission and reception of a message according to the sixth embodiment.
Fig. 49 is a diagram illustrating an example of the procedure of transmission and reception of a message according to the sixth embodiment.
Fig. 50 is a diagram illustrating an example of the procedure of transmission and reception of a message according to the sixth embodiment.
Fig. 51 is a diagram illustrating an example of the procedure of transmission and reception of a message according to the sixth embodiment.
Fig. 52 is a diagram illustrating an example of the procedure of transmission and reception of a message according to the sixth embodiment.
Fig. 53 is a diagram illustrating an example of the procedure of transmission and reception of a message according to the sixth embodiment.
Fig. 54 is a diagram explaining a remote control maintenance function according to a seventh embodiment.
Fig. 55 is a diagram explaining that the connection of an assignment notification server is switched over to a secondary one from a primary one in case that the assignment notification server had a failure according to the seventh embodiment.
Fig. 56 is a diagram explaining that the connection of an assignment notification server is switched over to a secondary one from a primary one in case that the assignment notification server had a failure according to the seventh embodiment.
Fig. 57 is a diagram explaining a management function of a session managing server according to an eighth embodiment.
Fig. 58 is a diagram explaining TCP connection processing to a session managing server or a call relay server according to the eighth embodiment.
Fig. 59 is a diagram illustrating a relation between HTTP data transmission and reception process and socket function call according to a ninth embodiment.
Fig. 60 is a diagram explaining the confirmation of traffic congestion by an internet path delay state search according to a tenth embodiment.
Fig. 61 is a diagram explaining a session managing server, which manages extension telephones according to an eleventh embodiment.
Fig. 62 is a diagram explaining a session managing server, which manages extension telephones according to the eleventh embodiment.
Fig. 63 is a diagram explaining a session managing server, which manages extension telephones according to the eleventh embodiment.
Fig. 64 is a diagram explaining a session managing server, which manages extension telephones according to the eleventh embodiment.
Fig. 65 is a diagram explaining a session managing server, which manages extension telephones according to the eleventh embodiment.
Fig. 66 is a diagram illustrating a type of group line IP telephone system including grouped communication adapters according to a twelfth embodiment.
Fig. 67 is a diagram explaining communication details at the time of TCP connection between a communication adapter and a session managing server according to a thirteenth embodiment.
Fig. 68 is a diagram explaining the transmission and reception of voice information between a communication adapter and a call relay server according to the thirteenth embodiment.
Fig. 69 is a diagram explaining the transmission and reception of a general voice data IP packet between communication adapters according to a fourteenth embodiment.
Fig. 70 is a diagram explaining a state of considerable delay fluctuation occurred in the transmission and reception of the general voice data IP packet between communication adapters according to the fourteenth embodiment.
Fig. 71 is a diagram explaining a state immediately after having considerable delay fluctuation occurred in the transmission and reception of the general voice data IP packet between communication adapters according to the fourteenth embodiment.
Fig. 72 is a diagram explaining a transmission and reception system of the voice data IP packet of the present invention between communication adapters according to the fourteenth embodiment.

### Best Mode for Carrying out the Invention

With the embodiments which are discussed hereinafter, a server is installed for relaying data between a calling party and a called party in order to handle the firewall which could cause a nuisance to HTTP based voice data distribution. This server will be referred to hereinafter as a "communication relay server".

In addition, in the case of relaying communication data (voice data) from a communication (telephone) adapter by means of the communication relay server, it is necessary to install two or more communication relay servers so that load is shared among the respective communication relay servers. For that reason, a managing server is installed for managing communication (telephone) adapters and communication relay servers. This managing server will be referred to hereinafter as a "session managing server".

Furthermore, a plural number of session managing servers are provided, and it is predetermined which communication adapters are to be managed by a session managing server. A notification server receives an inquiry from a communication adapter about a session managing server which manages the communication adapter itself, and notifies of the session managing server which manages it. The notification server will be referred to hereinafter as an "assignment notification server".

### Embodiment 1.

With a first embodiment, an internet communication system is explained with an example in which communication data such as voice data is transmitted to a called party from a calling party over the Internet.

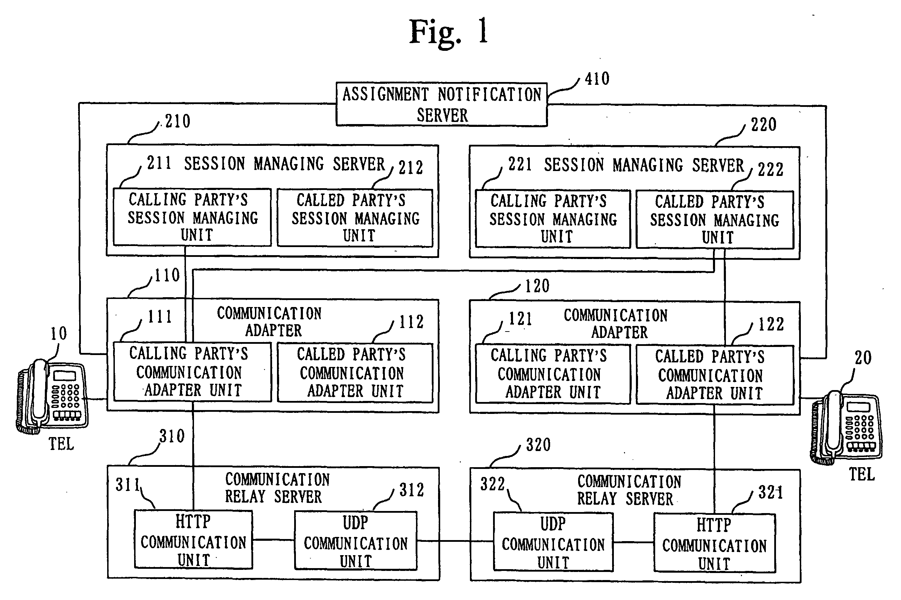

Fig. 1 is a diagram of the configuration of an internet communication system according to the first embodiment which illustrates the elements of the system.

With referring to Fig. 1, reference numerals 10 and 20 are communication apparatuses for transmitting and receiving communication data (voice data). Reference numerals 110 and 120 denote communication adapters. They are connected, respectively, to the communication apparatuses 10 and 20 by means of internal telephone lines. The communication adapter 110 is equipped with a calling party's communication adapter unit 111 and a called party's communication adapter unit 112. The communication adapter 120 is equipped with a calling party's communication adapter unit 121 and a called party's communication adapter unit 122. Each communication adapter 110, 120, being equipped with both the calling party's communication adapter unit and the called party's communication adapter unit, is allowed to be used as either a calling party's communication adapter or a called party's communication adapter. The communication adapter 110, 120 is provided with a program operating on the communication adapter for causing a computer to execute a calling party's communication adapter process or for causing a computer to execute a called party's communication adapter process.

Reference numerals 210 and 220 are sessionmanaging servers. The session managing servers manage the calling party's communication adapter, the called party's communication adapter, and a communication relay server for relaying communication data (e.g., voice data) for distribution. The session managing server specifies a communication relay server to be used for communication in response to a communication request (a call message) from the calling party's communication adapter. In addition, the session managing server, in response to a communication inquiry (a call arrival message) from the called party's communication adapter, notifies of the presence of the communication request. The session managing server 210 is equipped with a calling party's session managing unit 211 and a called party's session managing unit 212. The session managing server 220 is equipped with a calling party's session managing unit 221 and a called party's session managing unit 222. Therefore, the session managing server 210, 220 is allowed to be used as the session managing server of the calling party or the called party. The session managing server 210, 220 is provided with a program operating on the session managing server for causing a computer to execute a calling party's session managing process or for causing a computer to execute a called party's session managing process, respectively.

Reference numerals 310 and 320 denote communication relay servers according to the present invention. The communication relay server relays data between the calling party and the called party for distributing HTTP based communication data (e.g., voice data) in a communication between the communication adapters. The communication relay server 310 is equipped with an HTTP communication unit 311 and a UDP (User Datagram Protocol) communication unit 312. The communication relay server 320 is equipped with an HTTP communication unit 321 and a UDP communication unit 322. The communication relay server 310, 320 is provided with a program operating on the communication relay server for causing a computer to execute an HTTP communication process or for causing a computer to execute a UDP communication process, respectively.

The communication adapter 110, 120 and the communication relay server 310, 320 carry out data communications over the Internet by using HTTP through the HTTP communication unit 311, 321, respectively. The communication relay server 310, 320 performs data communications over the Internet by using UDP through the UDP communication unit 312, 322, respectively.

It is to be noted that a RTP communication unit (not shown) based on RTP (Real-time Transport Protocol or Transport protocol for Real-time Application) may be replaced for the UDP communication unit 312, 322. Still alternatively, instead of using UDP or RTP, SCTP (Simple Control Transmission Protocol) or a protocol designed for a variety of applications using TCP are applicable.

A reference numeral 410 denotes an assignment notification server. The assignment notification server 410 notifies the communication adapter 110, 120 of the session managing server 210, 220 which manages the communication adapter 110, 120 upon request from the communication adapter 110, 120, respectively.

In the explanation which is stated below, voice data is taken as one example of communication data. Thus, the internet communication system is explained in the case where the calling party and the called party transmit and receive voice data to and from each other. For that reason, the communication data is referred to as call data, the communication apparatus as a telephone apparatus, the communication adapter as a telephone adapter, and the communication relay server as a call relay server.

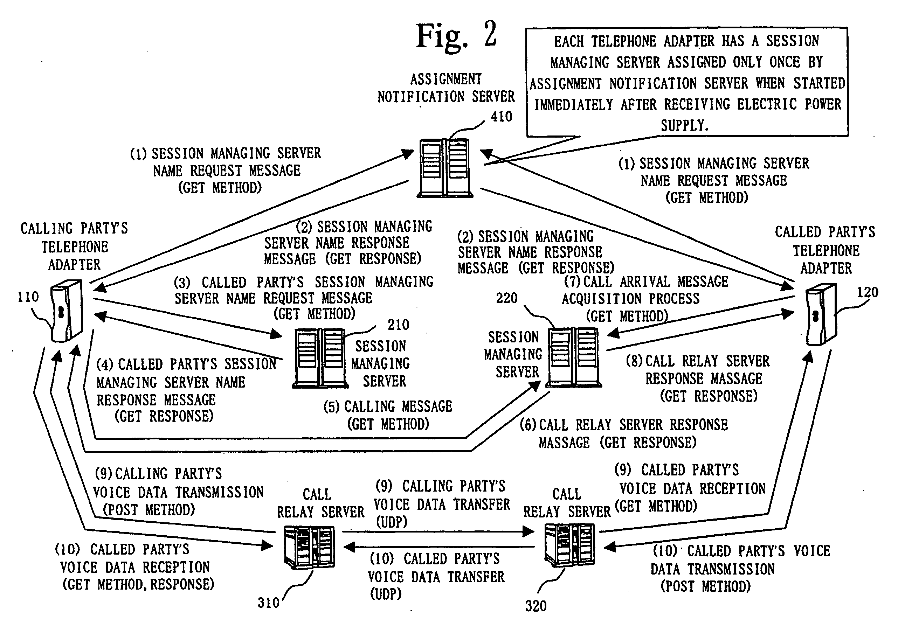

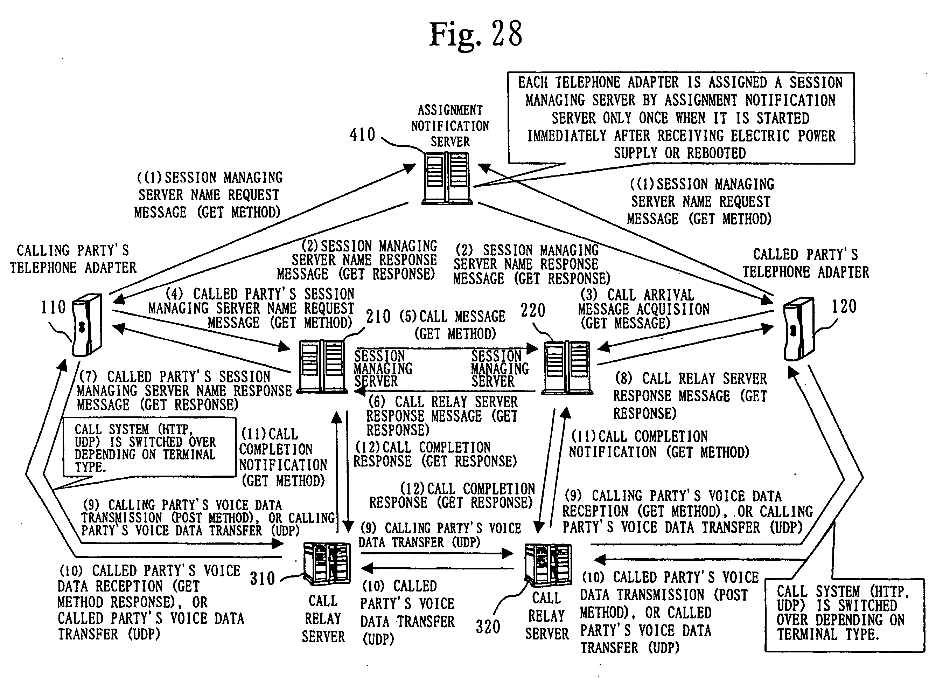

Fig. 2 and Fig. 28 are diagrams illustrating the procedures of data transmission and reception carried out by the calling party and the called party according to the first embodiment.

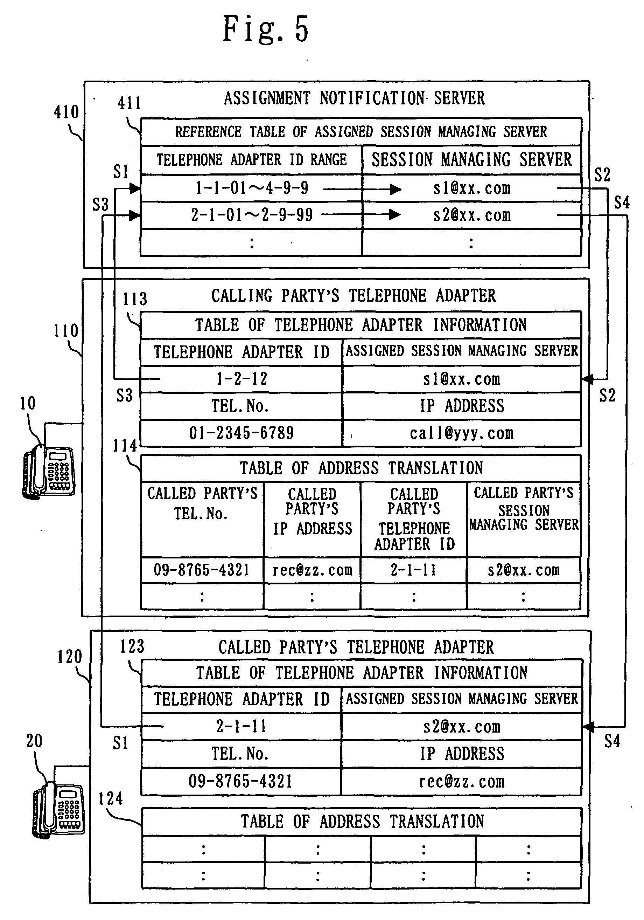

The assignment notification servers, the calling parity's telephone adapter, the called party's telephone adapter, the calling party's session managing server, and the called party's session managing server in Fig. 2 and Fig 28 are provided with reference tables shown in Fig. 5, Fig. 6, Fig. 9, and Fig. 10, respectively. Then, they search the reference tables and acquires destination's addresses.

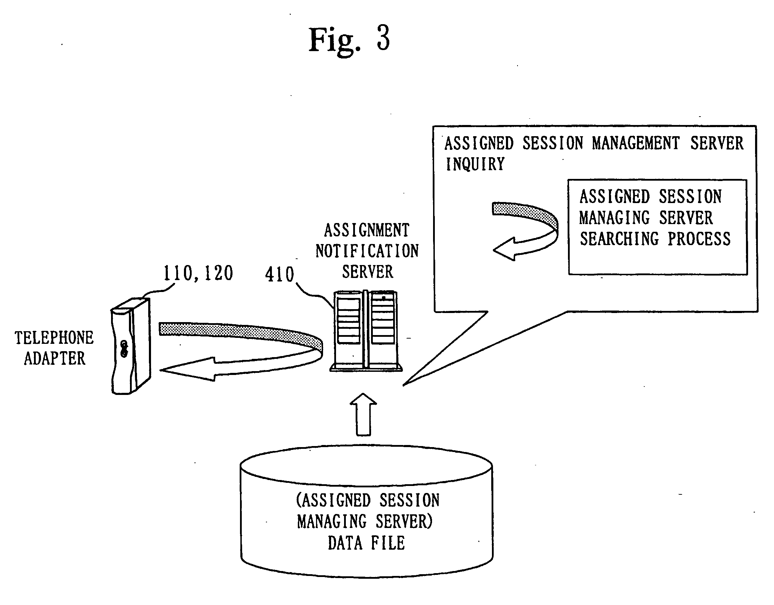

The assignment notification server 410 in Fig. 2 and Fig. 28 manages the session managing servers to which the telephone adapters are assigned. The assignment notification server, when the power of the telephone adapter is turned ON, receives an inquiry from a telephone adapter about a session managing server to which the telephone adapter itself is assigned. Then, the assignment notification server, in response to the inquiry, notifies the telephone adapter as the inquiring source of the session managing server to which the telephone adapter is assigned. The process of receiving the inquiry from the telephone adapter for the session managing server to which the telephone adapter itself is assigned, when the power is turned ON, is an "assigned session managing server searching process". The session managing server is provided with a data file storing information indicating which session managing server manages which telephone adapter is stored. In the "assigned session managing server searching process", by using data in the data file storing the information indicating which session managing server manages which telephone adapter is stored in a memory when the power is turned ON, a corresponding session managing server is searched for in response to the inquiry from the telephone adapter, and a response is sent with a search result to the telephone adapter as the source of inquiry. According to the first embodiment, in order to share the processing load for each session managing server, a plural number of session managing servers are installed, and the assignment notification server notifies each telephone adapter of the session managing server which manages the telephone adapter. The data file stated above is to be added with data or updated manually by the administrator. For that reason, in the case of adding data to or updating the data file, the assigned session managing server searching process is suspended, and then restarted after the data is updated. Fig. 3 shows an environment of the assignment notification server mentioned above.

On the ground that information relating to the session managing server may thus be updated, the telephone adapter may alternatively make the same inquiry as that performed when the power is turned ON to the assignment notification server regularly. This may eliminate the necessity of the user of the telephone adapter resupplying power or resetting in compliance with the update of the server information.

The procedure for connecting the calling party's telephone adapter and the called party's telephone adapter is explained now in order of (1) to (10) of Fig. 2. (Also with Fig. 28, a supplementary explanation will be made in order of (1) to (12) distinguishing the procedure from that of Fig. 2.)

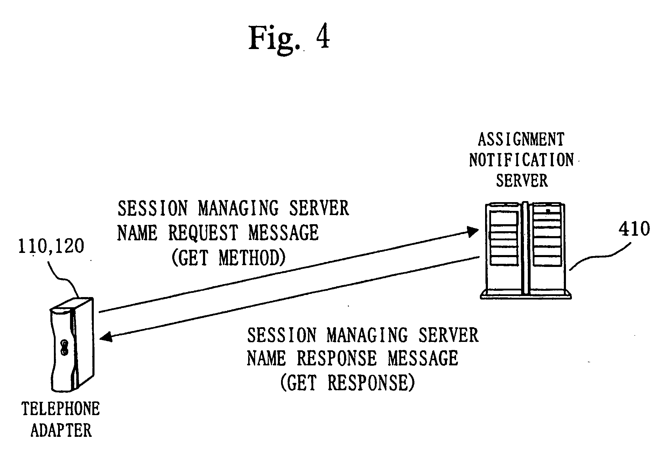

Reference numerals (1) and (2) in Fig. 2 (Fig. 28 as well) denote acquisition processing of assigned session managing server information. Every telephone adapter makes an inquiry only once when the power is turned on to the assignment notification server for the assigned session managing server information. With this example, the calling party's telephone adapter 110 and the called party's telephone adapter 120 each make a session managing server information acquisition request to the assignment notification server 410 about the session managing server to which it is assigned. The assignment notification server 410 searches for the session managing server to which the telephone adapter as the requesting source is assigned, and transmits the assigned session managing server information as a response message to the telephone adapter as the requesting source. The telephone adapter as the requesting source acquires a "session managing server name response" from the assignment notification server 410 andregisters the assigned session managing server information in a storage unit provided in the telephone adapter of the requesting source itself. Fig. 4 shows the acquisition processing of the assigned session managing server information of the session managing server to which the telephone adapter is assigned.

According to the first embodiment, two or more session managing servers are to be provided, and the session managing server information for each telephone adapter is to be notified from the assignment notification server. A single session managing server is tomanage a finite number of telephone adapters for sharing the processing load of a session managing server. For that reason, it is necessary for the telephone adapter to acquire the assigned session managing server information.

A reference sign S1 of Fig. 5 corresponds to (1) of Fig. 2 ((1) of Fig. 28 as well). With referring to Fig. 5, the calling party's telephone adapter 110 is provided with a table of telephone adapter information 113 which stores telephone adapter IDs, each of which is a unique number allocated to each telephone adapter, and addresses for accessing assigned session managing servers, which manage the telephone adapters, making them correspond. As the telephone adapter has a manufacturer's serial number unique to each telephone adapter, the manufacturer's serial number is used as the ID of the telephone adapter. The telephone adapter makes the session managing server information acquisition request as shown in (1) of Fig. 2 ((1) of Fig. 28 as well) by using the manufacturer's serial number. The calling party's telephone adapter 110 sets the "telephone adapter ID" to "1-2-12" in the session managing server information acquisition request when the power is turned on, and transmits it to the assignment notification server 410 as a GET method message. The assignment notification server 410 extracts the "telephone adapter ID "1-2-12"" from the session managing server information acquisition request received, and searches a reference table of assigned session management 411 for it. In the reference table of assigned session management 411, the addresses of the session managing servers which manage the telephone adapters in a range specified by a telephone adapter ID are stored. The assignment notification server 410 searches the range of the telephone adapter ID in the reference table of assigned session managing server 411 based on the telephone adapter ID "1-2-12", and then acquires the address of the session managing server to which it is assigned. With this example, "s1@xx.com" (or a 32-bit global IP address such as 210.54.10.156) is acquired as the address of the session managing server. The assignment notification server 410 notifies the calling party's telephone adapter 110 of the address acquired of the session managing server as a GET response message through (2) of Fig. 2 ((2) of Fig. 28 as well) and S2 of Fig. 5. The telephone adapter registers the address of the assigned session managing server notified by making it correspond to the telephone adapter ID "1-2-12" in a table of telephone adapter information 113. The called party's telephone adapter 120 also carried out the processing of (1) and (2) through S3 and S4 of Fig. 5 in the same manner as that of the calling party's telephone adapter 110.

Reference numerals (3) and (4) of Fig. 2 denote the acquisition processing, which is performed by the calling party, of the session managing server information of the session managing server to which the called party's telephone adapter is assigned. The calling party's telephone adapter 110 makes a called party's session managing server name request to the session managing server to which it is assigned (the calling party's session managing server 210). The calling party's session managing serer 210 transmits information about the session managing server to which the called party's telephone adapter is assigned (the called party's session managing server 220) to the telephone adapter as the inquiring source by sending a response message as a session managing server name response. According to the first embodiment, for processing load sharing of the session managing server, the telephone adapter to be managed by the session managing server is specified for each telephone adapter ID range, for example. For that reason, it is necessary for the calling party's telephone adapter 110 to know the session managing server which manages the called party's telephone adapter when connecting a session with the called party's telephone adapter 120.

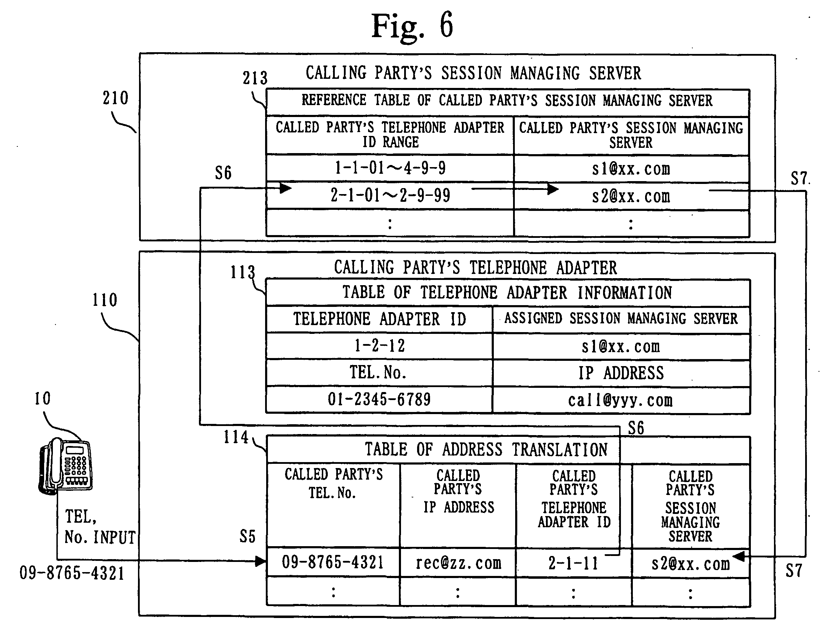

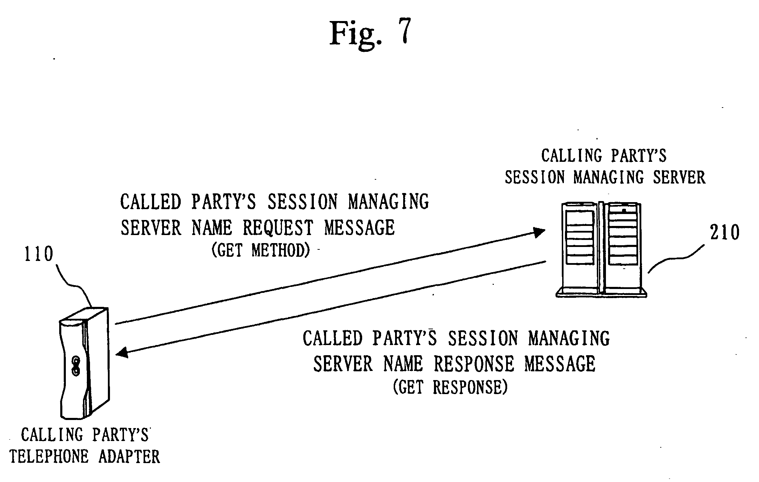

Reference signs S5, S6 and S7 of Fig. 6 correspond to the processing of (3) and (4) of Fig. 2. With referring to Fig. 6, when a called parity's telephone number is input through a telephone unit 10 (S5), the calling party's telephone adapter 110 receives this telephone number, and acquires the called party's telephone adapter ID corresponding to the called party's telephone number with referring to a table of address translation 114. The table of address translation 114 stores the called party's telephone (TEL) number, an IP address for accessing the called party's telephone adapter, a telephone adapter ID unique to the called party's telephone adapter, and the address of the session managing server which manages the called party's telephone adapter by making them correspond. The calling party's telephone adapter 110 includes the called party's telephone adapter ID acquired in the called party's session managing server name, and transmits it as the GET method message to the session managing server (the calling party's session managing server 210) obtained through S2 (S6). The calling party's session managing server 210, upon reception of the called party's session managing server name request, acquires the address of the called party's session managing server to which the called party's telephone adapter is assigned with referring to the reference table of called party's session managing server 213. The session managing server manages telephone adapters for each telephone adapter ID range. For that reason, the reference table of called party's session managing server 213 stores the range of the called party's telephone adapter ID and the address of the called party's session managing server by making them correspond. Since the called party's telephone adapter ID is "2-1-11", then "s2@xx.com" (or a 32-bit global IP address such as 210.54.10.156) is to be acquired as the called party's session managing server. The calling party's session managing server 210 includes "s2@xx.com" (or a 32-bit global IP address such as 210.54.10.156) as the address of the called party's session managing server acquired in the called party's session managing server name response, and notifies the calling party's telephone adapter 110 of it as the GET message (S7). The calling party's telephone adapter 110 acquires "s2@xx.com" (or a 32-bit global IP address such as 210.54.10.156) as the address of the called party's session managing server from the called party's session managing server name response received, and then registers it by making it correspond to the "called party's telephone adapter ID "2-1-11" in the table of address conversion 114. Fig. 7 shows the called party's session managing server name acquisition processing.

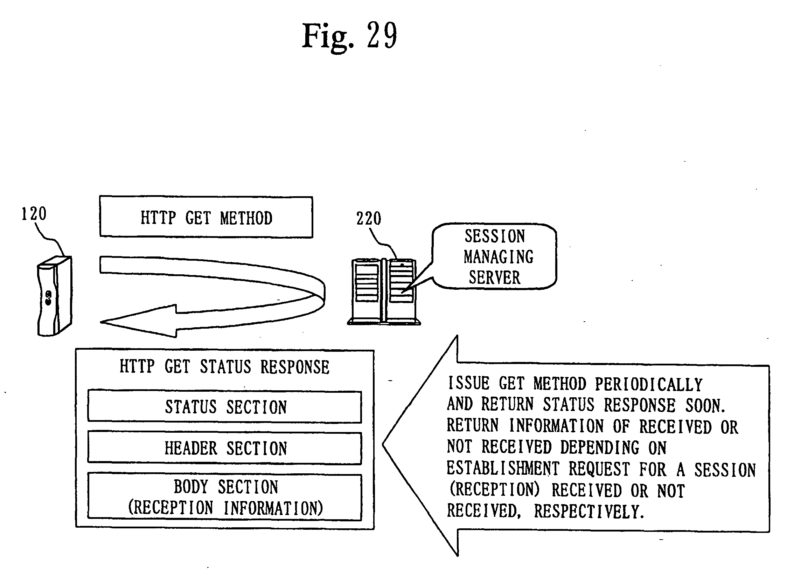

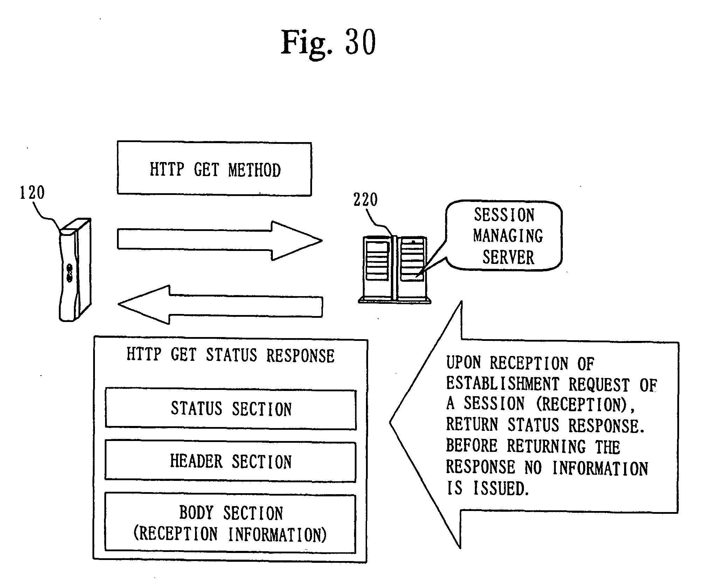

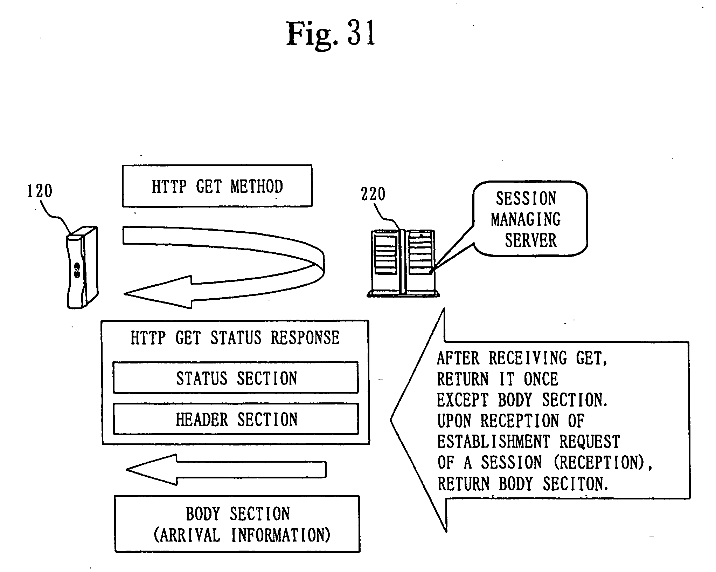

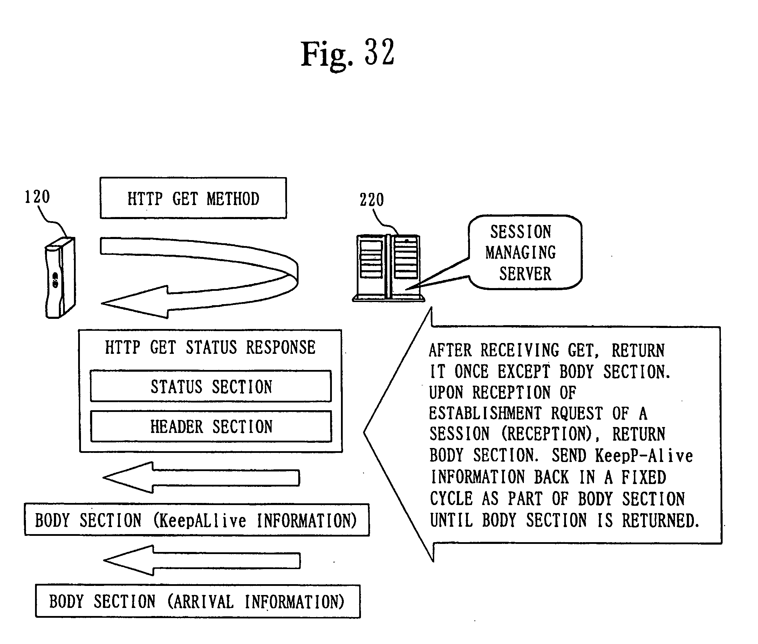

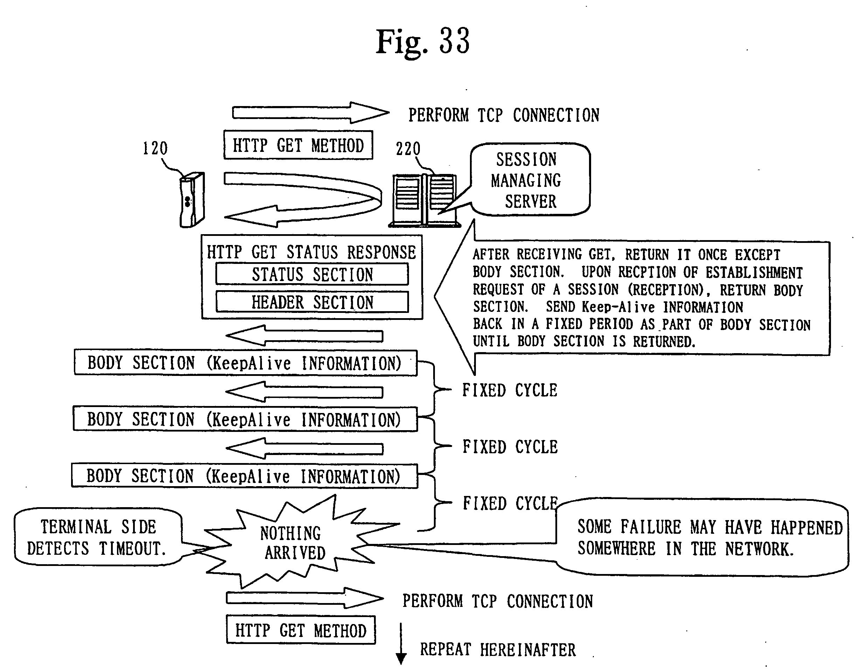

Reference numerals (5) and (6) of Fig. 2 denote processing of call message issuance (session ID acquisition). The call message is a message to be transmitted to the called party's session managing server 220 from the calling party's telephone adapter 110. The called party's session managing server 220 becomes aware, upon reception of the call message, that a call request has been issued to the called party's telephone adapter 120 which it manages, judges the state of the intended party of the call (the called parity's telephone adapter), at the same time obtains a call relay server available, and then responds with call relay server response information. According to the first embodiment, as shown in Fig. 29, the called party's telephone adapter 120 makes a call arrival inquiry periodically (e.g., at intervals of one second or three seconds) to the session managing server assigned 220. Alternatively, as shown in Fig. 30 or Fig. 31, the periodic inquiry may be replaced by the method of waiting until call arrival information is returned after the HTTP based GET is issued once. With this method, the processing load of the periodic inquiry may be saved. However, according to this method, an HTTP connection or a TCP connection has to be held for a long time even in a state where no data is transmitted or received. For this reason, in the actual internet environment, the TCP connection in a communication path from the communication adapter to the session managing server may be cut without prior notice by the router or the like which is managed by such as ISP. As a result, there is no guarantee of successful acquisition of the call arrival information. For an improvement of this method, in order to hold a continuous TCP connection of Keep-Alive information, Fig. 32 shows a method of continuously transmitting dummy data indicating that data is still being outputted to the communication adapter from the session managing server. On top of it, even if this method of continuously transmitting dummy data is employed, the TCP connection may possibly be cut somewhere on the communication path, and neither the session managing server nor the communication adapter may become aware of the disconnection. Fig. 33 shows an improvement method for that kind of situation. According to the method, the dummy data of the Keep-Alive information is to be transmitted to the communication adapter from the session managing server at a fixed cycle. In this situation, the receiving party's communication adapter sets up a timeout value having a period little longer than the period of the cycle. Then, in case of the dummy data not arriving at the communication adapter at the fixed cycle, it is considered that the TCP connection is disconnected, and then another TCP connection is made anew from the communication adapter to the session managing server. In addition, it is possible that the TCP reconnection and the transmission of the call arrival information to the communication adapter from the session managing server share the timing. In case of thus sharing the timing of the reconnection with the transmission, the call arrival information may be lost before reaching the communication adapter. For that reason, the GET method of HTTP of a TCP reconnection, is added with information indicating that it is a reissue so that the call arrival information reaches the communication adapter without fail. This allows the session managing server to distinguish it from the GET method of HTTP which is issued in a normal state. Then, the same call arrival information is to be transmitted again for fear of a transmission failure of the call arrival information. In addition, when this call arrival informationmaybe addedwith information indicating that it is a retransmission, then the communication adapter is allowed to become aware that the call arrival information received is of the retransmission. This provides the state where another new GET method of HTTP can be issued next in the normal state.

In addition, the GET method of HTTP has been explained in the case where the called party's communication adapter receives the establishment request information of the session from the calling party's communication adapter as a response. However, the same mechanism as that explained above of receiving the response information of the GET method of HTTP without fail may also be applied to the case of receiving each information indicating that the receiver has been picked up at the other party's communication adapter (off-hook), the receiver has been hung up to end the telephone call (on-hook), ringing is started at the other party, as the response of this GET method of HTTP.

As aforementioned, when the calling party's telephone adapter 110 makes a call, it is required that the calling party's telephone adapter 110 issues a call message to the session managing server 220 to which the called party's telephone adapter 120 is assigned.

The processing of call message issuance discussed above is based on (3) through (6) of Fig. 2, which may be replaced by a series of the operations of (3) through (8) of Fig. 28. The message flow of the calling party includes (4), (5), (6) and (7).

With the called party, the called party's telephone adapter 120 makes a periodic call arrival inquiry (e.g., at intervals of one second or three seconds) in advance to the assigned session managing server 220 to which it is assigned in the same manner as that of the case of Fig. 2 as shown in (3) of Fig. 28. Instead of making the periodic inquiry, however, the called party's telephone adapter 120 may alternatively take the method of waiting until the call arrival information is returned after issuing the HTTP based GET message once.

A reference numeral (4) of Fig. 28 is the processing of call message issuance (session ID acquisition). The call message is a message to be transmitted to the calling party's session managing server 210 from the calling party's telephone adapter 110. The calling party's session managing serer 210 obtains the information of the session managing server to which the called party's telephone adapter is assigned (the called party's session managing server 220) in the same manner as that of the case of Fig. 2. Then, the calling party's session managing serer 210 transmits it as another call message to the called party's session managing server 220 from the calling party's session managing server 210 in (5) of Fig. 28.

The called party's session managing server 220, upon reception of the call message, becomes aware that a call request has been issued to the called party's telephone adapter 120 which it manages. Then, the called party's session managing server 220 judges the state of the intended party of the call (the called party's telephone adapter), and at the same time, obtains a call relay server available. Then, the called party's session managing server 220 transmits a response message in the call relay server response information to the calling party's session managing server 210 in (6) of Fig. 28. Further, in (7) of Fig. 28, the response message is transferred to the calling party's telephone adapter 110 from the calling party's session managing server 210. In addition, in (8) of Fig. 28, the called party's session managing server 220 transmits a response message indicating that a call has been received to the called party's telephone adapter 120 which it manages.

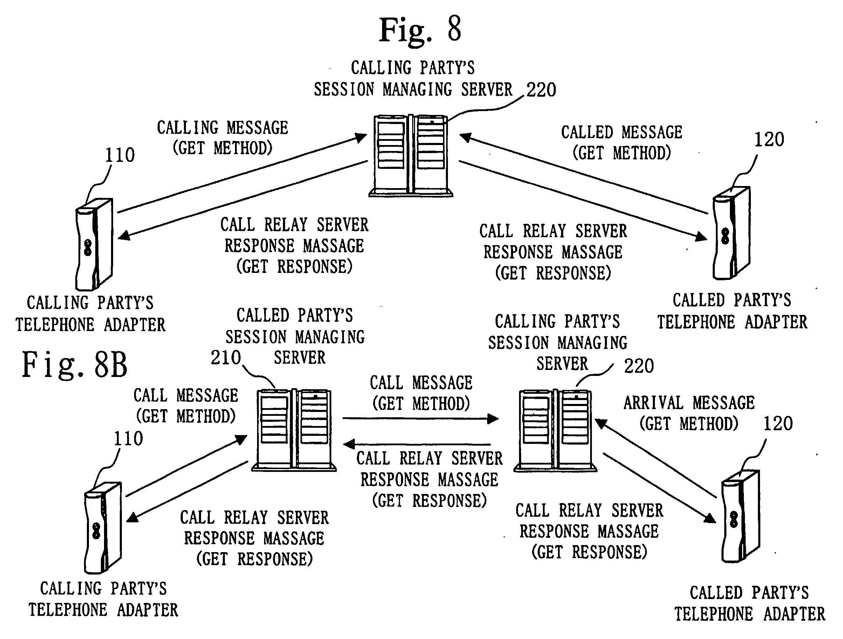

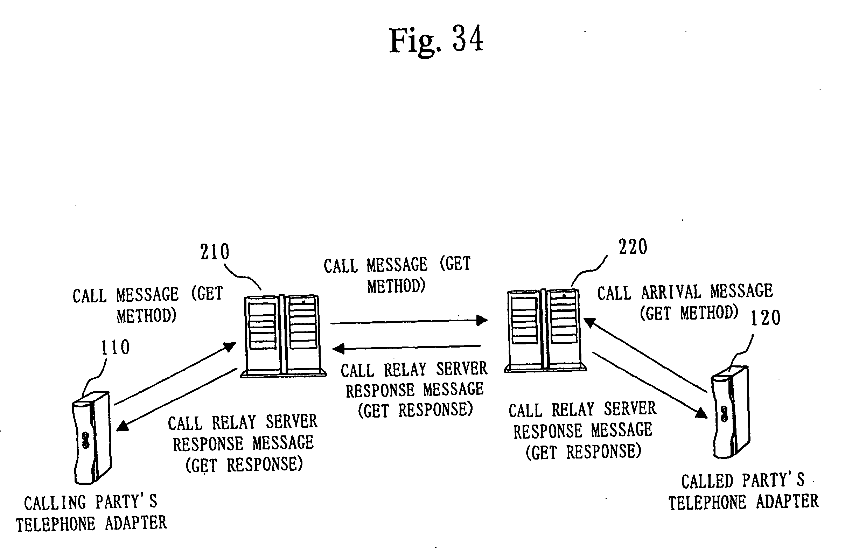

Fig. 8 and Fig. 34 show call control methods. A call control method shown in Fig. 8 corresponds to Fig. 2 and a call control method shown in Fig. 34 corresponds to Fig. 28.

The call control method of Fig. 8 indicates that the calling party's telephone adapter 110 issues a call to the called party's session managing server 220, and the called party's telephone adapter 120 checks the called party's session managing server 220 for the arrival of a call.

The call control method of Fig. 34 indicates that the calling party's telephone adapter 110 issues a call to the called party's session managing server 220 by way of the calling party's session managing server 210, and the called party's telephone adapter 120 checks the called party's session managing server 220 for the arrival of a call.

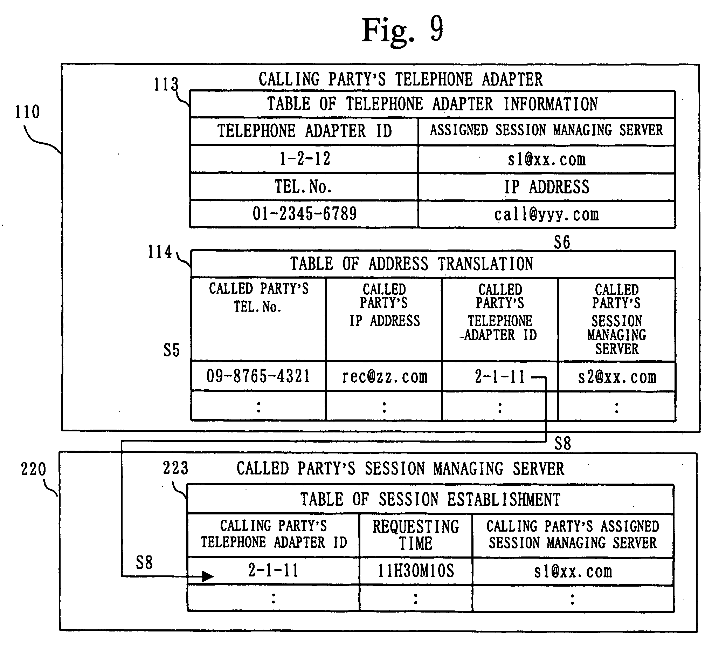

A reference sign S8 of Fig 9 corresponds to the processing of (5) and (6) of Fig. 2, or the processing of (5) and (6) of Fig. 28.

In S8 of Fig. 9, the calling party's telephone adapter 110, addressing to the address ("s2@xx.com") acquired in S7 of the called party's session managing server 220 to which the called party's telephone adapter 120 is assigned, issues a call message to the called party's telephone adapter whose telephone adapter ID is "2-1-11". The call message is issued by the issuance of the GET method message. The called party's session managing server 220 receives the issuance of the call message, and then registers the adapter ID of the called party's telephone adapter with which the establishment of a session is requested, the requesting time, and the address of the calling party's session managing server to which the calling party's telephone adapter transmitting the establishment request of the session is assigned in a table of session establishment request 223 of Fig. 9 by making them correspond. The table of session establishment request 223 of Fig. 9 is the table in which the adapter ID of the called party's telephone adapter to which the call message request has been made, the requesting time at which the request was made, and the address of the calling party's session managing server to which the calling party's telephone adapter is assigned are stored by making them correspond. The called party's session managing server 220, after storing them in the table, judges the state of the called party's telephone adapter 120, and obtains a call relay server available. Then, the called party's session managing server 220 responds by information indicating the call relay server obtained in call relay server response information to the calling party's telephone adapter 110 with Fig. 2, and to the calling party's session managing server 210 with Fig. 28. In the case where all the call relay servers to be used for relaying a call are engaged, then this fact is included in the call relay server response information and notified to the calling party's telephone adapter 110 with Fig. 2, and the calling party's session managing server 210 with Fig. 28. A response to the calling party's telephone adapter 110 or the calling party's session managing serve 210 is made by the GET response message.

Reference numerals (7) and (8) of Fig. 2, or (3) and (8) of Fig. 28 denote the processing of inquiring about call arrival verification (session ID acquisition). This is the same as the processing of the called party's telephone adapter and the called party's session managing server of Fig. 8 illustrating the call control methods. The called party's telephone adapter 120 makes a call arrival message request to the called party's session managing server 220 ((7) of Fig. 2 or (3) of Fig. 28) only when it is in a call enable state. For that reason, with Fig. 2, the called party's session managing server 220 judges that the called party's telephone adapter 120 is engaged if no call arrival message has been received from the called party's telephone adapter 120.

With the example of Fig. 2 above, the internet communication system has been discussed with the method in which the calling party's communication adapter issues a call to the called party's communication adapter via the session managing server. However, the above method is only one example. Now, the method of Fig. 28 is explained about the transmission and reception of a call control message to and from the session managing server.

With the method of the example of Fig. 2, the message of the call arrival information is transmitted to the called party's session managing server from the called party's communication adapter only when it is in a call enable state. However, there is the case where the called party's communication adapter cannot transmit the message of the call arrival information due to some failure. In such a case, there is a possibility of falling into the situation that the abnormal state of the called party's communication adapter is not noticed at all, and the called party's communication adapter is left being engaged through. Furthermore, in order to implement a call waiting function, it is necessary to transmit call arrival information from another party's communication adapter even to the communication adapter which is engaged. Therefore, in order to solve those problems, the communication adapter, no matter if being engaged or not, always transmits the message of the call arrival information to the session managing server so as to provide the session managing server with information notifying of the state of the called party's communication adapter. This method is considered desirable. With a call from another party's communication adapter, the information is transmitted to the called party's communication adapter from the session managing server, whereby the arrival of the call is verified. This is the same as that of the above-mentioned example of Fig. 2.

Thus, the message of the call arrival information is to be continuously outputted to the session managing server. This allows the called party's communication adapter to be always aware of the presence of a calling from another party's communication adapter. In addition, the message of the call arrival information is continuously transmitted to the session managing server waiting for the arrival of the message of the call arrival information from the called party's communication adapter. Therefore, if it is not received, the session managing server may become aware of the abnormal state of the communication adapter, which may allow some recovery processing to be started.

With the example of Fig. 28, the called party's session managing server 220 receives the call arrival message from the called party's telephone adapter 120 while it is engaged even. The called party's session managing server 220 judges that the called party's telephone adapter 120 is being engaged even if the session managing server is not involved in the call because the engaged state of the called party's adapter during a PSTN (Public Switched Telephone Network) based call, for example, is notified to the called party's session managing server 220 through some system from the called party's telephone adapter itself.

In addition, the called party's session managing server obtains a call relay server available, and responds to the called party's telephone adapter 120 in the call relay server response information. In the case where all the call relay servers for call relaying are engaged, this fact is included in the call relay server response information so as to notify the called party's telephone adapter 120 of it. The called party's session managing server 220 included in the call relay server response information a search result of the call request to the called party's telephone adapter 120, and transmits it as a response message of call relay server ((8) of Fig. 2 or (8) of Fig. 28). The response message of call relay server is responded by the GET response message.

According to the first embodiment, session managing servers manages telephone adapters from each other. In other words, the session managing servers assigned to the calling party's telephone adapter and the called party's telephone adapter are not necessarily the same. For that reason, the telephone adapter knows the presence of a call from the intended party only by making a call arrival inquiry to the session managing server to which it is assigned directly with Fig. 2 and by way of the calling party's session managing server with Fig. 28.

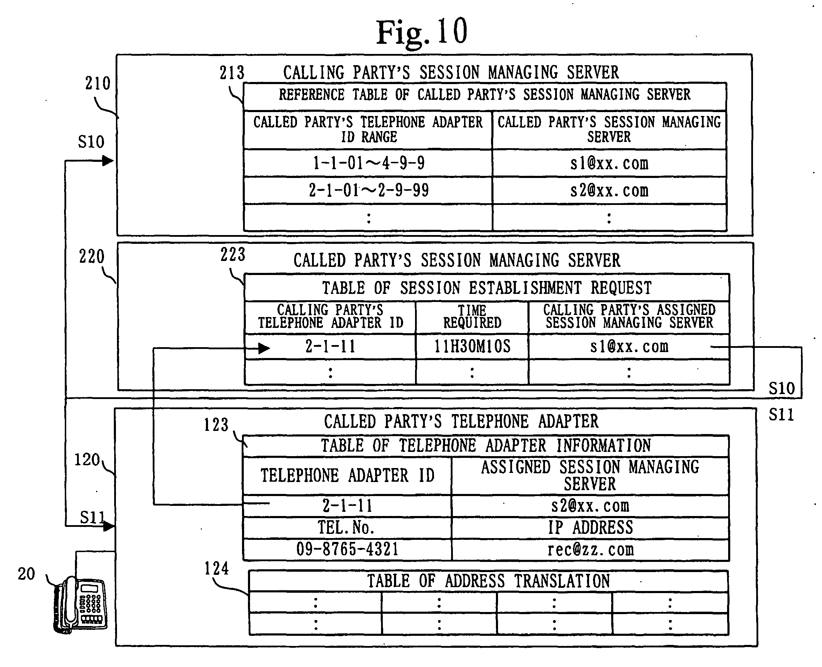

Reference signs S9, S10 and S11 of Fig. 10 correspond to the processing of (7) and (8) of Fig. 2 or the processing of (3) and (8) of Fig. 28. In S9, the called party's telephone adapter 120 acquires the telephone adapter ID of its own and an address indicating the called party's session managing server from the table of telephone adapter information 123. The called party's telephone adapter 120, issues the call arrival message request (S9) to the address of the called party's session managing server acquired. A call arrival message request is transmitted to the called party's session managing server 220 as the GET method message. The called party's session managing server 220 searches the table of session establishment request 223 based on the telephone adapter ID of the telephone adapter to which a call arrival message request is issued, and checks the presence of the session request. With the example of Fig. 10, there is a request having been issued to the address of the telephone adapter ID "2-1-11" in the table of session establishment request 223. Consequently, the called party's session managing server 220 sets the presence of a session request in the call relay server response message, and notifies the called party's telephone adapter 120 of it (S11). The call processing performed by the called party's telephone adapter 120 and the called party's session managing server 220 of the call control method shown in Fig. 8 corresponds to the processing of S9 and S11. In addition, the called party's session managing server 220 acquires from the table of session establishment request 223 the address of the calling party's session managing server 210 of the establishment request of the session based on the call arrival message request. Then, the called party's session managing server 220 notifies the calling party's session managing server 210 of the establishment request of the session based on the call arrival message request that the call arrival message request has been issued (S10).

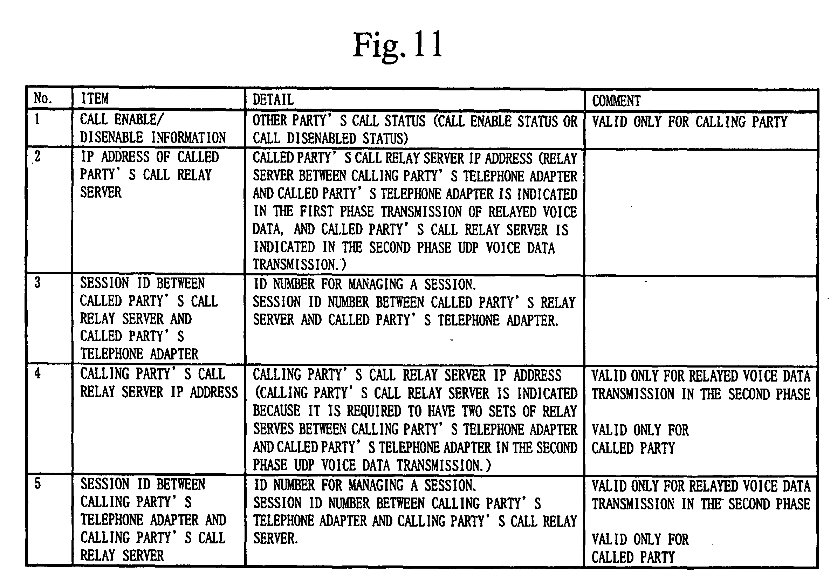

The reference numerals (3), (4), (5), (6), (7) and (8) of Fig. 2, or (3), (4), (5), (6), (7) and (8) of Fig. 28 discussed above are the processing of call relay management performed by the session managing server 220. The session managing serve 220 starts performing a call relay upon reception of a call message from the telephone adapter as a trigger. A call relaying method is elaborated below.
(a) A call message originated from the calling party's telephone adapter 110 is received.
(b) It is judged whether or not a call arrival message is received from the recipient(the called party's telephone adapter 120) of the call message received is received.
(c) In the case where the call arrival message has been received from the intended party (the called party's telephone adapter 120) of the call message received, then a call relay server which is not engaged in a call relay is searched for. The session managing server 220 judges the possibility of call relaying based on the call message and call arrival message received, and area managing data. (The area managing data will be elaborated in a later embodiment.) Call relaying is not allowed in the condition that:
   · A call arrival message from the intended party (the called party's telephone adapter 120) of the call message received has not been received (Fig. 2), or the intended party (the called party's telephone adapter 120) of the call message received is engaged or busy(Fig. 28); or
   · All the sessions of the call relay server for call relaying are used.
   The session managing server 220 manages the call relay servers to be used for call relaying based on the "area managing data" which is created for each area. The session managing server 220 reads out data from the "assigned session managing server data file" when the calling management process of the session managing server 220 is started, and creates and stores the "area managing data", "relay server managing data", and "session managing data" in a memory. The "assigned session managing server data file", the "area managing data", the "relay server managing data", and the "session managing data" will be elaborated in a later embodiment.
   In the case where no call relay server available for call relaying is found as a search result, a log is outputted and the administrator is notified of it. In addition, an error is notified also to the telephone adapter 110, 120 so as to notify the user who operates the telephone unit via the telephone adapter 110, 120 (by LED lighting, etc.) of the abnormal state.
(d) The call relay server response information is transmitted to the calling party's telephone adapter 110 and the called party's telephone adapter 120 from the called party's session managing server 220 (Fig. 2). The call relay server response information is transmitted to the calling party's telephone adapter 110 from the calling party's session managing server 210 and to the called party's telephone adapter 120 from the called party's session managing server 220 (Fig. 28). Fig. 11 shows information which is included in the call relay server response information.

The reference numerals (9) and (10) of Fig. 2 and Fig. 28 are the processing of voice data distribution. With this example, a first phase transmission of relay data and a second phase transmission of relay data are discussed individually. In the first phase transmission of relay data, a call is relayed between the calling party's telephone adapter 110 and the called party's telephone adapter 120 by means of a single unit of call relay server. In the second phase transmission of relay data, a call is relayed between the calling party's telephone adapter 110 and the called party's telephone adapter 120 by means of two (or more) units of call relay servers.

Firstly, the first phase transmission of relay data is discussed.

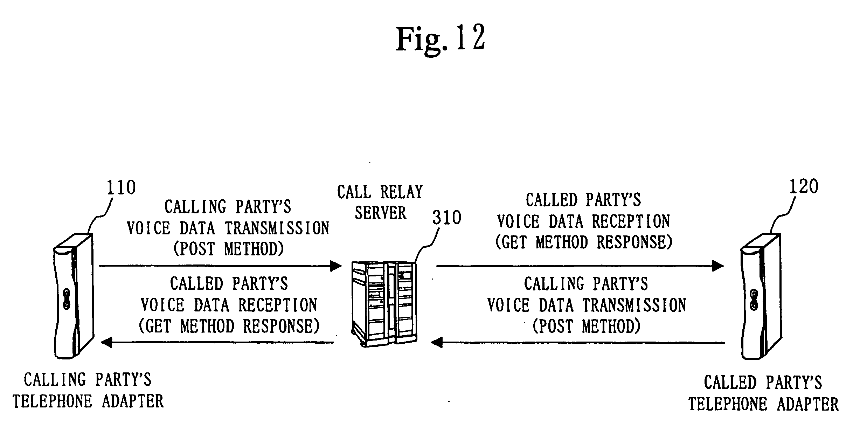

Fig. 12 shows the processing of the first phase transmission of relay data. In the first phase transmission of relay data, data is distributed by way of the single unit of the call relay server 310 which is capable of clearing firewall. With the first phase transmission of relay data, the calling party's telephone adapter 110 transmits "calling party's voice data" through a POST method to the call relay server 310 available which is included in the "call relay server response message" acquired from the called party's session managing server 220 through (6) of Fig. 2 or (7) of Fig. 28. The calling party's telephone adapter 110 receives "called party's voice data" through the GET method from the call relay server 310 available which is included in the "call relay server response message" acquired from the called party's session managing server 220 through (6) of Fig. 2 or (7) of Fig. 28. Then, in the case where the calling and called parties are changed, the called party's telephone adapter 120 transmits voice data to the call relay server 310. The calling party's telephone adapter 110 makes a voice data reception request to the call relay server in order to acquire the voice data of the called party's telephone adapter 120.

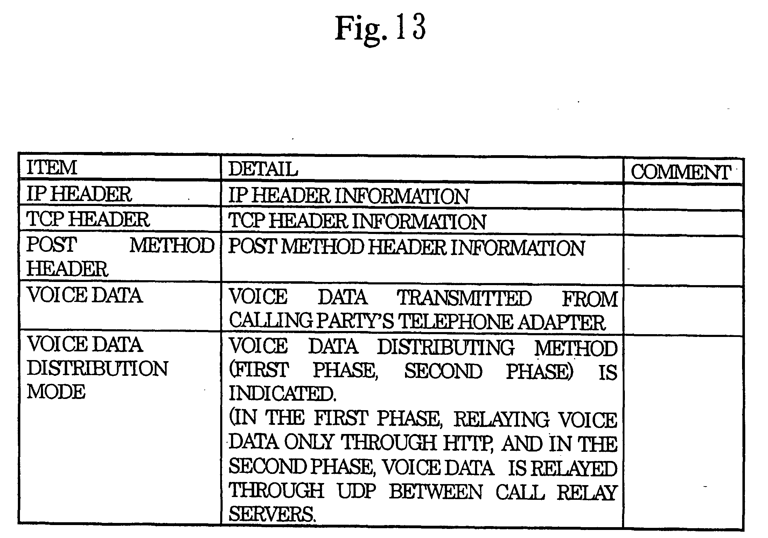

The call relay server 310 receives "calling party's voice data transmission information" from the calling party's telephone adapter 110 as voice data. Fig. 13 shows the items and contents of the calling party's voice data transmission information.

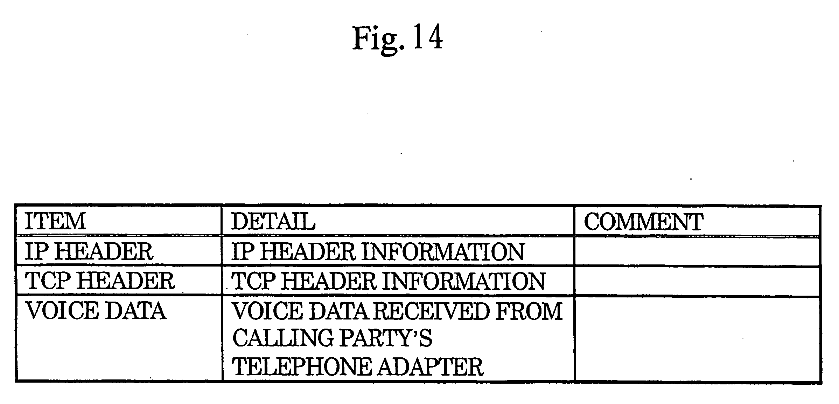

The call relay server 310 edits "called party's voice data reception information" as voice data to be transmitted to the called party based on the voice data received from the calling party's telephone adapter 110. Fig. 14 shows the items and contents of the called party's voice data reception information.

It is to be noted that "calling party's voice data transmission (POST method)" from the calling party's telephone adapter 110 is notified after transmitting a response to the "called party's voice data reception (GET method)" to the called party's telephone adapter 120.

Next, the second phase transmission of relay data will be discussed.

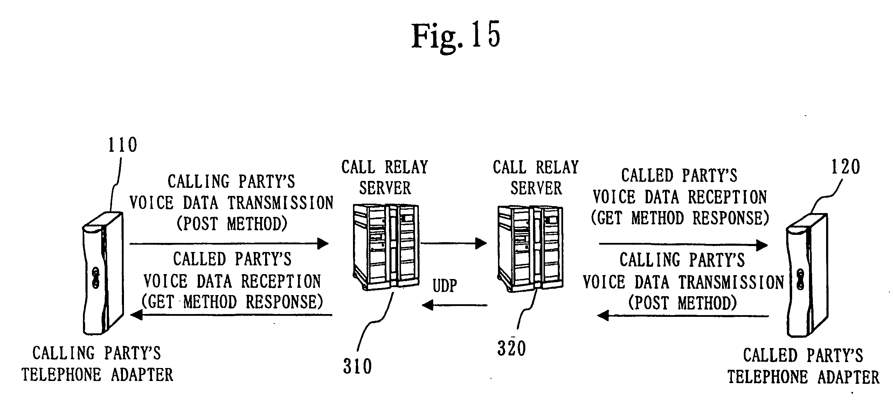

Fig. 15 shows the processing of the second phase transmission of relay data.

In the second phase transmission of voice data, voice data is transmitted between the call relay servers 310 and 320 by using UDP. The calling party's telephone adapter 110 transmits the "calling party's voice data " through the POST method to the call relay server 310 available which is included in the "call relay server response message" acquired from the called party's session managing server 220 through (6) of Fig. 2 or (7) of Fig. 28. The call relay server (of the calling party) 310, upon reception of the POST method, transfers the voice data to the call relay server (of the called party) 320 by using UDP. The called party's telephone adapter 120 transmits the "calling party's voice data" through the POST method to the call relay server 320 available which is included in the "call relay server response message" acquired from the called party's session managing server 220 through (8) of Fig. 2 or (8) of Fig. 28. The call relay server (of the called party) 320, upon reception of the POST method, transmits the voice data received from the call relay server (of the calling party) 310 by using UDP to the called party's telephone adapter 120 as the GET method response. Then, in the case where the calling and called parties party's telephone adapter 120.

Next, the second phase transmission of relay data will be discussed.

Fig. 15 shows the processing of the second phase transmission of relay data.

In the second phase transmission of voice data, voice data is transmitted between the call relay servers 310 and 320 by using UDP. The calling party's telephone adapter 110 transmits the "calling party's voice data " through the POST method to the call relay server 310 available which is included in the "call relay server response message" acquired from the called party's session managing server 220 through (6) of Fig. 2 or (7) of Fig. 28. The call relay server (of the calling party) 310, upon reception of the POST method, transfers the voice data to the call relay server (of the called party) 320 by using UDP. The called party's telephone adapter 120 transmits the "calling party's voice data" through the POST method to the call relay server 320 available which is included in the "call relay server response message" acquired from the called party's session managing server 220 through (8) of Fig. 2 or (8) of Fig. 28. The call relay server (of the called party) 320, upon reception of the POST method, transmits the voice data received from the call relay server (of the calling party) 310 by using UDP to the called party's telephone adapter 120 as the GET method response. Then, in the case where the calling and called parties party's voice data reception information" as the voice data to be transmitted to the called party's telephone adapter 120 based on the voice data received from the calling party's call relay server 310. The items and contents of the called party's voice data reception information are the same as those of Fig. 14.

It is to be noted that a response to a "UDP transmission" from the calling party is notified or transmitted after transmitting a "called party's voice data reception (GET method)" in reply to the called party.

The processing of call relay management performed by the call relay server is discussed below.

The call relay server starts call relaying upon reception of the calling party's voice data or the called party's voice data from the telephone adapter as a trigger. With this example, the "calling party's voice data" and the "called party's voice data" are the same except for the transmitting sources, and therefore they will be referred to hereinafter as "voice data" as long as it is not necessary to distinguish between them by their transmitting sources.

The call relay server manages the session to be used for call relaying between the "session managing data". The session managing data is generated based on a "server managing data file" which is provided in the call relay server. The "server managing data file" is a file including the limit value of data to be managed by the session managing server and includes data detailed below:
the number of installed call relay servers which are managed by the session managing server;
a maximum number of sessions per call relay server which is managed by the session managing server;
server identification information of an assigned call relay server; and

IP addresses of an assigned call relay server.

The session managing data reads out corresponding data from the above detailed data in the "server managing data file" when the HTTP relay server main process of the call relay server is started, and creates the call relay server managing data and the session managing data on the memory. The session managing data and the call relay server managing data will be elaborated in a later embodiment. The corresponding data mentioned above means that the target is data relating to a corresponding session managing server only, since there are two or more server managing data files per session managing server on a single call relay server.

With a first reception as a trigger, the telephone adapter ID (manufacturer's serial number) of the calling party's telephone adapter as the session ID and an IP address (of either the telephone adapter or the call relay server) are included in the "session managing data".

It is to be noted that no call relay error occurs basically with the call relay server because the session managing server judges the possibility of call relaying. However, in case of an error occurred, the log is outputted so that the administrator is notified of it.

In addition, the system administrator performs a real-time surveillance to check whether the session managing server and the call relay server are operating normally based on such as the rate of CPU load and the state of network packet transmission and reception. Besides, because the server knows the number of call processing being executed at the same time or the presence of call processing errors, it is possible to display the real-time surveillance of the information.

The aforementioned includes the transmitting and receiving procedure of voice data between the calling party and the called party in the internet communication system and the internet calling method. In addition, it includes the descriptions of the functions and operations of the session managing servers of the calling and called parties, the call relay servers, the telephone adapters of the calling and called parties, and the assignment notification server.

### Embodiment 2.

An example of the operational configuration of a system using the internet communication system discussed in the first embodiment is discussed.

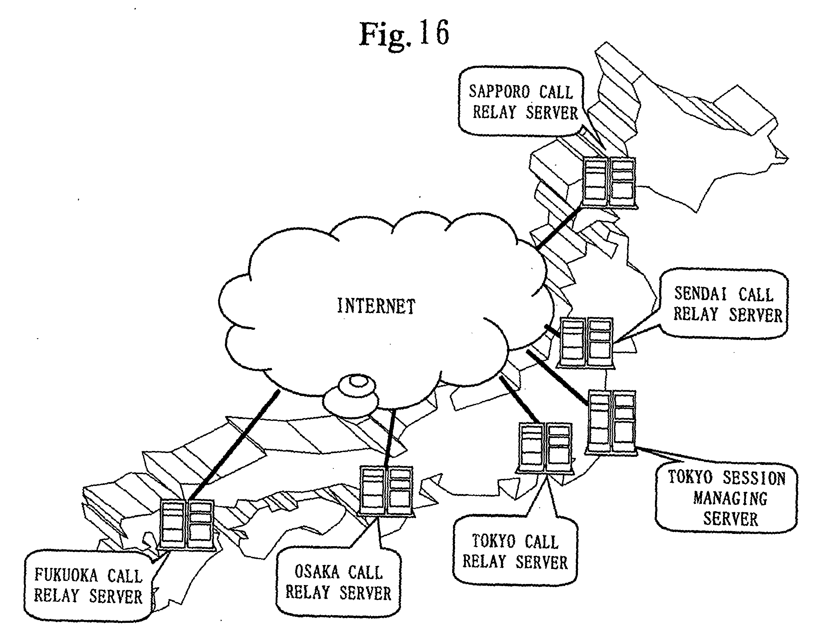

Fig. 16 is a diagram illustrating an example of the operational configuration of an internet communication system according to a second embodiment. The figure shows a diagram illustrating the operational configuration of the internet communication system using a call control central management system.

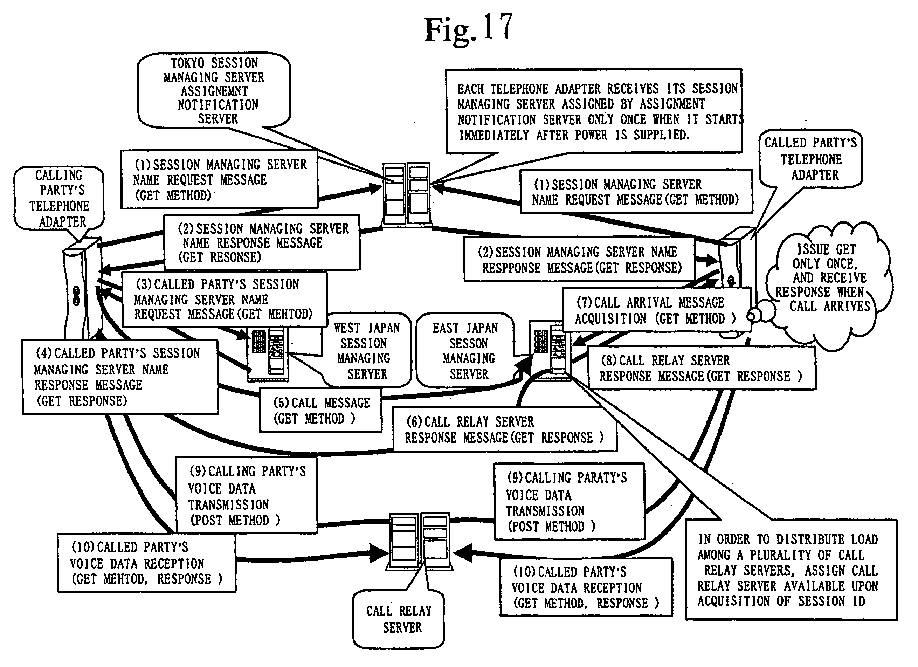

With referring to Fig. 16, several call relay servers are installed throughout the country, and grouped into the areas of western part of Japan and eastern part of Japan. Then, one unit of session managing server is arranged in the western part of Japan and one in the eastern part of Japan, and then a session managing server including an assignment notification server function is arranged in Tokyo. According to the internet communication system having the operational configuration shown in Fig. 16, voice data is transmitted and received between calling and called parties based on procedures illustrated in Fig. 17. The procedures of (1) to (10) of Fig. 17 are the same as those of (1) to (10) of Fig. 2. As alternative procedures to those of Fig. 17, (1) to (10) of Fig. 2 is also applicable. As shown in Fig. 16, the session managing server may be arranged in a predetermined area. This allows telephone adapters assigned to a session managing server so as to be managed according to the area. In the first embodiment, it was explained that the telephone adapter is managed based on the telephone adapter ID (manufacture's serial number). In the case of arranging the session managing servers as shown in Fig. 16, the telephone adapter ID is formed with an "area identifier" and a "telephone adapter identifier". The assignment notification server, upon reception of the session managing server name request message from the telephone adapter, determines the session managing server to which the telephone adapter is assigned based on the "area identifier". According to the case of Fig. 16, the session managing servers are arranged in the western part of Japan and the eastern part of Japan. For that reason, the "area identifier" may be used to determine the session managing server to which it is assigned. Furthermore, the area of the western part of Japan may be divided into segments such as Kyushu block, Kinki block, Sanin block and Shikoku block. Then, a session managing server may be arranged in each block. With this configuration, the "area identifier" may be hierarchized. Then, in the top layer of the hierarchy, an identifier for distinguishing between the western part of Japan and the eastern part of Japan may be arranged, and Kinki block, Sanyo block and Shikoku block may be arranged in a lower layer. This allows determining the session managing server to which a telephone adapter is assigned. Still more, the Tokyo session managing server assignment notification server of Fig. 17 manages a West Japan session managing server and an East Japan session managing server. The West Japan session managing server manages Fukuoka call relay server and Osaka call relay server. The East Japan session managing server manages Sendai call relay server and Sapporo call relay server. In this manner, the call relay servers are managed by the session managing servers which are arranged in nearby areas to the call relay servers according to the area of the call relay server arranged. This allows voice data to be relayed by the relay server which is arranged in the nearest place to the area where the telephone adapter is located.

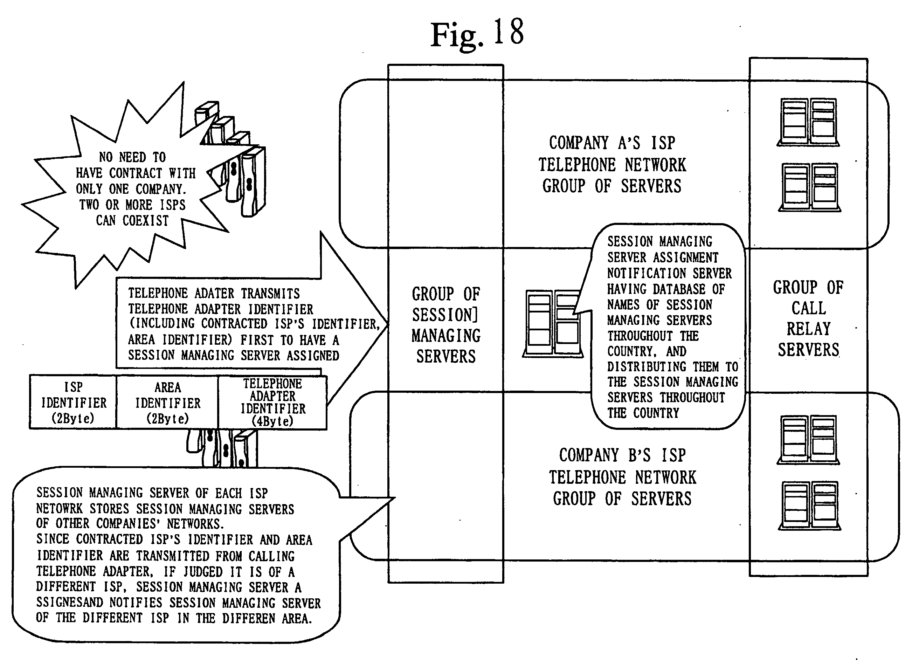

It is also possible as an alternative operational configuration, by tying up with two or more internet service providers (ISP), to install a session managing server and a call relay server in the places where the servers of the respective ISPs are installed, and connect the groups of servers (session managing servers and call relay servers) installed in the respective ISPs with each other over ISP networks. In this case, the telephone adapter ID is formed by an "ISP identifier" and a "telephone adapter identifier". The assignment notification server, upon reception of the session managing server name request message from a telephone adapter, determines the session managing server to which the telephone adapter is assigned based on the "ISP identifier". In addition, in the case where a single ISP manages one or more session managing servers, an "area identifier" is added to the telephone adapter ID, so that the telephone adapter ID is formed with the "ISP identifier", the "area identifier" and the "telephone adapter identifier". The session managing server to which the telephone adapter is assigned is determined based on the "ISP identifier" and the "area identifier". Thus, the internet communication system may be managed by tying up with not only one ISP company but with two or more ISP companies. Still alternatively, it is also possible that a single ISP company handles a plurality of areas by the area identifiers and manages a plurality of session managing servers installed therein. Fig. 18 shows a diagram illustrating the configuration of a system in which the internet communication system is managed with two or more ISPs tied up.

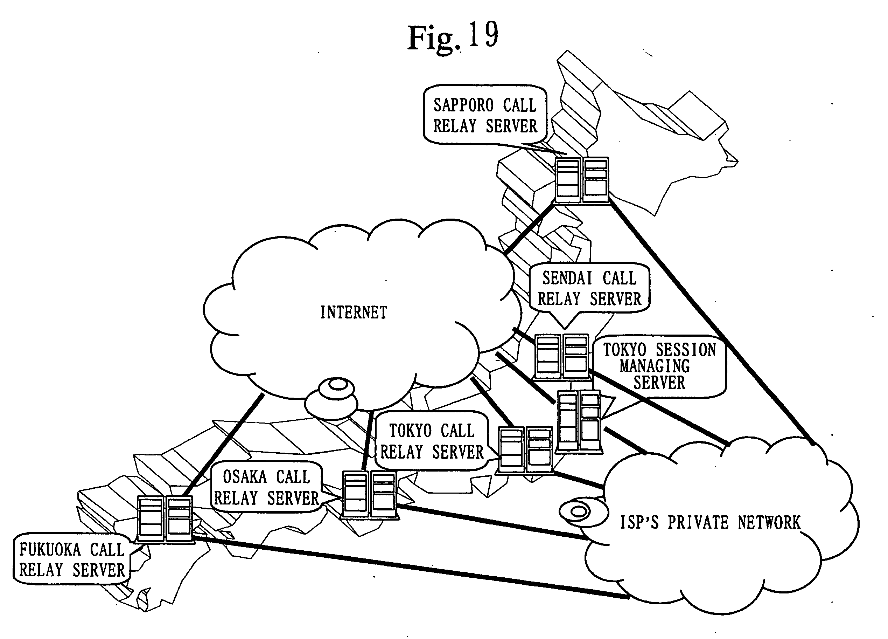

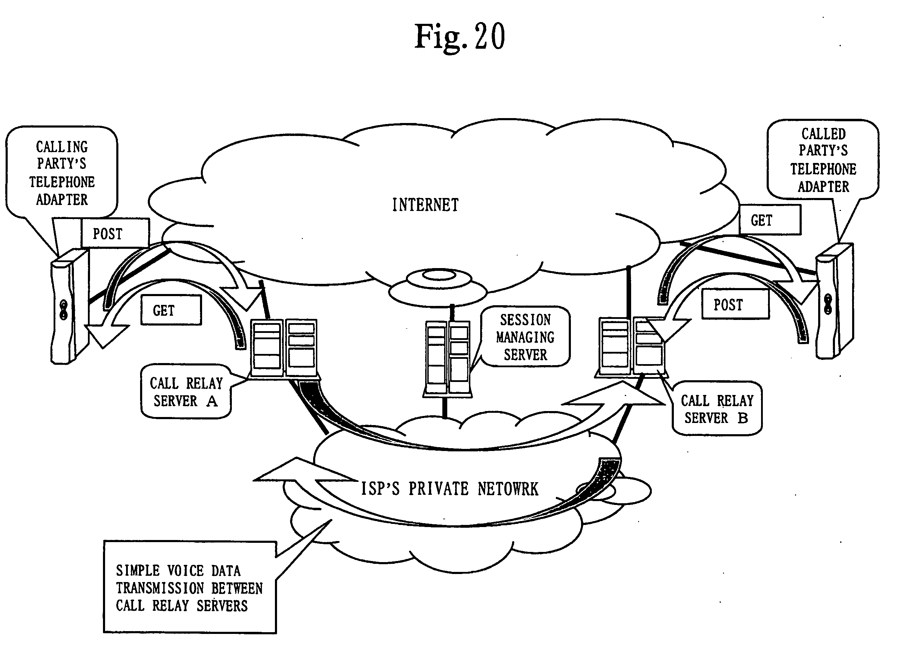

It is to be noted that the session managing servers or the call relay servers which are managed by each ISP may communicate with each other through an ISP network owned by the ISP. In this case, communications through the ISP network between session managing servers, between call relay servers, or between a session managing server and a call relay server, are to be carried out byusingUDP. Alternatively, RTP (Transport Protocol for Real-time Application) or TCP (Transmission Control Protocol) is to be used for carrying out communications. It is beyond question that a similar protocol in another transport layer may alternatively be employed. By thus enabling communications between different ISPs, voice data may be transmitted and received between calling and called parties through call relay servers managed by different ISPs. The telephone adapter and the call relay server communicate with each other over the internet by using HTTP in the same manner as that discussed in the first embodiment. Fig. 19 and Fig. 20 each show an operational configuration of the internet communication system which uses an ISP network. Fig. 19 illustrates that call relay servers and a session managing server are connected respectively with an ISP network. Fig. 20 illustrates an example of transmitting voice data between call relay servers over an ISP network. In the case of transmitting voice data between call relay servers over the ISP network by using predetermined two units out of the call relay servers shown in Fig. 19, a simple voice data transfer is applied to communication between the call relay servers, and "POST (in the case of transmitting data from a telephone adapter to a call relay server)" and "GET (in the case of transmitting data to a telephone adapter from a call relay server)" are applied to communication between the telephone adapter and the call relay server of the calling party, and between the telephone adapter and the call relay server of the called party, as shown in Fig. 20. This has been already discussed in the first embodiment.

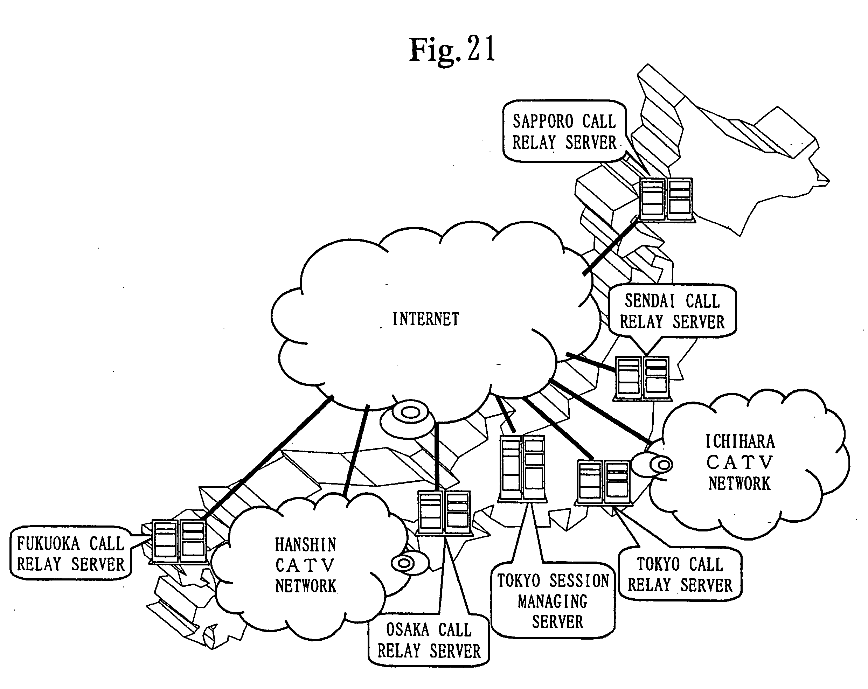

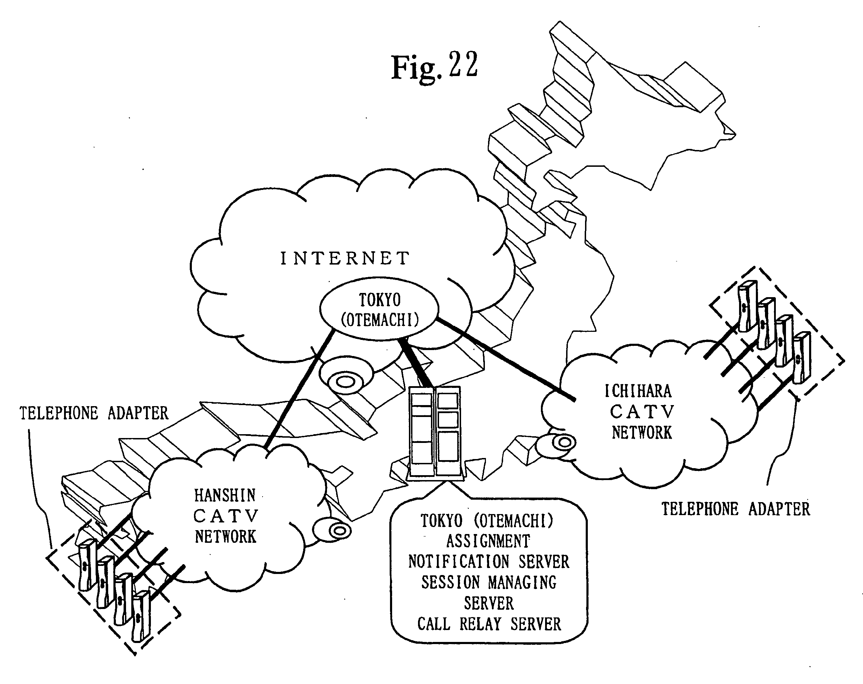

In addition, as an example of the ISP network, a CATV network owned by an internet connection service provided by a CATV (cable television) company may be used to manage the internet communication system. Fig. 21 and Fig. 22 show operational examples of the internet communication system using CATV networks. Fig. 21 illustrates that a nearby call relay server having a wide band connection for a CATV company area is assigned to the CATV area. According to the example of Fig. 21, Tokyo session managing server, in the case where an internet telephone is used between Hanshin CATV and Ichihara CATV, designates Osaka call relay server to be used on the Hanshin CATV side and Tokyo call relay server to be used on the Ishihara CATV side. Between Tokyo call relay server and Osaka call relay server, UDP is used for transmitting voice data. Fig. 22 illustrates an example of managing the system by installing servers (a session managing server, a call relay server and an assignment notification server) grouped in one place, and connecting the place having the group of servers to a CATV network. In the current state of communication network arrangement, as shown in Fig. 22, broadest band communication networks are concentrated in Tokyo (Otemachi), in which, therefore, an assignment notification server, a session managing server, and a call relay server are installed. In addition, in many cases, communications are carried out between CATV networks via Tokyo (Otemachi). For that reason, by installing the servers grouped in Tokyo (Otemachi), band may be secured.

That explains the format of the telephone adapter ID and the management examples of the internet communication system.

### Embodiment 3.

In a third embodiment, a description is given of processes performed by a session managing server.

The session managing servers discussed in the first and second embodiments each perform the "assignment of a call relay server available" and the "management of session IDs" for load sharing and management of call relaying of a call relay server for relaying data between calling and called parties.

There are three processes performed by the session managing server.

One is "call arrival management process" for receiving an inquiry of confirmation for call arrival which is made in a cycle by a telephone adapter to a session managing server to which the telephone adapter is assigned.

A second one is "called party's assigned session managing server search process" for receiving an inquiry for the session managing server to which the called party is assigned at the session managing server to which the self (calling party's telephone adapter) is assigned when making a call. In the called party's assigned session managing server search process, a corresponding sessionmanaging server is searchedfor in response to the inquiry from the telephone adapter, and a response is made with information indicating a session managing server searched out with Fig. 2. With Fig. 28, on the other hand, a call message is transmitted directly to the session managing server searched out, and a response message from the called party's session managing server is received.

A third one is "call management process" for receiving a call request at the session managing server to which the called party is assigned at the start of communication.

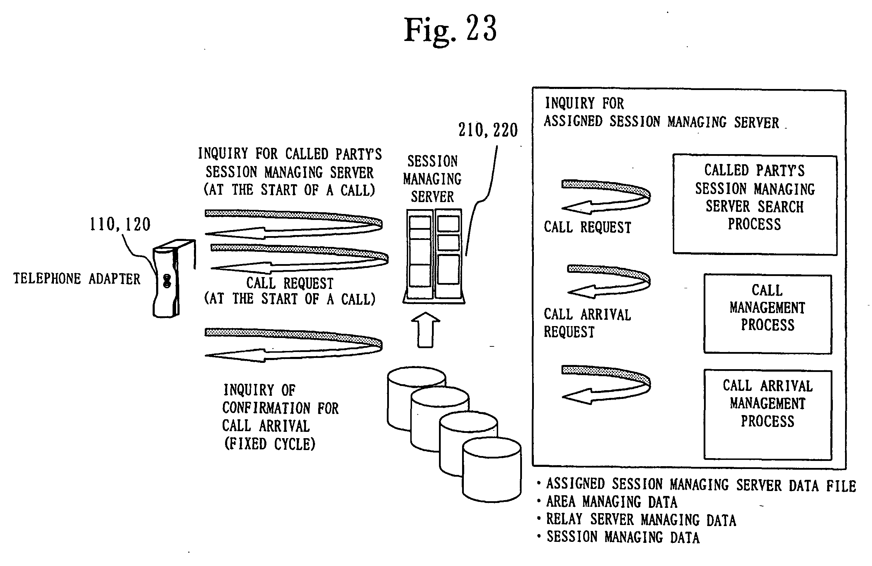

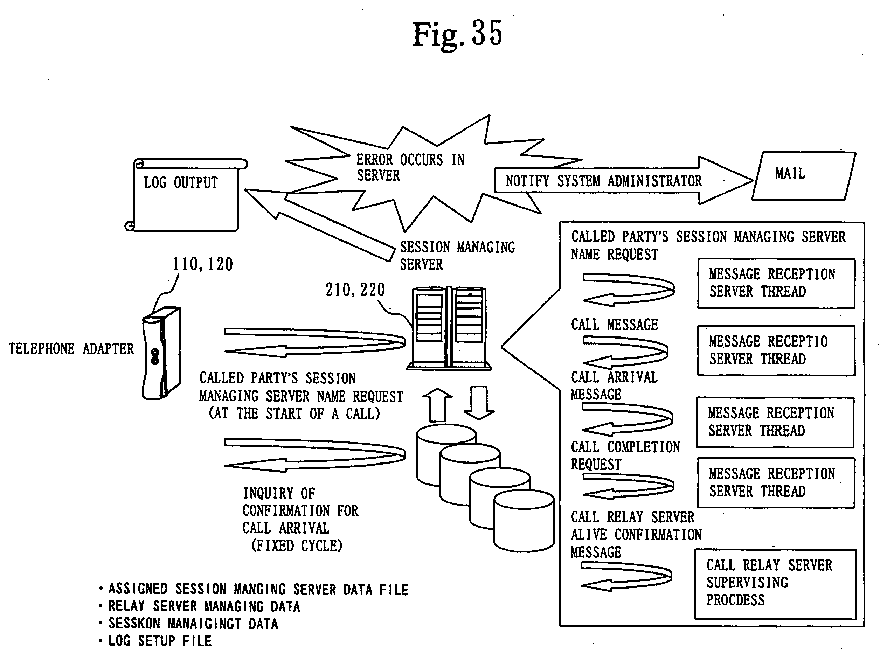

The internet communication system according to this embodiment has a plurality of session managing servers installed. Each session managing server deals with requests and inquiries from the telephone adapters assigned to the session managing server itself, so that the load of each session managing server is shared. Fig. 23 illustrates an environment, which corresponds to the case of Fig. 2, of the session managing server in which the three processes discussed above are executed. Fig. 35 illustrates an environment, which corresponds to the case of Fig. 28, of the session managing server in which the three processes discussed above are executed. With referring to Fig. 23 and Fig. 35, the session managing server carries out the processes by using the "assigned session managing server data file" , the "area managing data" , the "relay server managing data" and the "session managing data".

The "assigned session managing server data file", the "area managing data", the "relay server managing data" and the "session managing data" of Fig. 23 are detailed below. The same applies to those of Fig. 35.

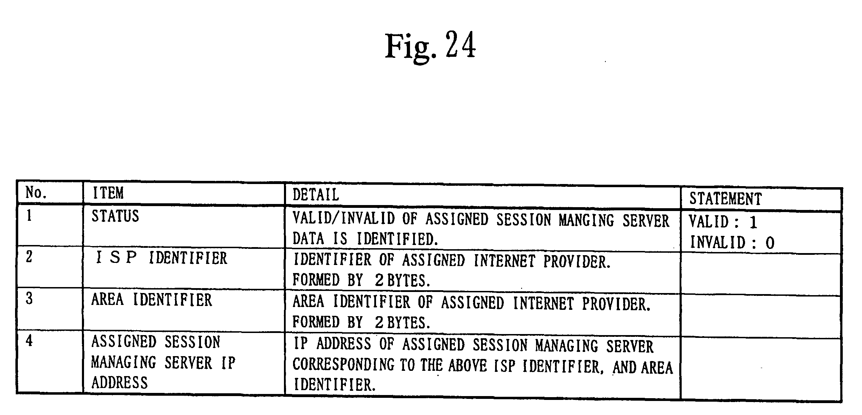

The "assigned session managing server data file" includes items shown in Fig. 24, and is provided for every session managing server. With reference to Fig. 24, "status", "ISP identifier", "area identifier" and "assigned session managing server IP address" are included. The "ISP identifier" is required when a session managing server is managed by two or more ISPs. This assigned session managing server data file is searched so as to determine a session managing server to which the called party's telephone adapter is assigned. Alternatively, the assignment notification server may be provided with the assigned session managing server file, which allows the assignment notification server to reply to the session managing server name request message from the calling party's telephone adapter.

The following details the "area managing data".

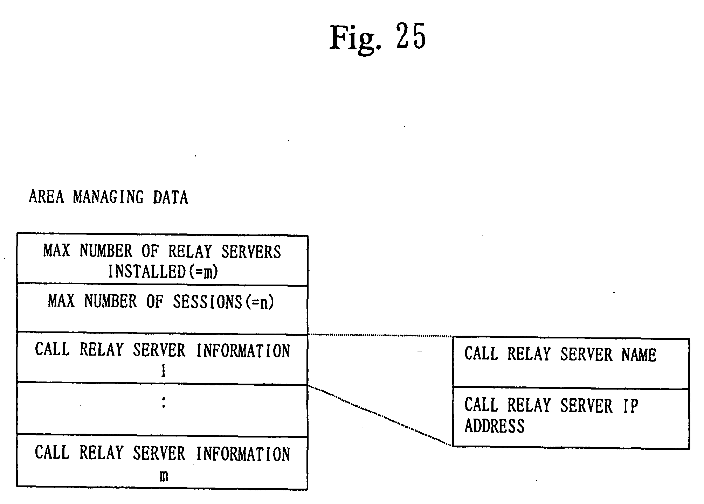

The "area managing data" stores the management information of the call relay server which is managed by the session managing server. Fig. 25 shows an example of the data structure of the area managing data. The session managing server determines candidates for a call relay server for relaying a call based on this area managing data, confirms the state of each call relay server candidate determined, and selects an acting server for relaying the call.

The following details the relay server managing data.

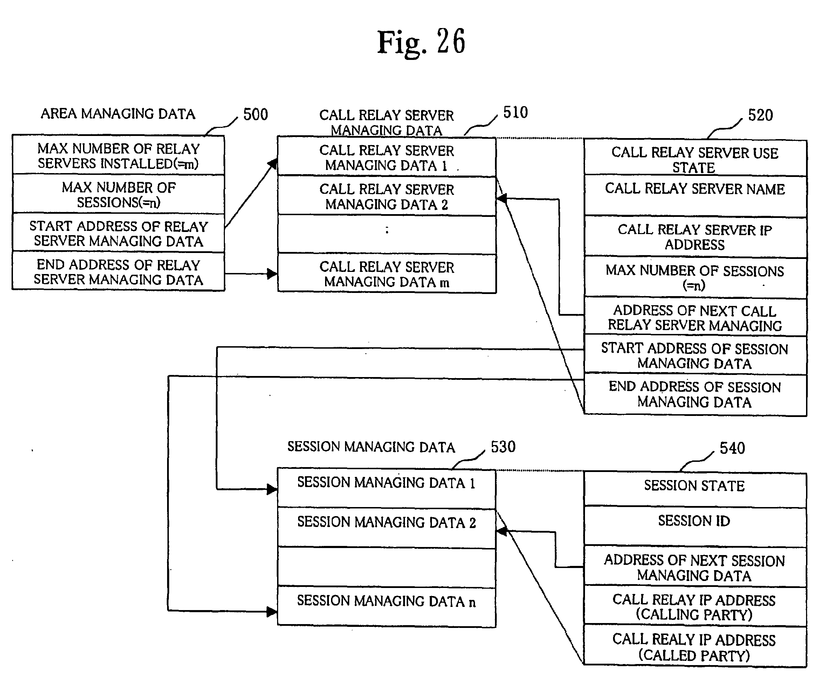

Fig. 26 shows a relation between the area managing data and the relay server managing data and a relation between the relay server managing data and the session managing data. The relay server managing data links to the call relay server management information of the area managing data. The relay server managing data links to a start address and an end address of the relay server managing data and stores call relay server managing data 510 in the case where the area managing data has the structure of area managing data 500 in Fig. 26. Each piece of call relay server managing data has information including "call relay server use status" through "session managing data end address" in data 520.

The session managing data stores session managing data 530 in Fig. 26. The session managing data 530 has information including the "session state" through the "call relay IP address (called party)" of data 540. The session managing data 530 links to the "session managing data start address " and the "session managing data end address" of the call relay server managing data 520.

The session managing server manages the state of the call relay server based on data shown in Fig. 25 and Fig. 26, and searches for a call relay server available and determines it upon reception of a call request made by a telephone adapter.

That explains the function of the session managing server and data stored therein.

### Embodiment 4.

In the first through third embodiments, the internet communication system was discussed in the cases where voice data is transmitted and received between calling and called parities. It is to be noted that the voice data is an example of communication data and that the internet communication system is a system for transmitting and receiving communication data between calling and called parties. Furthermore, the telephone adapter is an example of communication adapter, and the call relay server is an example of communication relay server.

In addition, the "ID" may be any one of such as a name, identification information, an identifier or an IP address as long as it can discriminate itself from others.

In addition, it is to be noted that the system components (the calling party's communication adapter unit 111, 121, the called party's communication adapter unit 112, 122, the calling party's session managing unit 211, 221, the called party's session managing unit 212, 222, the HTTP communication unit 311, 321, and theUDP communication unit 312, 322 of Fig. 1) are executed by software, hardware or a combination of software and hardware.

In addition, it is to be noted that the system components (the calling party's communication adapter unit 111, 121, the called party's communication adapter unit 112, 122, the calling party's session managing unit 211, 221, the called party's session managing unit 212, 222, the HTTP communication unit 311, 321, and the UDP communication unit 312, 322 of Fig. 1) are executed by the process of the program which is executed on a computer.

In addition, it is to be noted that the communication adapter, the session managing server, the assignment notification server and the communication relay server are all computers. Furthermore, the program is executed by the CPU (central processing unit) of a computer.

In addition, it is to be noted that the program is stored in a storage medium such as a FXD (flexible disk) or ROM (read only memory).

### Embodiment 5.

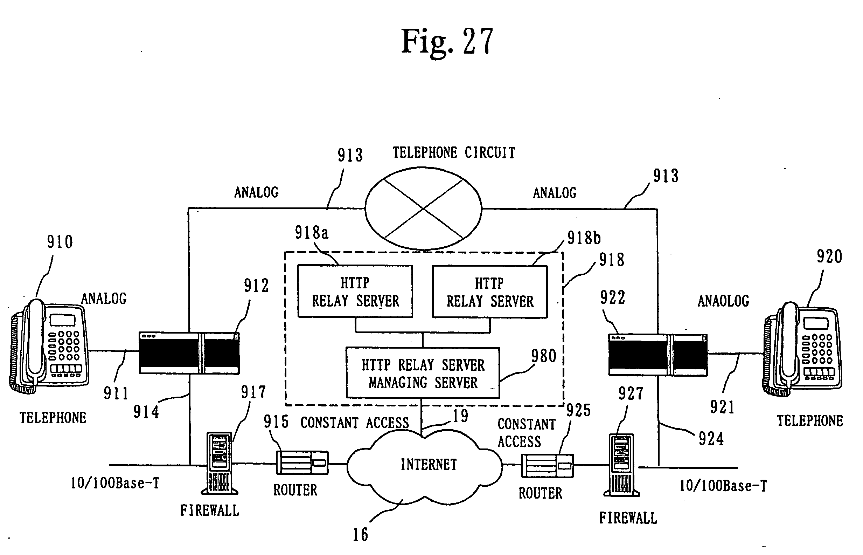

A communication adapter such as that shown in Fig. 27 explained in the conventional example allows a call to be made through a public line other than through an IP line. This case, however, requires exclusive access control in order to avoid parallel processing with a public line based call if the call is to be processed through the IP line as discussed in the first through fourth embodiments of the present invention.

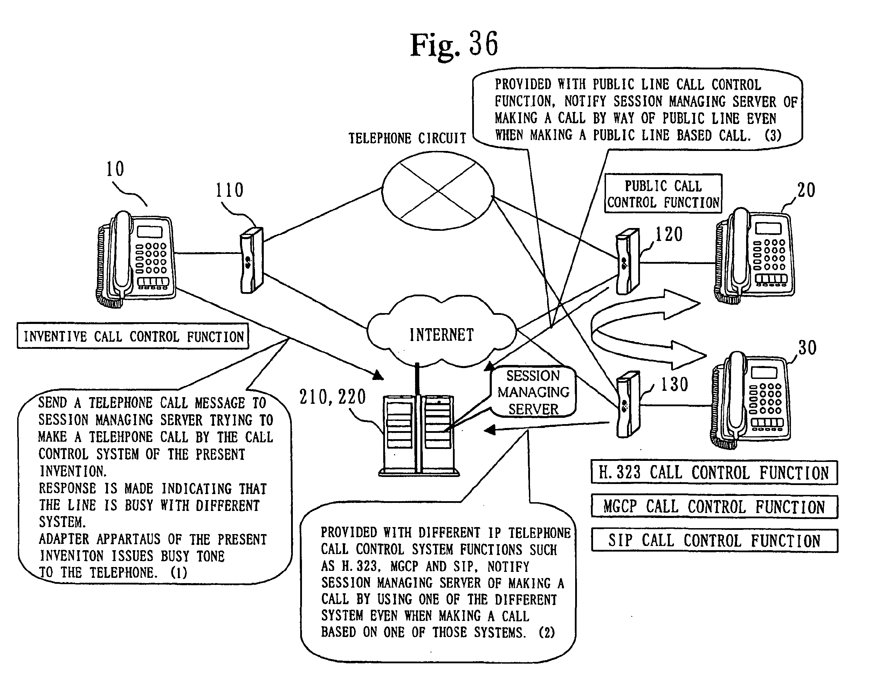

Accordingly, it is designed that a communication adapter, in the case of making a call through a public line, notifies the session managing server which manages the communication adapter and also manages call control on the IP (interne Protocol) line of information about the start and the end of the public line based call at the start and the end of the call, as indicated by (3) in Fig. 36.

In addition, a communication adapter may be provided with a function for allowing a call not only through a public line but also through other IP line based systems such as H.323 system (terminal rules for voice, video and data communications on the LAN whose service quality is not guaranteed), MGCP (Medical Gateway Control Protocol) system, and SIP (Session Initiation Protocol) system. In this case, exclusive access control is to be performed of call processing based on those communication systems. Accordingly, it is designed that a communication adapter notifies the session managing server which manages the communication adapter of information about the start and the end of an IP line based call through such a system as those indicating that the call is being made through the different system at the start and the end of the call through the different system, as indicated by (2) in Fig. 36.

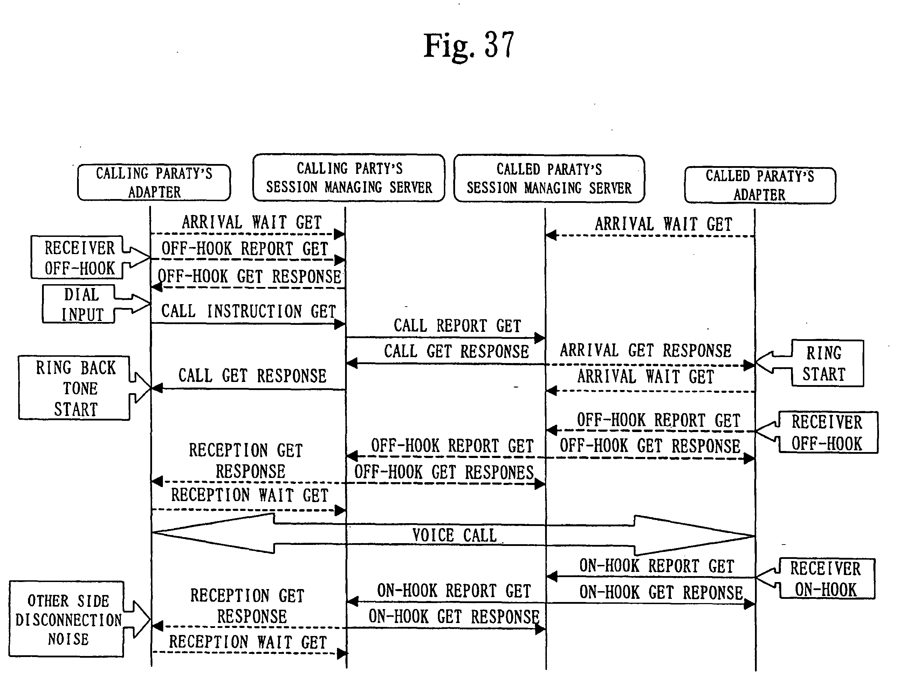

In addition, as indicated by (1) in Fig. 36, the communication adapters which communicate with each other may transmit and receive each other's information about the telephone operations via the session managing server. In this case, if one of the telephones is in a calling state, the other may be controlled to make a ring back tone sound. If the other party picked up the receiver, the call may be started. If the line is cut by the receiver placed on the hook, disconnection noise may be made through the receiver of the other party. Fig. 37 illustrates an example of communication processing of a communication using the GET method of HTTP via the session managing server.

"Receiver off hook", "dial input", "ring back tone start" and "other side disconnection noise" on the left hand side of Fig. 37 and "ring start", "receiver off hook" and "receiver on hook" on the right hand side thereof are telephone operations. A call control message sequence using the GET method of HTTP is indicated by the lines with arrows.

As shown in Fig. 37, the calling party's communication adapter and the called party's communication adapter each issue a GET method notifying the session managing server of the detail of the receiver operations when performing the operation of the "receiver off hook", "dial input" or "receiver on hook". Then, the session managing server, upon notification that the calling party's communication adapter performed the operation of "dial input", transmits a call GET response for performing the operation of "ring back tone start" back to the calling party's communication adapter until it receives an off hook report from the called party's session managing server. When the receiver off hook is notified to the called party's session managing server from the called party's communication adapter, an off hook report is notified to the calling party's session managing server from the called party's session managing server. Then, an arrival get response is sent to the calling party's communication adapter from the calling party's session managing server. After that, voice call is carried out between the calling party's communication adapter and the called party's communication adapter. When the voice call ends, and the called party's communication adapter performs the operation of "receiver on hook", then an on hook report is notified to the calling party's session managing server from the called party's session managing server. Then, the calling party's session managing server notifies the calling party's communication adapter of the arrival GET response, and the calling party's communication adapter makes it transmit a disconnection noise informing that the other party's receiver is placed on the hook or on hook, through the telephone.

As aforementioned, the session managing server is allowed to collect information about the start and the end of a call by a different call control system and the telephone operations through notification from the communication adapter. For that reason, if those pieces of information are outputted and stored as log information when transmitted and received, information about various types of call use used by the user may be collected. As a result, the duration of a call may be confirmed, which may be used as service charge information.

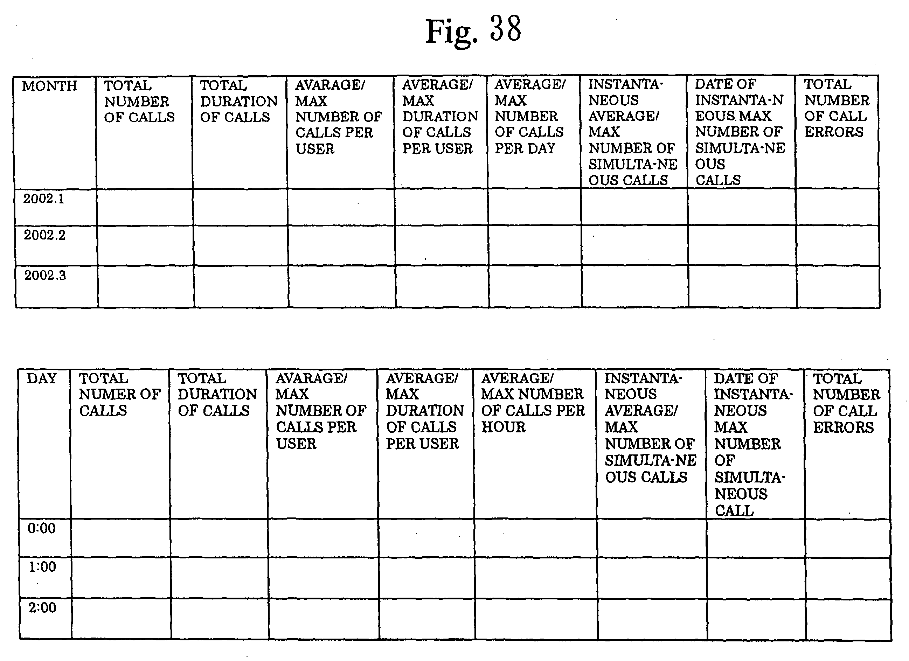

In addition, software for analyzing and arranging this call relating log information may be implemented in such as the session managing server. This may allow the system administrator to refer to call history information by day and by month, as shown in Fig. 38, and check the operating state of the system. Fig. 38 shows an example of tabular display of a day-based summary and a month-based summary. The system administrator is allowed to create a table shown in Fig. 38 (or a corresponding file in such as a CSV (abbreviation of Comma Separated Value) form) based on the respective call information files obtained through a software tool for analyzing the log information of the session managing server, display it through such as the Web browser, and refer to it. The total number of calls and a maximum number of instantaneous and simultaneous calls may alternatively be displayed by graphical representation.

### Embodiment 6.

If every communication adapter is allocated a fixed global IP address, it is basically possible to transmit and receive various types of information directly by using any protocols. However, with Ipv4 (Internet Protocol Version 4), most communication adapters are connected indirectly to the Internet. Therefore, in many cases, the communication adapters are allocated private IP addresses through address translation from the routers having fixed global IP addresses allocated. With those routers, the firewall function for such as blocking access to port numbers not used is set up in many cases together with an address translation function such as NAT (Network Address Translation) and IP Masquerade (Internet Protocol Masquerade).

Furthermore, with an internet line available for ordinary household, a global IP address or a private IP address within a domain is allocated to each household in most cases. For that reason, in many cases, two or more personal computers are connected to the Internet at home by way of a SOHO (Small Office Home Office) router which is designed for home or small sized office use. Also with this SOHO router, address translation is performed, and the firewall function is installed in many cases.

As aforementioned, the general application level communication protocols which may allow the communication adapter whose address translation may be performed twice or more into a private IP address as a result of passing through two or more routers to access an external communication adapter, includes HTTP and SMTP (Simple Mail Transfer Protocol).

In addition, in the current situation where Ipv4 is popular, an IP address, whether it is a global IP address or a private IP address, is allocated dynamically in very many cases. For allocating an IP address thus dynamically, it is designed that the assignment notification server is provided with a DHCP (Dynamic Host Configuration Protocol) server function and each communication adapter is provided with a DHCP customer function.

For that reason, it is substantially impossible in many cases for a communication adapter to employ an IP address as addressing for specifying a destination.

Having mentioned previously, a communication adapter within each domain which is under area management by such as a firewall and a NAT router (referred to in many cases as a SOHO router or a broadband router) communicates with a communication adapter outside the domain or various types of servers in external domains by way of the session managing server and the call relay server installed in the DMZ (De-Militarized Zone) of that domain.

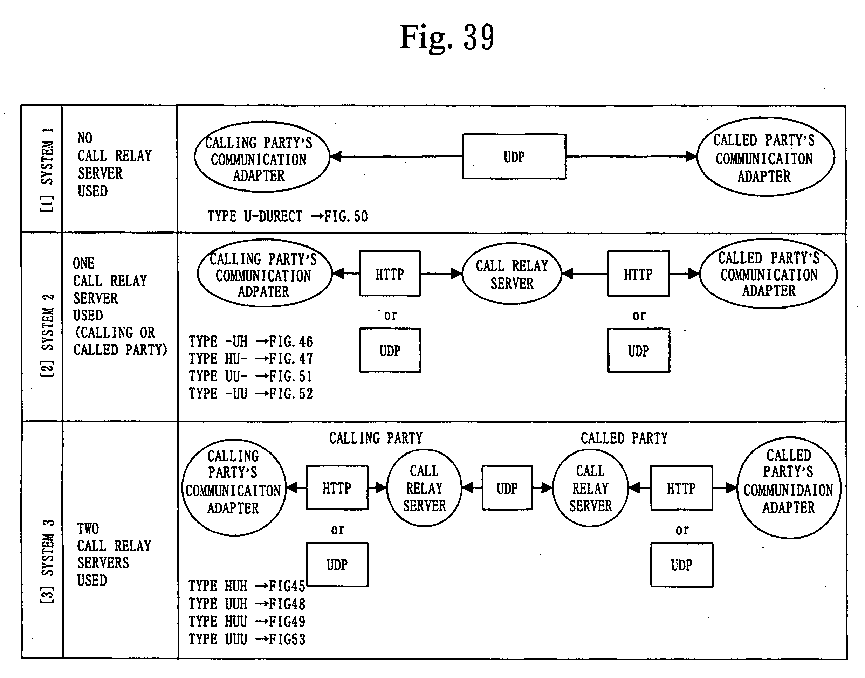

Fig. 39 shows types of call relay systems, namely system 1 to system 3, for real-time data communications between a communication adapter and a call relay server.

With referring to the types of call relay systems of Fig. 39, "System 1" represents the type in which the call relay server is not used, "System 2" represents the type in which a single call relay server is used by one of the calling party and the called party, and "System 3" represents the type in which two call relay servers are used by the calling and called parties, respectively.

With System 1, the calling party's communication adapter and the called party's communication adapter communicate with each other by using UDP. This is called Type "U Direct".

With System 2, the calling party's communication adapter and the call relay server communicate with each other by using HTTP or UDP. Then, the called party's communication adapter and the call relay server communicate with each other by using HTTP or UDP. The call relay server may be used by the called party, the call relay server and the called party's communication adapter may communicate with each other by using HTTP, and the calling party's communication adapter and the called party's call relay server may communicate with each other by using UDP. This is called Type "-UH". The call relay server may be used by the calling party, the calling party's communication adapter and the call relay server may communicate with each other by using HTTP, and the calling party's call relay server and the called party's communication adapter may communicate with each other by using UDP. This is called Type "HU-". Furthermore, the call relay server may be used by the calling party, the calling party's communication adapter and the calling party's call relay server may communicate with each other by using UDP, and the calling party's call relay server and the called party's communication adapter may communicate with each other by using UDP. This is called Type "UU-". Still further, the call relay server may be used by the called party, the called party's call relay server and the called party's communication adapter may communicate with each other by using UDP, and the calling party's communication adapter and the called party's call relay server may communicate with each other by using UDP. This is called Type "-UU".

Then, with System 3, the calling party's communication adapter and the calling party's call relay server communicate with each other by using HTTP or UDP, the calling party's call relay server and the called party's call relay server communicate with each other by using UDP, and the called party's call relay server and the called party's communication adapter communicate with each other by using HTTP or UDP. The calling party's communication adapter and the calling party's call relay server may communicate with each other by using HTTP, and the called party's call relay server and the called party's communication adapter may communicate with each other by using HTTP. This is called Type "HUH". The calling party's communication adapter and the calling party's call relay server may communicate with each other by using UDP, and the called party's call relay server and the called party's communication adapter may communicate with each other by using HTTP. This is called Type "UUH". The calling party's communication adapter and the calling party's call relay server may communicate with each other by using HTTP, and the called party's call relay server and the called party's communication adapter may communicate with each other by using UDP. This is called Type "HUU". The calling party's communication adapter and the calling party's call relay server may communicate with each other by using UDP, and the called party's call relay server and the called party's communication adapter may communicate with each other by using UDP. This is called Type "UUU".

A method of judging used or unused about the call relay server in a call between communication adapters is discussed below.

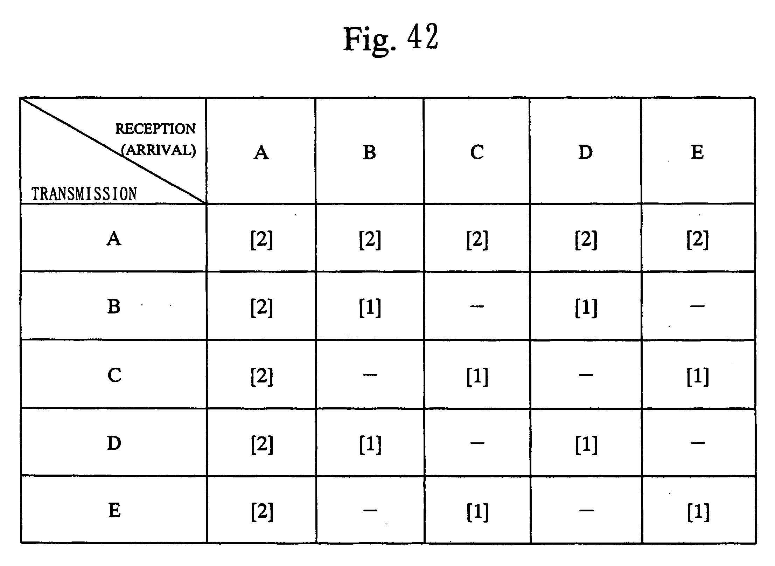

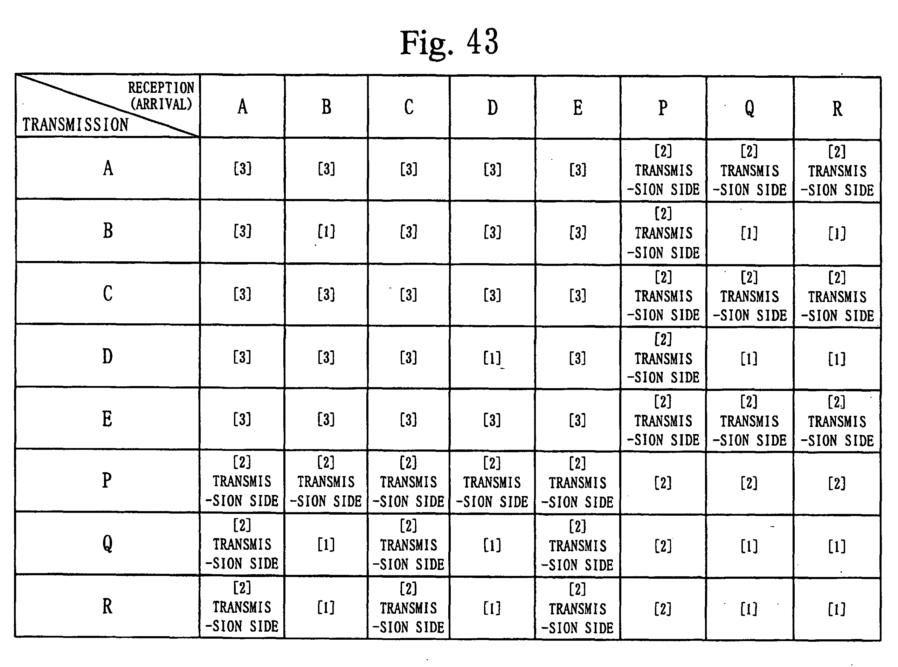

Procedure in the method of judgement is as follows:
(1) It is judged that the domains assigned to the calling party's communication adapter and the called party's communication adapter match or not.
(2) In the case where the assigned domains match, the "call relay server" is judged if it is used or not used based on a "method of intra-domain call relay judgement" shown in Fig. 42.
(3) In the case where the assigned domains do not match, the use or disuse of the "call relay server" is judged based on the server type (general purpose/ISP) of the session managing server and a "method of extra-domain call relay judgement" shown in Fig. 43.

As aforementioned, in the current situation where there are various types of network address environment, any communications may be carried out by using HTTP as a basis. However, it is desirable to use UDP such as RTP wherever possible in real-time communication.

For example, the following shows the cases in which UDP is applicable.
· Every communication adapter is allocated a global IP address (fixed, DHCP).
· Every communication adapter is allocated a private IP address (fixed, DHCP) inside the same domain.
· Firewall may be set up such that a desirable UDP port is accessible.

In various cases such as those mentioned above, the type of the connection terminal of the communication adapter may be prescribed so that UDP can be used as much as possible, and information about the type may be exchanged with each other between the communication adapters while call control is being set up. This enables a UDP based communication.

The following lists access conditions of the communication adapter according to a sixth embodiment of the present invention.
(1) global IP address (fixed)
(2) private IP address (fixed)
(3) global IP address (DHCP)
(4) private IP address (DHCP)

The private IP address in (2) or (4) means an IP address to be allocated within the assigned domain.
(i) When a further localized IP address is allocated by such as a SOHO router within the domain:
   (i-1) A call relay server for managing the domain is installed within the domain.
   (i-2) A call relay server for managing the domain is not installed within the domain.
(ii) When a private IP address allocated within the domain is directly used:
   (ii-1) A call relay server for managing the domain is installed within the domain.
   (ii-2) A call relay server for managing the domain is not installed within the domain.

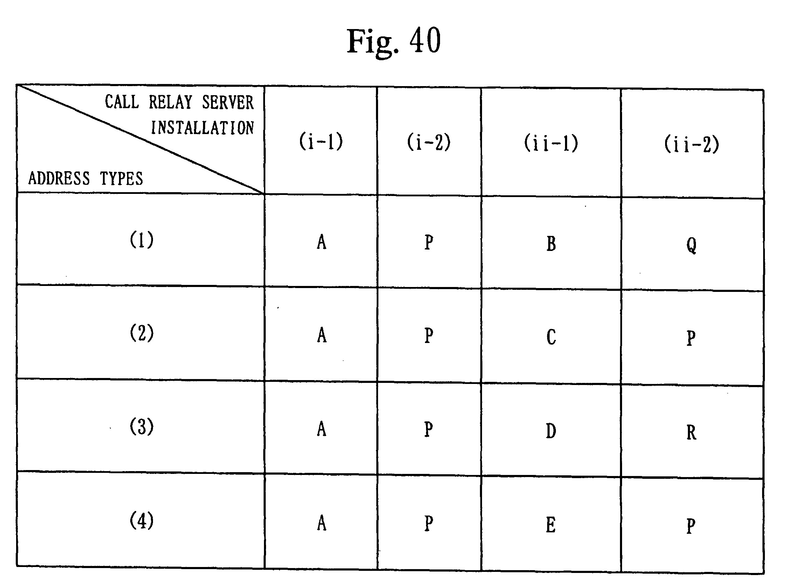

Fig. 40 shows terminal connection types (A - E, P - R) below based on the combinations of conditions (1) to (4) and (i-1), (i-2), (ii-1) or (ii-2) above. In Fig. 40, (1), (2), (3) and (4) and (i-1), (i-2), (ii-1) and (ii-2) correspond, respectively, to (1) to (4) and (i-1), (i-2), (ii-1) and (ii-2).

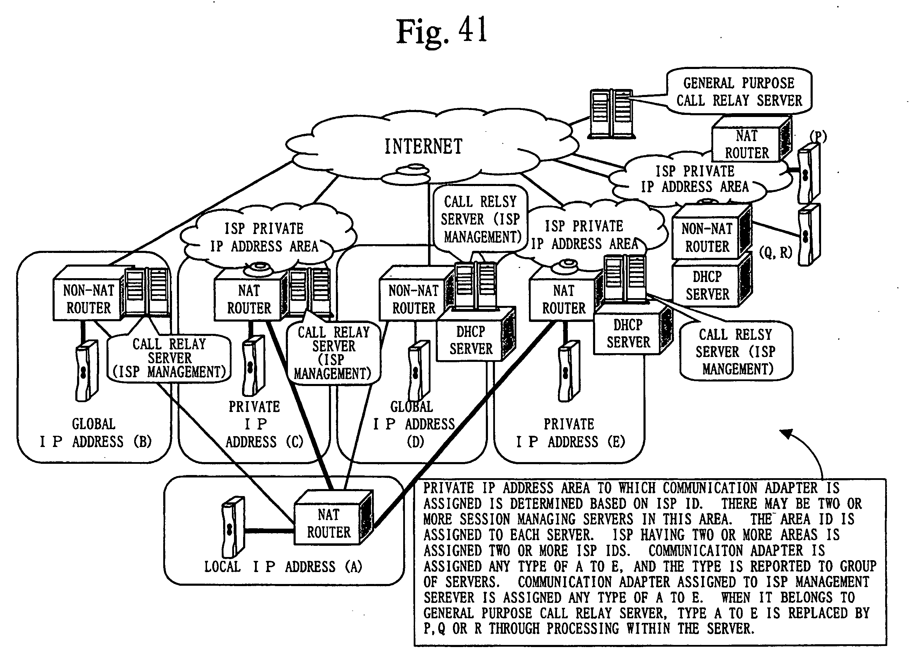

Fig. 41 illustrates connection systems between the communication adapter and the call relay server for each terminal connection type A - E, P, Q, R shown in Fig. 40.

With referring to Fig. 41, a private IP address area to which the communication adapter is assigned is determined by an ISP ID (identification information for identifying an internet service provider). There are two or more session managing servers provided in this area in some cases, and an area ID is assigned to each session managing server. An ISP having two or more areas is assigned two or more ISP IDs. The communication adapter is assigned one of the types of A through E, which is informed to the group of servers. The communication adapter which is assigned to an ISP management server is to be assigned one of the types of A through E. If the communication adapter is assigned to a general-purpose call relay server, the type A-E is replaced by P, Q, R through internal processing in the server.

With the type "B" of Fig. 40, a communication adapter, a router, a call relay server (a session managing server is to be installed also in the same position) and the Internet are connected through a connection mode such as that indicated by (B) in Fig. 41.

Then, with the type "C" of Fig. 40, like (C) shown in Fig. 41, a communication adapter, a call relay server (a session managing server is to be installed also in the same position), a router and the Internet are connected.

Then, with the type "D" of Fig. 40, as indicated by (D) in Fig. 41, a communication adapter, a router, a call relay server (a session managing server is to be installed also in the same position), the Internet and a DHCP server are connected.

Then, with the type "E" of Fig. 40, like (E) in Fig. 41, a communication adapter, a router, a call relay server (a session managing server is to be installed also in the same position), the Internet and a DHCP server are connected.

Then, with the type "A" of Fig. 40, like (A) in Fig. 41, a router connecting a communication adapter is connected with a higher router in the hierarchy, and the higher router and a call relay server are connected to the Internet. With the type "A", the router has a hierarchical structure, in which a communication adapter is connected with a lower layer router. For that reason, an IP address assigned to the communication adapter of this case is to be called a local IP address.

Then, with the type "Q" and the type "R" of Fig. 40, there is no call relay server installed in the domain for managing the domain. For that reason, like (Q) and (R) of Fig. 41, a communication adapter is connected with a router, a DJCP server, a session managing server (a session managing server is to be installed also in the same position), and the Internet.

Then, with the type "P" of Fig. 40, there is no call relay server installed in the domain for managing the domain. On top of it, a private IP address allocated within the domain is directly used. For that reason, a communication adapter is connected to the Internet as indicated by (P) of Fig. 41. Further with the type "P", a communication adapter may be assigned immediately under a SOHO router within the domain. For that reason, It may be considered that a communication adapter is allocated an IP address under the situation where no call relay sever is installed in the domain for managing the domain. In this case, the communication adapter is connected to the Internet as indicated by (P) of Fig. 41.

Next, Fig. 42 and Fig. 43 show tables illustrating relay system judging methods for each terminal connection type.

Fig. 42 shows the method of judging a call relay system in a communication between the parties which belong to the same domain.

In Fig. 42, A through E correspond, respectively, to the A through E of Fig. 40. Then, [1], [2] in Fig. 42 correspond, respectively, to the [1], [2] of Fig. 39.

Fig. 42 illustrates the types of transmitting party's communication adapters vertically and the types of receiving party's communication adapters horizontally.

With referring to Fig. 42, in the case where a calling party's communication adapter and a called party's communication adapter are installed in the same domain, a call between those communication adapters involves no call relay server outside the domain. For that reason, if the type of the calling party's communication adapter matches the type of the called party's communication adapter, a call is to be made through the relay system [1]. In the case where one of the communication adapters of the calling and called parties is arranged immediately under a NAT router and allocated a local IP address, a call is to be made through the relay method [2].

Fig. 43 shows a method of judging a call relay system in a communication between the parties which do not belong to the same domain.

In Fig. 43, A through E and P through R correspond, respectively, to the A through E and P through R of Fig. 40. Then, [1] through [3] in Fig. 43 correspond, respectively, to the [1] through [3] of Fig. 39.

Fig. 43 illustrates the types of transmitting party's communication adapters vertically and the types of receiving party's communication adapters horizontally.

It is to be noted that, with the relay method [2], in order to identify the call relay server to be used whether it is of the transmitting side or of the reception side, (transmitting party) or (receiving party) is added thereto for clarity.

The session managing server acquires information about the terminal connection types of the communication adapters of the calling and called parities in the call control process, determines a call relay system based on the tables of Fig. 42 and Fig. 43, and transmits information about the system to the respective communication adapters. In the case where a call relay server is required, the session managing server notifies the respective communication adapters of the IP address of the call relay server and the assignment of HTTP or UDP.

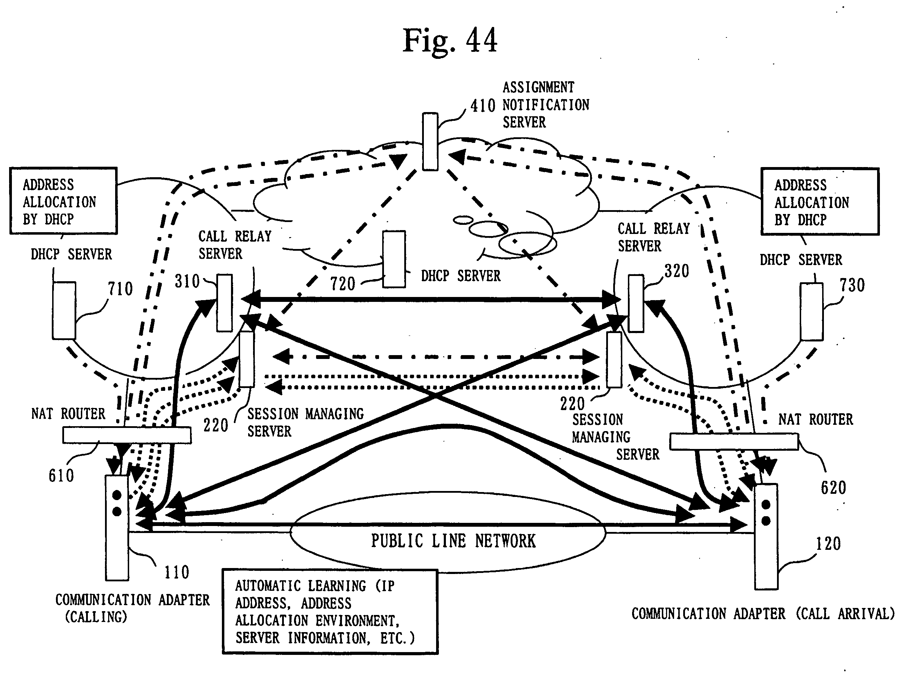

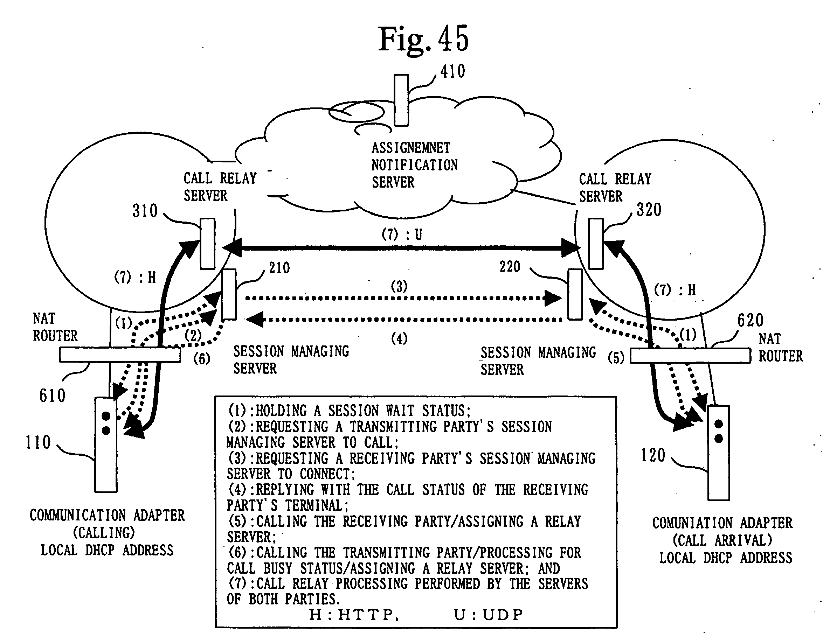

Fig. 45 through Fig. 53 show the transmitting and receiving procedures of call control messages corresponding to the connection types of the respective communication adapters in the system configuration of an internet telephone network system shown in Fig. 44.

It is to be noted that the communication adapter which is arranged immediately under the NAT router is allocated the terminal connection type of A or P, and voice data is transmitted and received by HTTP. However, it is possible that (static) NAT setup is made for a NAT router so that the NAT router transmits and receives voice data using UDP via a UDP port directly to and from the communication adapter. In other words, it is allowed to transmit and receive voice data by using UDP between the communication relay server and the NAT router. For that reason, it is desirable that the communication adapter should just set up a terminal connection type not of A or P but of B, C, D, E, Q or R corresponding to the location of the NAT router. This allows UDP based voice data transmission and reception even in the case where the communication adapter is connected immediately under the NAT router. As a result, the call quality is enhanced.

Fig. 45 illustrates a message transmitting and receiving procedure according to Type "HUH" of the system 3 shown in Fig. 39.

With the message transmitting and receiving procedure according to Type "HUH", a message is transmitted and received through the procedure from (1) to (7) shown in Fig. 45. The following details the procedure from (1) to (7).

It is to be noted that "H" in Fig. 45 indicates an HTTP based communication and "U" indicates a UDP based communication.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning a relay server; and
(7) call relay processing performed by the servers of both parties.

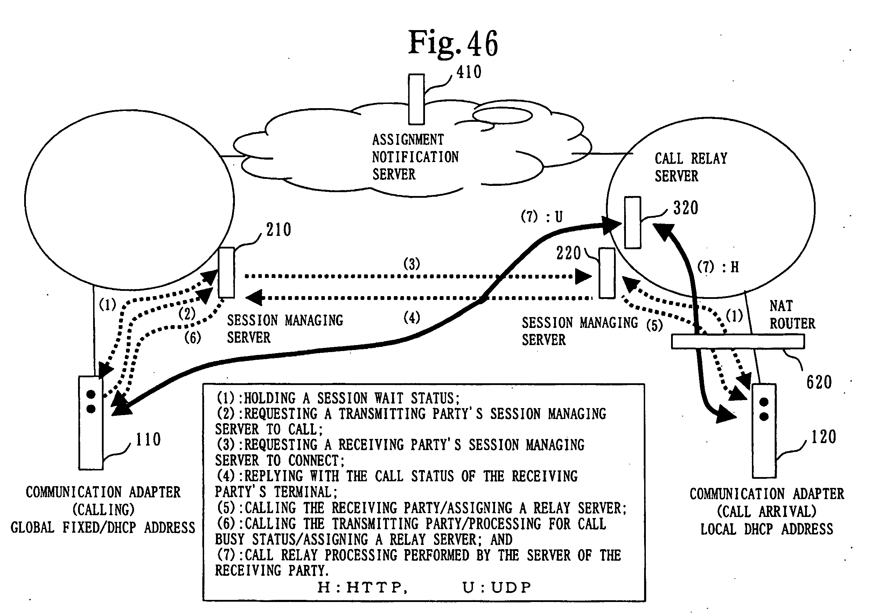

Fig 46 illustrates a message transmitting and receiving procedure according to Type"-UH" of system 2 shown in Fig. 39.

With Type "-UH", a message is transmitted and received through the procedure from (1) to (7) below.

It is to be noted that "H" in Fig. 46 indicates HTTP and "U" indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning a relay server; and
(7) call relay processing performed by the receiving party's server.

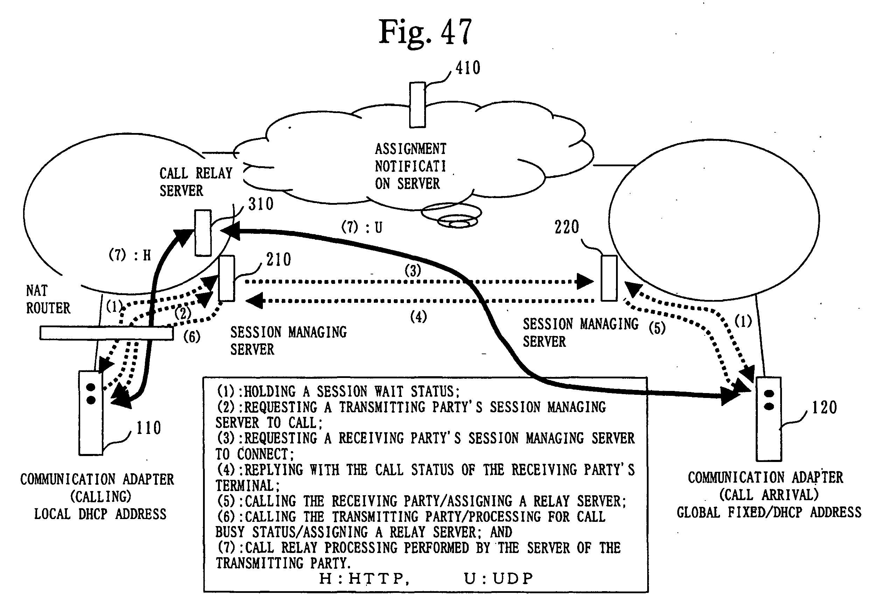

Fig. 47 illustrates a message transmitting and receiving procedure according to Type "-HU" of system 2 shown in Fig. 39.

With Type "-HU", a message is transmitted and received through the procedure from (1) to (7) below.

It is to be noted that "H" in Fig. 47 indicates HTTP and "U" indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning a relay server; and
(7) call relay processing performed by the transmitting party's server.

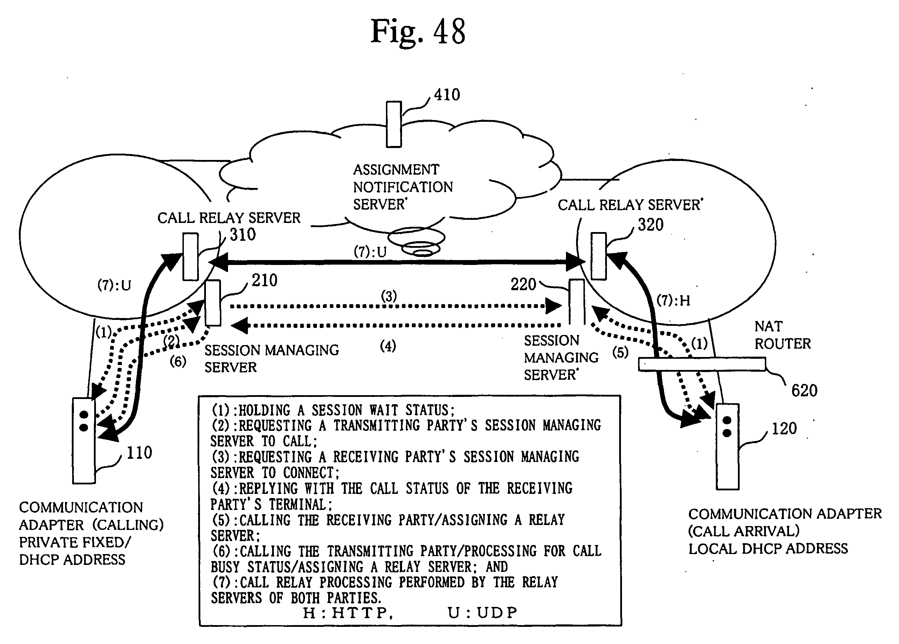

Fig. 48 illustrates a message transmitting and receiving procedure according to Type "UUH" of system 3 shown in Fig. 39.

With Type "UUH", a message is transmitted and received through the procedure from (1) to (7) below.

It is to be noted that "H" in Fig. 48 indicates HTTP and "U" indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning a relay server; and
(7) call relay processing performed by the relay servers of the both parties.

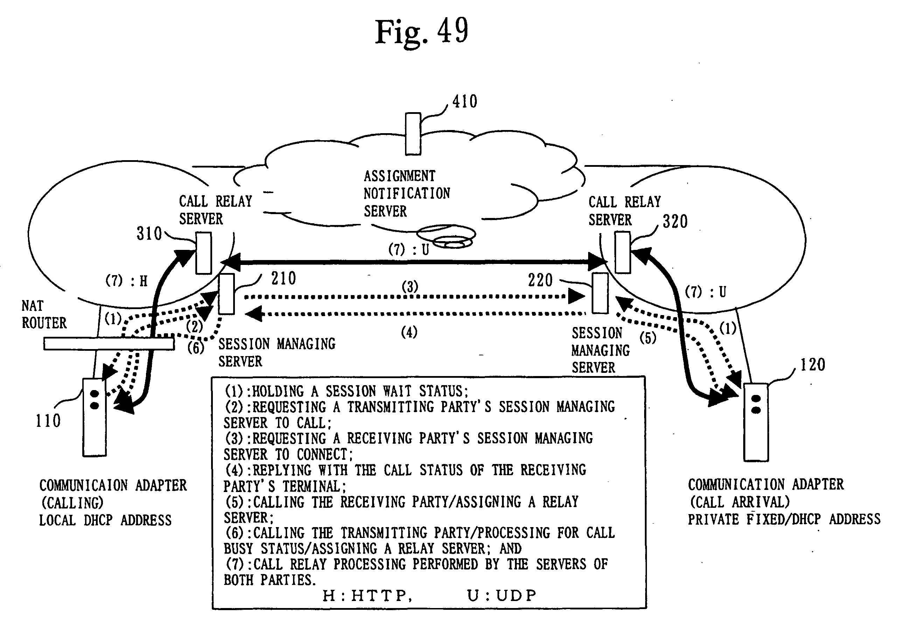

Fig. 49 illustrates a message transmitting and receiving procedure according to Type "HUU" of system 3 shown in Fig. 39.

With Type "HUU", a message is transmitted and received through the procedure from (1) to (7) below.

It is to be noted that "H" in Fig. 49 indicates HTTP and "U" indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning relay server; and
(7) call relay processing performed by the servers of both parties.

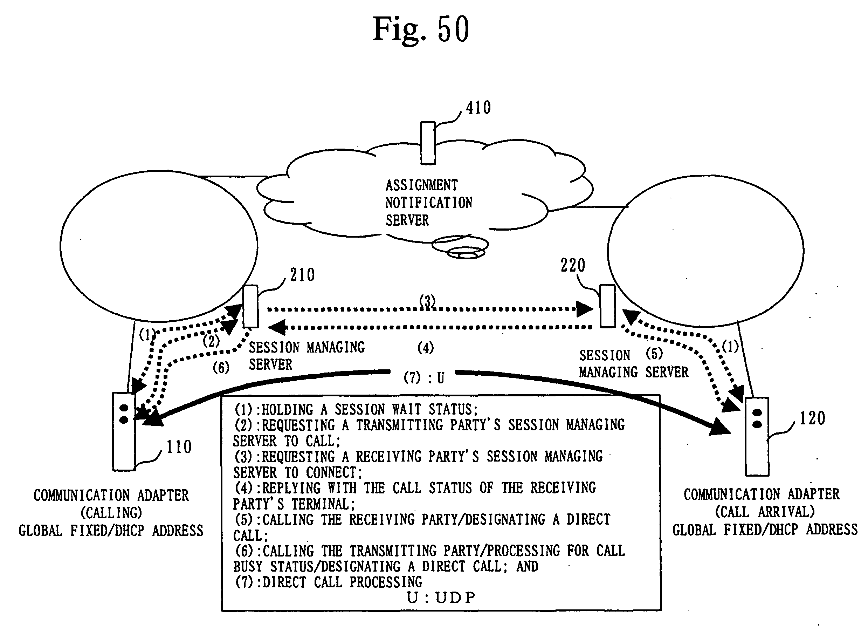

Fig. 50 illustrates a message transmitting and receiving procedure according to Type "U Direct" of system 1 shown in Fig. 39.

With Type "U Direct" , a message is transmitted and received through the procedure from (1) to (7) below.

It is to be noted that "U" in Fig. 50 indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/designating a direct call;
(6) calling transmitting party/processing for the call busy status/designating a direct call; and
(7) direct call processing.

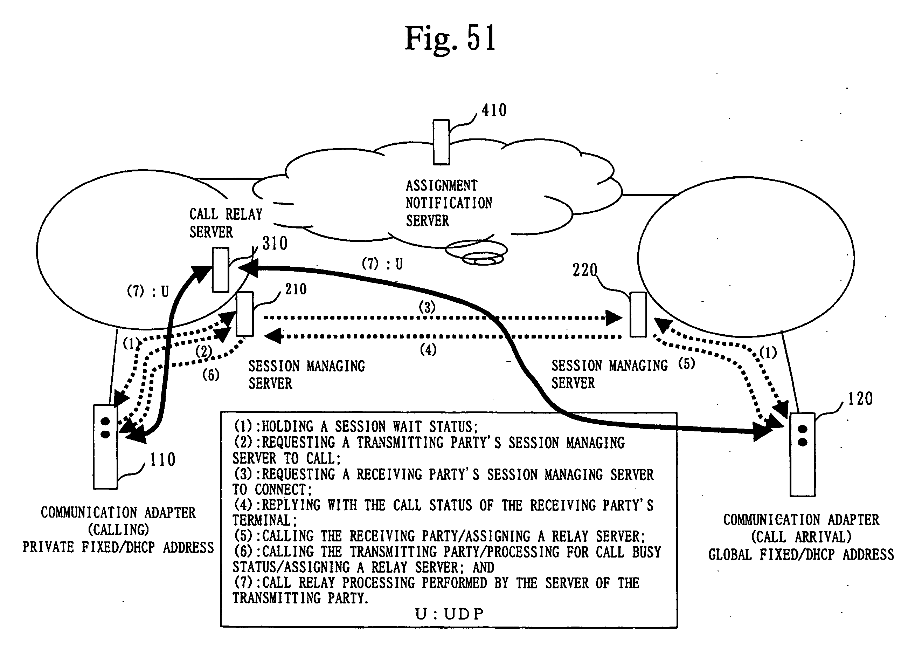

Fig. 51 illustrates a message transmitting and receiving procedure according to Type "UU-" of system 2 shown in Fig. 39.

With Type "UU-", a message is transmitted and received through the procedure from (1) to (7) below.

It is to be noted that "U" in Fig. 51 indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning a relay server; and
(7) call relay processing by the receiving party's server.

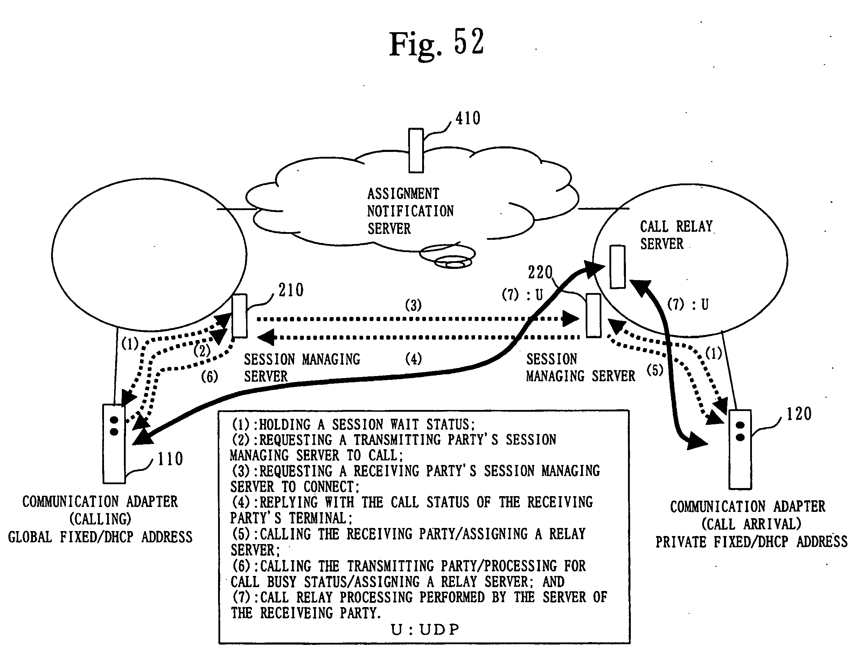

Fig. 52 illustrates a message transmitting and receiving procedure according to Type "-UU" of system 2 shown in Fig. 39.

With Type "-UU", a message is transmitted and received through the procedure from (1) to (7) below.

It is to be noted that "U" in Fig. 52 indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning a relay server; and
(7) call relay processing by the receiving party's server.

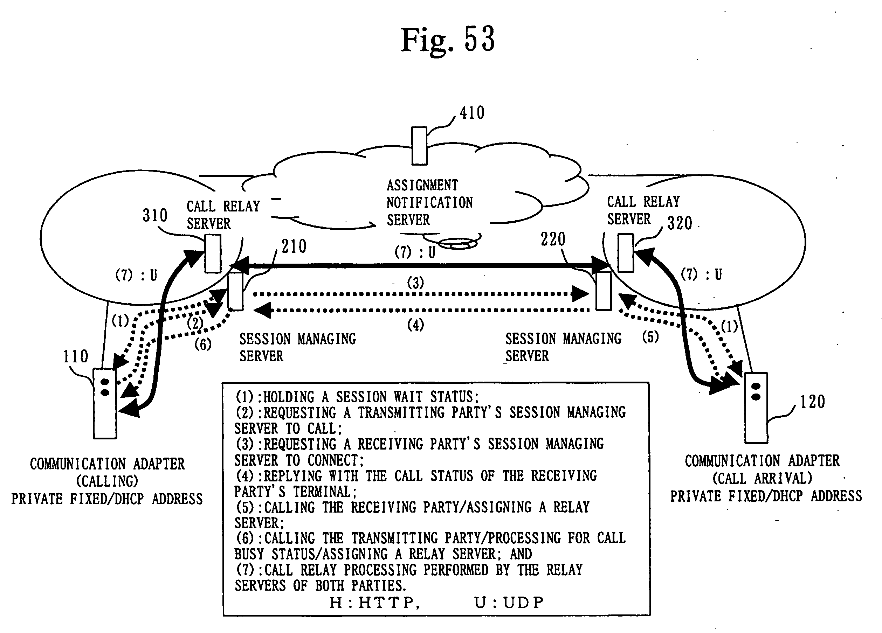

Fig. 53 illustrates a message transmitting and receiving procedure according to Type "UUU" of system 2 shown in Fig. 39.

With Type "UUU", a message is transmitted and received through the procedure from (1) to (7) below.

It is to be noted that "U" in Fig. 53 indicates UDP.
(1) holding a session wait status;
(2) requesting a transmitting party's session managing server to call;
(3) requesting a receiving party's session managing server to connect;
(4) replying with the call status of the receiving party's terminal;
(5) calling the receiving party/assigning a relay server;
(6) calling the transmitting party/processing for the call busy status/assigning a relay server; and
(7) call relay processing by the relay servers of both parties.

### Embodiment 7.

In a seventh embodiment, a description is given of an example in which the assignment notification server provided with a remote control maintenance server function acts as a remote control maintenance server.

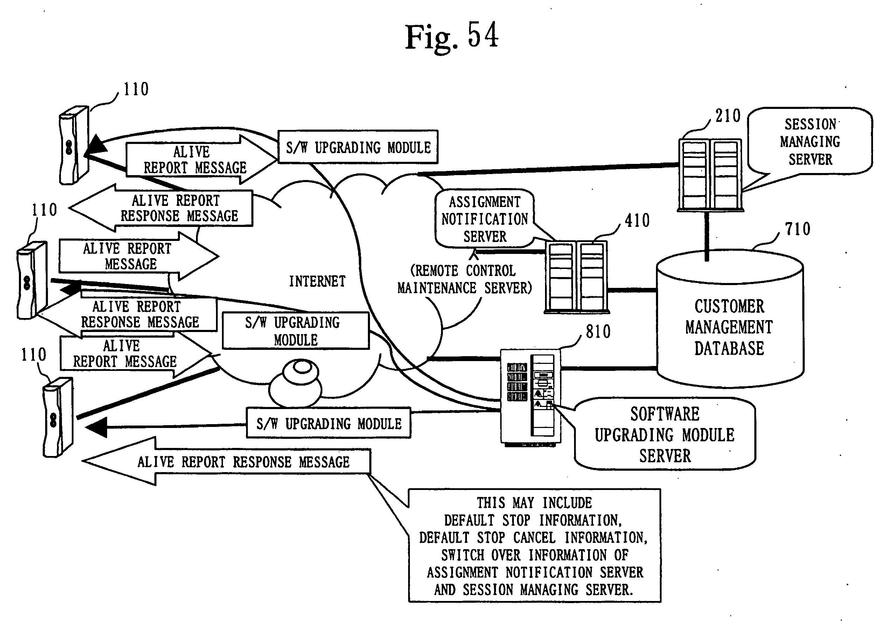

As shown in Fig. 54, when the telephone adapter is connected to the Internet and the power is turned ON, it transmits an alive report message (manufacture's serial number, IP address, information of confirmation for normal operation) to the remote control maintenance server in a fixed cycle (e.g., once per day).

The remote control maintenance server confirms a new item in the alive report message, and registers it in a customer management database. The remote control maintenance server then checks the alive report together with registered items whether they are of normal or not. The contents of this alive report may include the addition that the hardware of the telephone adapter is partially damaged. Once such an abnormal state is identified, the administratorwho manages the assignment notification server may report the user of the abnormal state of the telephone adapter apparatus and start a procedure for replacing it with a substitute and the like.

As an alive report message, information about whether the assignment notification server or the like is operating normally or not may be sent back as a response message in the case of using the GET method of HTTP. In this case, by notifying the telephone adapter side of the abnormal condition of such as the assignment notification server or the session managing server, an error message may be displayed on the display unit of the telephone adapter. Alternatively, the user may be notified of the condition by hearing through the receiver with such a message as "Due to a failure on the server side, you will be put through via the public line".

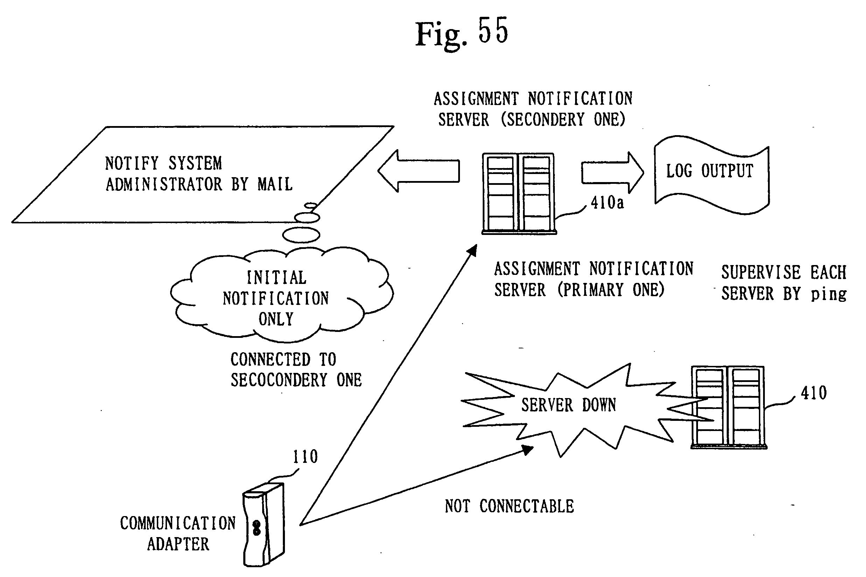

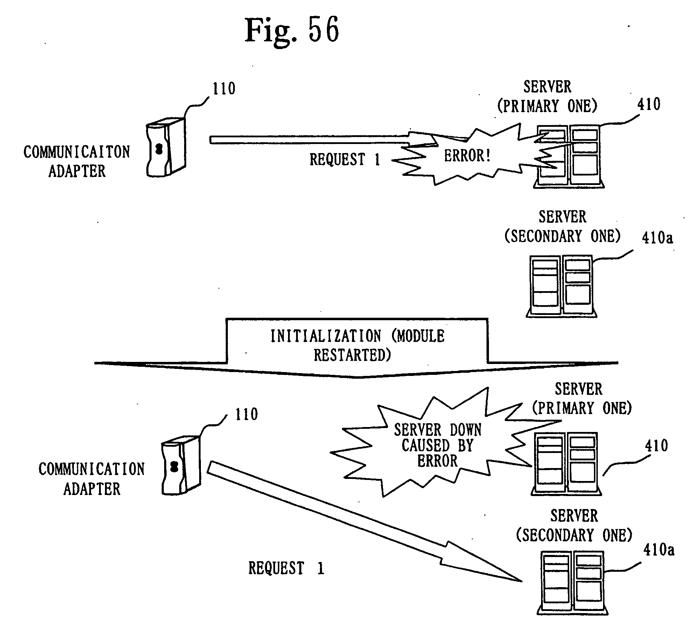

On the other hand, with referring to the assignment notification server and the session managing server, it is possible to have a redundant system provided in case that the hardware breaks down. In this case, assuming that primarily used assignment notification server and session managing server are called primary servers, ones which may be used as backups are set up as secondary servers. In addition, when each server's IP address is notified to the assignment notification server as the response message to the alive report response message, it may be sent to both the primary one and the secondary one. Alternatively, the redundant system is not limited to the primary and the secondary, but may have three or more servers. Fig. 55 and Fig. 56 show how the secondary server is replaced for the primary server when it breaks down.

In addition, according to this embodiment, it is assumed that the internet telephone network system is used for accounting. For this accounting operation, as shown in Fig. 54, a customer management database 710 is provided. This customer management database 710 manages the payment of service charges. Then, in the case of default in payment being confirmed, when the assignment notification server receives the alive report message, the customer management database 10 disenables reception in an HTTP relay on the session managing server side, or disenables the operation of the telephone adapter directly by the response message to the alive report message. Subsequently, if a customer paid the charge, and a paid-up registration has been made in the customer management database, then the setting of disenabled use is canceled when the alive report message is transmitted again to the assuagement notification server.

In addition, the alive report message to the assignment notification server is used for another purpose, that is, the software version management of the telephone adapter. When the software of the telephone adapter needs upgrading, the download version upgrading process of software upgrading module server 810 is started from the assignment notification server based on a customer management database 710 through remote control. Or, a version upgrading command is inputted through the telephone by the customer so that it is downloaded to the telephone adapter. It is to be noted that, in the former case, since the software upgrading of the telephone adapter is made purely depend on the administrator's convenience, the user is not allowed to use it during the upgrading in process. For that reason, while the user is engaged in a call, the software upgrading is to be delayed until the calling process ends. In addition, the telephone adapter may be provided with the user interface which allows the operation below. Before performing the upgrading, the user may be reported by means of a display device or a speaker device of the start of upgrading. If the user is not willing to have the upgrading for reasons of his/her own, then the process of upgrading is stopped.

Thus, the system administrator is allowed to perform downloading through remote control for a telephone adapter owned by the user by way of the assignment notification server. Also, it is possible by using the same mechanism that a self-diagnostic program is executed on the telephone adapter, and resultant information is transmitted to the assignment notification server side. Similarly, it is also possible that an optional self-diagnostic program for acquiring more detailed information based on the resultant information is executed through remote control, and that fault information is sent to the user.

### Embodiment 8.

The telephone adapter is not substantially allowed to make a phone call byway of the IP line if it is not allowed to communicate with the session managing server or the call relay server which manage call control. In light of the above, according to the call control of this embodiment, it is designed that when an IP line based call is not allowed, the user is informed accordingly by way of a telephone adapter or the user interface of a telephone. Artificial voice may be used as one of the methods to inform through the receiver of a telephone that an IP line based call is not available. Artificial voice may be produced by the method in which a human voice message is recorded in advance, and its digitized information is stored in a server or a memory in a telephone adapter and then reproduced. As another method, voice sound may be artificially synthesized from the text data of a message and then produced. Alternatively, it is also possible to use the display unit of a telephone adapter to inform of it similarly. In addition, this telephone adapter may also be provided with a public line based call function in addition to the IP line based call function so that in case that an IP line based call is not allowed, a public line based call may automatically be started.

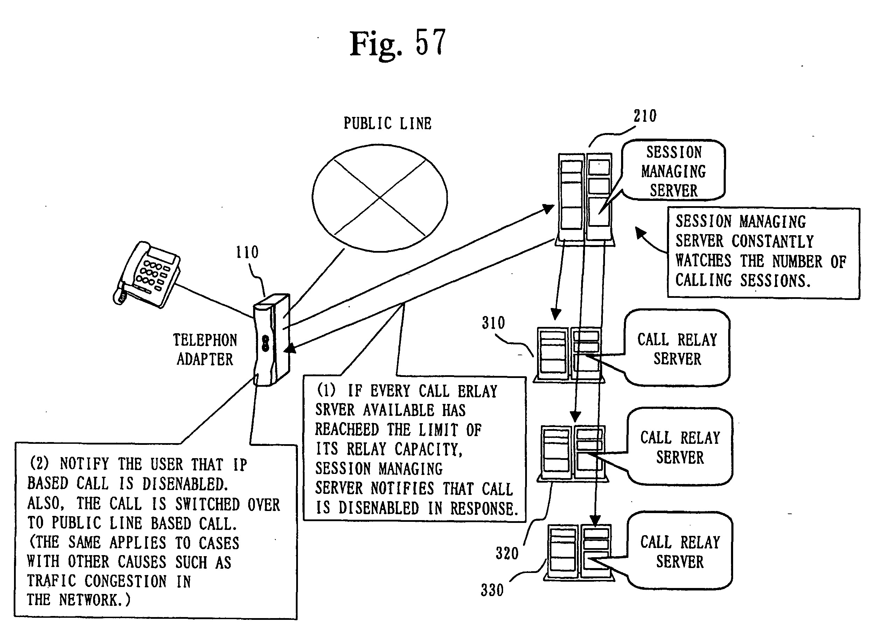

As shown in Fig. 57, the session managing server constantly counts the number of call sessions of the call relay server which it manages. For that reason, the session managing server is allowed to confirm that the call relay server has performed the process of call relaying up to the limit of its call capacity for relay ((1) in Fig. 57). In that situation, the call relay server cannot afford of relaying a call any more by way of the IP line. Consequently, it may be designed that the disenabled IP line based call is notified to the user, or the call is switched to a public line based call ((2) in Fig. 57) as aforementioned.

A warning message to be sent to the user about such as an abnormal state of the telephone adapter is summarized below.
(1) Such as an abnormal state is informed by means of such as Light Emitting Diode, a liquid crystal display, and buzzer.
(2) During a call, a message of such as warning is reproduced through the receiver. The samples are listed below.
   (A) Your setting is wrong. Please reset.
   (B) Since the network is congested, you will be connected through the public line.
   (C) Since the relay station is congested, you will be connected through the public line.
   (D) You will be put through by the IP telephone, but since the network is congested, voice may be heard in poor quality.
   (E) Since network is becoming congested sharply, the line will be disconnected for now. Please call later.
   (F) Since the network is becoming congested sharply, the communication route will be changed. Please wait for a while. (Some time later after processing.) Now, I will put you through.

### Embodiment 9.

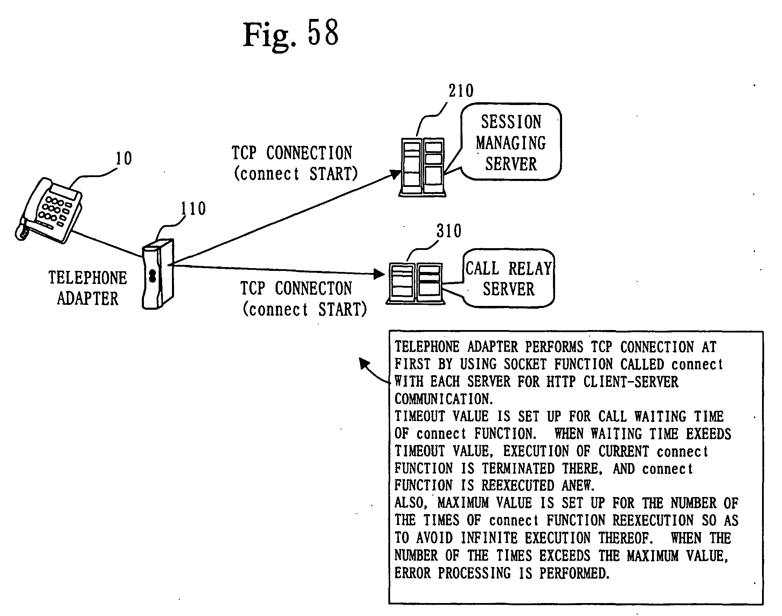

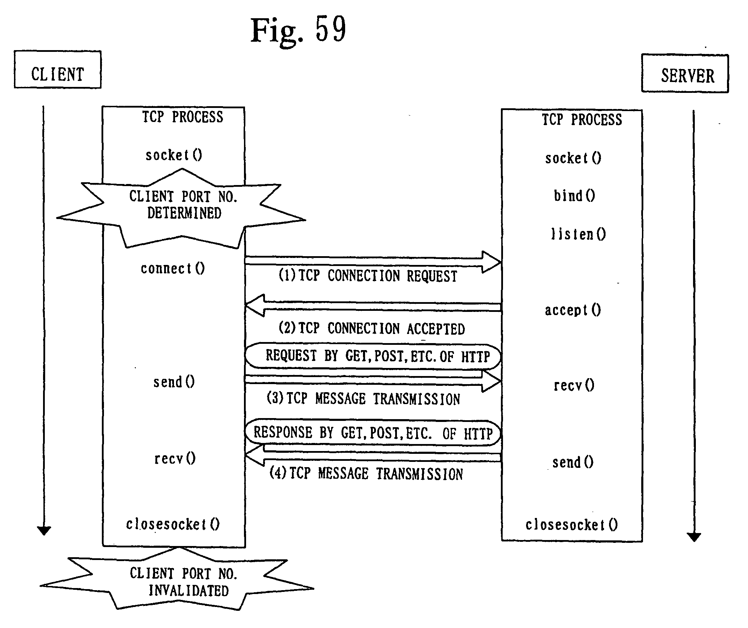

According to this inventive system, the telephone adapter communicates with the session managing server or the call relay server which manages call control by using HTTP. For that reason, TCP based communication is executed at the start of communication as shown in Fig. 58. The telephone adapter 110 executes a TCP connection to each server by using a socket function called "connect" in the first place for an HTTP communication from a client to a server. A timeout value is set up for connect function call waiting time. When the waiting time exceeds the timeout value, the current execution of the connect function is terminated there, and the execution of the connect function is restarted. In addition, an upper limit value is set up also for the number of reexecuting times of the connect function. This is designed for avoiding an infinite execution. In the case where the number of reexecuting times of the connect function exceeds the upper limit value, error processing is to be carried out. Fig. 59 shows how HTTP messages are transmitted and received by the TCP socket function. Fig. 59 illustrates a relation between HTTP data transmission and reception and socket function call.

Initial processing of the connection for TCP communication is started with the telephone adapter calling the connect function as a client ("(1) TCP connection request" in Fig. 59). In this situation, if the blocking mode (the "blocking mode" means that the client side is to wait to proceed to execute further processing until it receives a response from the server side) of the connect function is used, the connect function is not terminated until the TCP connection is established ("(2) TCP connection acceptance" in Fig. 59), so that the execution of a program is blocked and suspended. There is no problem if the TCP connection is established in a shorter period of time. However, it may take a very long period of time to establish this TCP connection due to some causes such as a network related cause. In such a case, the TCP connection may be established soon in many cases if the execution of the connect function is led to forced termination once and then reexecuted anew. For that reason, a timeout value may be set up for the execution of the connect function. Then, when the timeout value is exceeded, the execution of the connect function may be stopped or led to forced termination, and then reexecuted anew. This assures a successful TCP connection without the processing being kept waiting for a long period of time. This reexecution is not necessarily limited to only once. If the waiting time still exceeds the timeout value even after reexecution, reexecution may be repeated. This may enhance efficiency in restoration in case of a failure. On the other hand, it is meaningless to repeat execution infinitely. For that reason, a fixed maximum value may be set up for the times of reexecution. Then, the TCP connection is repeated until the maximum value. Then, in the case of the times of reconnection exceeding the maximum value, it is considered that some failure has occurred with the network, etc., and error processing should be carried out.

In addition, a fixed constant is given to the timeout value for starting the TCP connection or the maximum value for the times of reexecution at the time of starting the telephone adapter. Then, with a higher success rate of starting the TCP connection in a short period of time, the timeout value is made shorter, and the times of reconnections are reduced. As a result, in case that an error occurs, the occurrence of error may be recognized in a short time. On the other hand, if the success rate is lower, then it is desirable that the timeout value is made longer, and the times is increased in order to secure the TCP connection. Thus, it is allowed to implement the function of automatically adjusting the timeout value or the number of times for reexecutions to an optimal value, while an actual period of time before starting the TCP connection or an actual number of times for reexecution is measured. This allows manual labor to be saved for adjusting the timeout value or the number of repeating times to the optimal setting.

### Embodiment 10.

In call processing of voice data to be transmitted and received over the Internet, the call quality depends largely on data traffic congestion in an actual path on the internet. Then, the delay time of data at arrival is constantly watched in a specific call route, and it is examined whether or not the delay is in the level of affecting the call quality. In addition, if it is confirmed that there is no doubt about that the delay which would affect the call quality has occurred, the user may be informed that the call quality has been degraded by means of such as a display unit of the telephone adapter.

The session managing servers installed throughout the nation store the IP addresses of the respective session managing servers as database. It is possible to measure general communication delay time regularly between specific session managing servers (a call relay server is assumed to be in almost the same position as that of this session managing server) by an OS command calledping of Windows OS ("Windows" is the operating system of Microsoft Corp) or an OS command called tracert of Unix OS ("Unix" is the name of an operating system developed by AT&T Bell Laboratories). Alternatively, the communication delay time may be measured by actually transmitting and receiving a voice packet based on UDP, HTTP, or the like to be used in the IP telephone network system of this invention separately, and creating software for measuring the delay time. Accordingly, a direct route delay between the session managing servers at the two points to which the adapters of calling and called parties are assigned, respectively, may be obtained by means of the OS command or the software. In addition, bypass route delay caused through a third session managing server may also be obtained. As a result, if the time of bypass route delay sum is shorter than the time of the route delay between the session managing servers at the two points, then the setup of the voice data relay route may be changed such that the bypass route is selected and the call relay server route includes the call relay server at the third point.

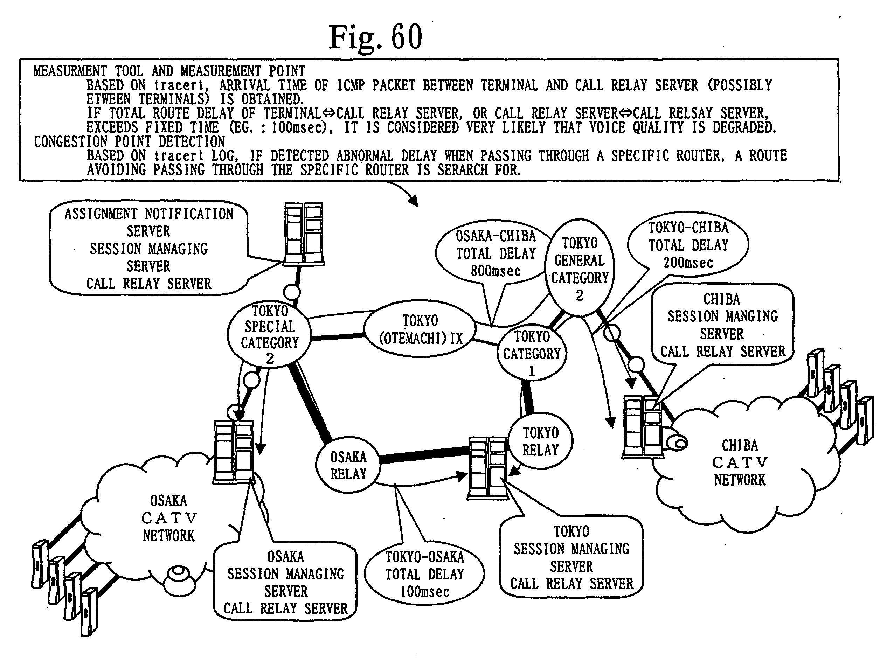

Fig. 60 is a diagram illustrating the processing of confirming for congestion based on an internet route delay check.

With reference to Fig. 60, a check result, a total delay between Tokyo and Osaka is 100msec, a total delay between Tokyo and Chiba is 800msec, and a total delay between Tokyo and Chiba is 200msec. Consequently, the total of delay between Tokyo and Osaka and delay between Tokyo and Chiba is shorter than a total delay between Osaka and Chiba. For that reason, the communication path of the Tokyo-Osaka route is replaced by the Tokyo-Oska route and the Tokyo-Chiba route. As for the selection of this third relay point, if the number of session managing servers arranged throughout the country is large, the optimum may be selected by calculating the sum of delay time and comparing them. As a result, a more comfortable condition may be secured for communication. As a matter of course, since many communication paths coexist, those communication paths may be controlled, wherever possible, so that they are appropriately decentralized without concentrating in one place.

Note that software may be implemented to display a diagram illustrating a network traffic condition between the respective session managing servers and call relay servers as shown in Fig. 60. This allows the system administrator to visually check network congestion. As a result, the system administrator is allowed to directly instruct the session managing server to select the call relay server at the third relay point so that a less congested network route is allocated to the voice data transmission and reception path. This allows an effective operation in an emergency when automatic server processing is not enough time-wise.

In Fig. 60, a total delay is indicated by text near its communication path like "Total Delay 800msec between Osaka-Chiba", for example. Alternatively, however, a communication route may be discriminated from others by color or blinking according to delay speed.

The administrator is requested to review, redesign and reconstruct the IP telephone network system which has been provided, if calling failures occur frequently. For this reason, a warning function to the administrator is important. The following is the summary of warning details for the administrator.
(1) Dual system is basically used for handling server failure. An automatic restoration is performed for a failure, and the condition is notified to the administrator by means of such as automatic message transmission or log output.
(2) In trying to make an IP telephone call, an access to a server is failed by timeout in many times, and there is no other way than calling through the public line more than a fixed number of times. In this case, a warning is sent to the administrator by means of such as automatic message transmission or log output.
(3) In making an IP telephone call, there is more than a fixed amount of traffic, so that the call quality of many users is poor. In this case, a warning is sent to the administrator by means of such as automatic message transmission or log output.
(4) For making an IP telephone call, the normal voice data transmission and reception path of the call relay server is rarely available, so that the call route had to be changed frequently, and the number of the changes exceeds a fixed value. In this case, a warning is sent to the administrator by means of such as automatic message transmission or log output.

### Embodiment 11.

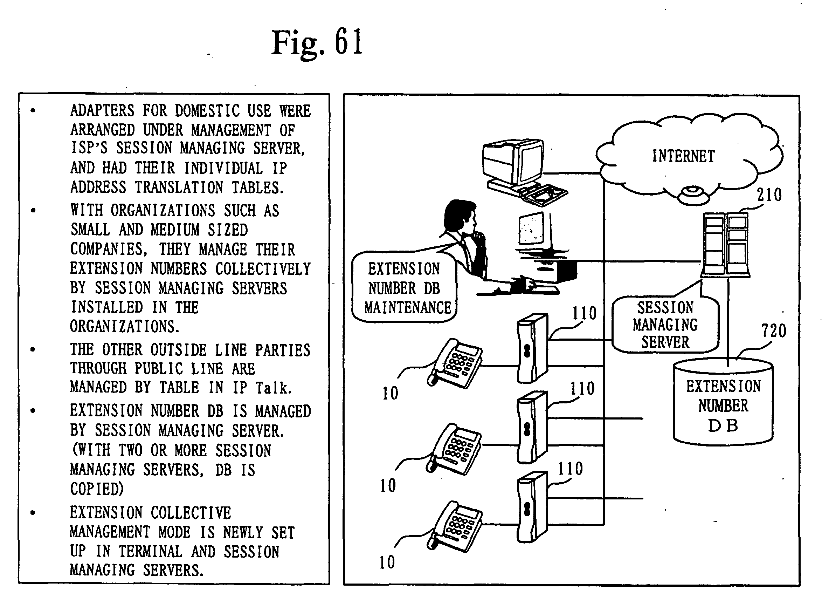

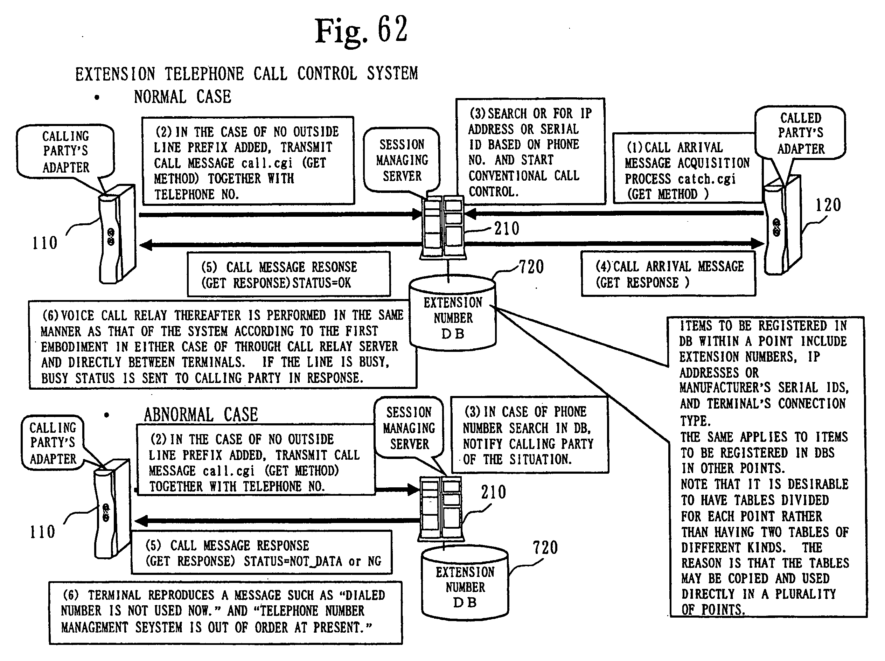

The session managing server and the call relay server may also be installed in a limited area in an organization such as a company and a school. In this case, an extention number system which is available only within a specific area may be set up for telephone calls within the area, unlike outside lines, in many cases. Therefore, it would be convenient if those extension numbers can be managed collectively with a conversion table for translating the extension numbers into the IP addresses and identifiers of the communication adapters of the present invention as a database. For that reason, as shown in Fig. 61, this translation table may be set up in the session managing server (extension number database 720). In this case, when an extension number is inputted from a communication adapter, the communication adapter transmits extension number information to the session managing server. On the session managing server, the communication adapter of the call partner is specified. Then, call control is performed with the specified communication adapter of the other party through the procedures of (1) to (6) shown in Fig. 62.

A procedure of an extension telephone call control system is discussed with reference to Fig. 62.

The calling party's communication adapter, upon reception of an extension number, transmits a call message together with the telephone number received to the session managing server (2). The session managing server specifies a communication partner based on the transmitted extension number with reference to the extension number database 720 (3). The session managing server, if a call arrival message acquisition is performed by the called party's telephone adapter (1), sends a call arrival message back to the called party's communication adapter. In addition, the session managing server also responds to the call message to the calling party's communication adapter (5). After (4) and (5), the calling party and the called party make a call with each other in the same manner as that of the call processing performed between communication adapters in the normal UDP direct communication (6). In case of failing to specify the communication adapter of the other party even by searching the extension number database 720 in the session managing server, the search failure is reported to the calling party (3). The calling party's communication adapter sends the user a message such as "The dialed number is not used." and "Number management system is currently out of order."

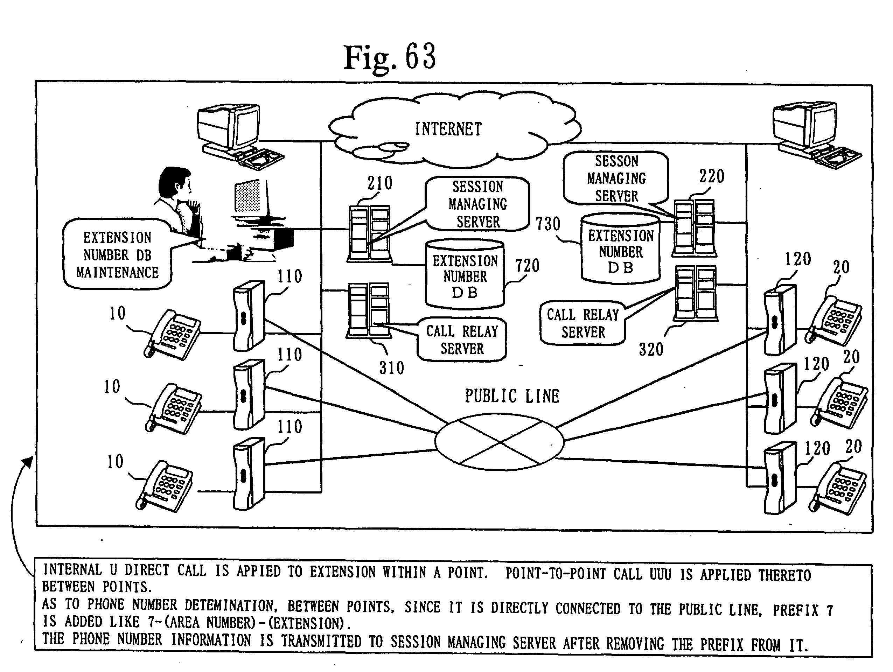

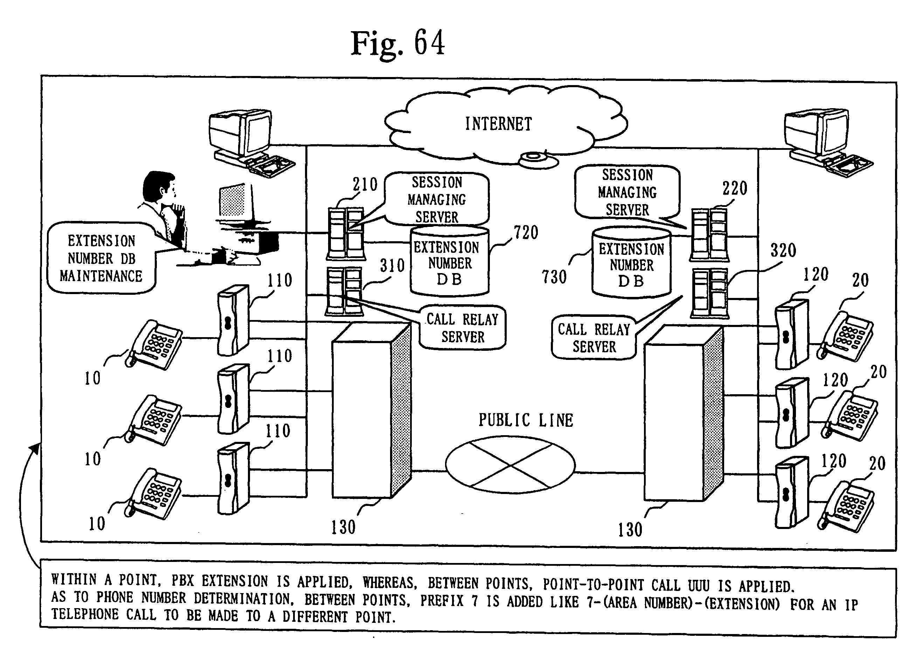

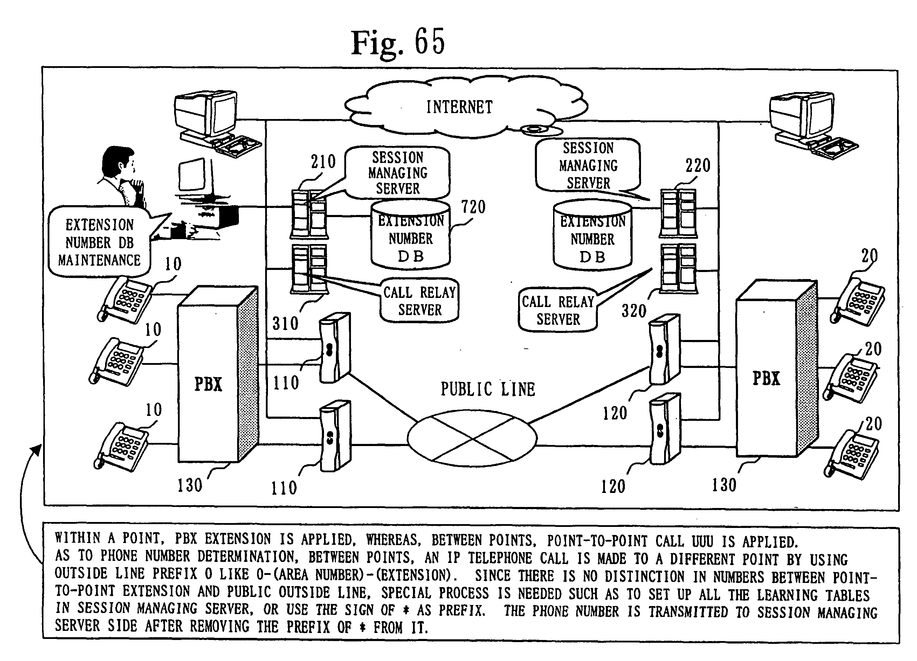

As an implementation type for actually implementing a call control system using an extension number, there are some examples each for a case with PBX 130 (Fig. 64, Fig. 65) and a case without PBX (Fig. 63).

According to the implementation type without PBX shown in Fig. 63, a type internal U Direct (Type "U Direct" indicates a message transmission and reception process using UDP, which uses no call relay server, of system 1 discussed with reference to Fig. 39 in the sixth embodiment) is applied to extension calls within a base. Then, a point-to-point call UUU is applied thereto between bases ("UUU" indicates a message transmission and reception process performed between a communication adapter and a call relay server and between call relay servers by using UDP according to the system 3 using two call relay servers discussed with reference to Fig. 39 in the sixth embodiment in which). The extension number is determined as follows. Since it is connected directly to a public line network, a point-to-point call is transmitted by using a prefix "7" like "7-area number-extension number". The session managing server transmits telephone number information, "area number-extension number", after removing the prefix from it.

Now, the implementation type with PBX is discussed.

Fig. 64 shows the type in which a communication adapter is installed on the PBX extension side.

In the case of Fig. 64, PBX extension is used within a base, but the point-to-point call "UUU" is used between bases ("UUU" corresponds to Type "UUU" of System 3 discussed with reference to Fig. 39 in the sixth embodiment). The telephone number is determined as follows. Between bases, a prefix "7" is used like "7-area number-extension number" for an IP telephone call made to a different base.

Next, the implementation type in which a communication adapter is installed on a PBX outside line side is discussed.

In Fig. 65, the PBX extension is used within a base, whereas a point-to-point call "UUU" is used between bases ("UUU" corresponds to Type "UUU" of System 3 discussed with reference to Fig. 39 in the sixth embodiment). The telephone number is determined as follows. Between bases, an outside line prefix "0" is used like "0-area number-extension number" for an IP telephone call made to a different base. Since there is no distinction in numbers between the point-to-point extension and the public outside line, addresses corresponding to all the extension numbers and those corresponding to all the outside line numbers are stored in a table, which is then installed in a session managing server. Alternatively, special process may be required such as to use the sign of "*" as a prefix. When transmitting a phone number to a session managing server, the prefix "*" is removed from the phone number.

Now, it is to be noted of the translation table database of the session managing server that the database, that is, an extension telephone directory table, may be maintained by a personal computer connected over the network through Web browser by executing an HTTP server process on this session managing server.

### Embodiment 12.

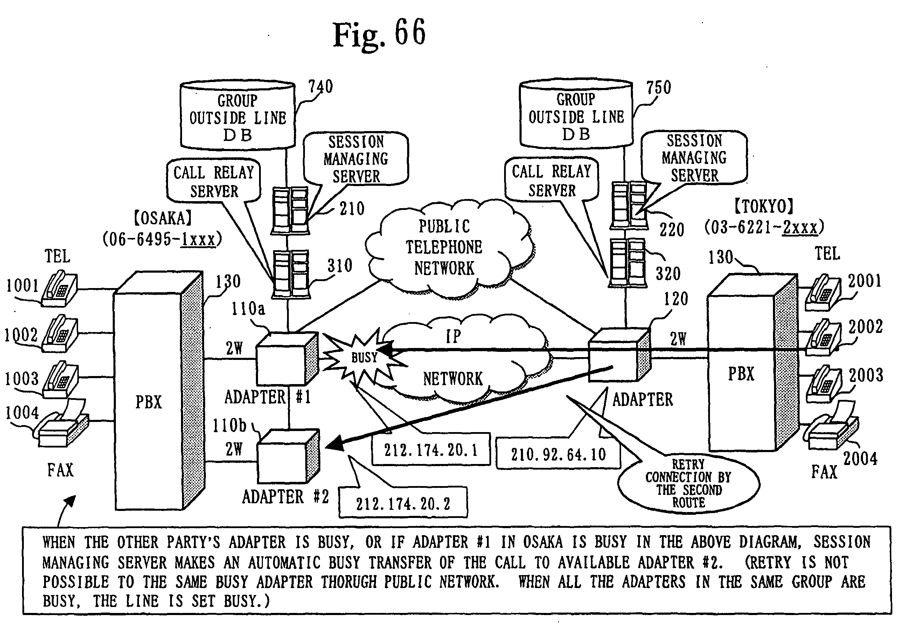

As shown in Fig. 66, as to communication adapters installed within a specific organization, the session managing server manages the call control of the communication adapters. For that reason, upon reception of an outside line call through an IP line, if one of those communication adapters is busy, the call may be transferred to another one substitutable of those communication adapters automatically. The session managing server is provided with a storage unit for storing groups of communication adapters which are mutually substitutable as a database (group outside line DB 740, 750 of Fig. 66).

With referring to Fig. 66, in the case of making a telephone call from Tokyo to Osaka through an IP network, if a communication adapter "#1" in Osaka is busy, the session managing server in Osaka notifies a communication adapter in Tokyo that a substitutable adapter "#2" should be used. Then, the communication adapter in Tokyo tries to connect with the communication adapter "#2" in Osaka. Alternatively, the session managing server in Osaka may notify the session managing server in Tokyo that since the communication adapter "#1" is busy, the communication adapter "#2" should be used. Then, the session managing server in Tokyo may notify the communication adapter in Tokyo that the communication adapter "#2" should be used. However, it is not possible to try to reconnect through the second route using a general public line network. In addition, in the case where all the communication adapters in the group are busy, the line is set to busy.

### Embodiment 13.

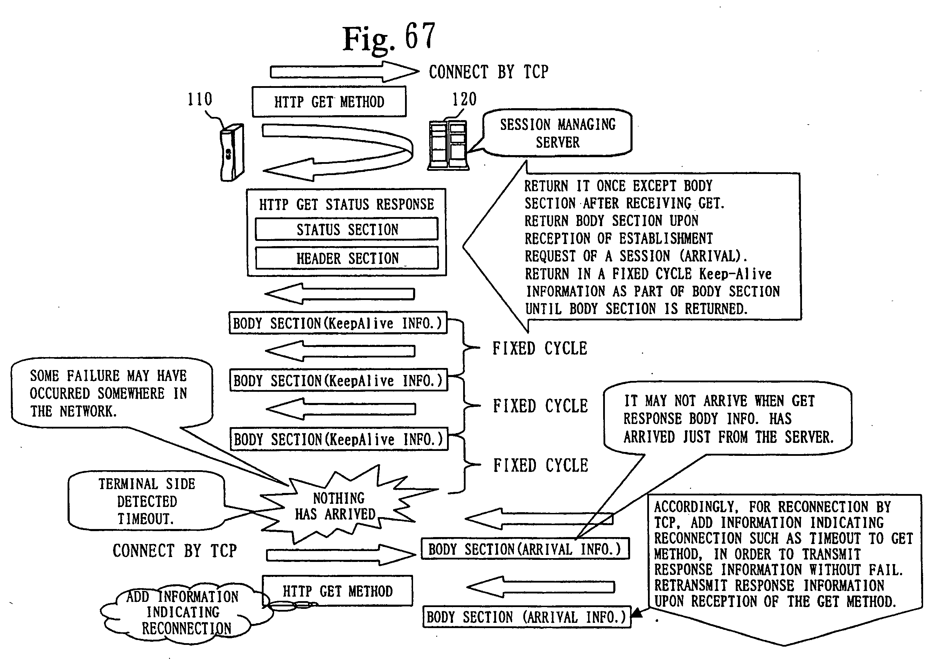

It has already been discussed in the first embodiment that under the condition that the communication adapter does not know the state of TCP connection from the communication adapter to the session managing server, the TCP connection is cut somewhere in the internet path in some cases. In order to allow the communication adapter to confirm that the TCP connection is cut somewhere in the internet path, as shown in Fig. 67, the session managing server sends "HTTP GET status response", except the body section in response to "HTTP GET method" received from the communication adapter. Then, the body section is sent back upon reception of an establishment request of a session. The session managing server sends "Keep-Alive information" as part of the body section to the communication adapter in a fixed cycle until the establishment request of a session is received. The communication adapter, in the case of not receiving the body section (Keep-Alive information) even with the timeout, makes a request for reconnection with the session managing server. In this case, information notifying of its reconnection may be added to data in the GET method. Consequently, if arrival information arrived a little later than the timeout, the session managing server may reply with the reception or arrival information, which was supposed to be sent after confirming that it is a request for reconnection, as the body section.

On the other hand, the communication adapter may also transmit and receive voice information by using HTTP or with the TCP connection secured. For that reason, if the TCP connection is cut similarly, then the transmission and reception of voice information is interrupted.

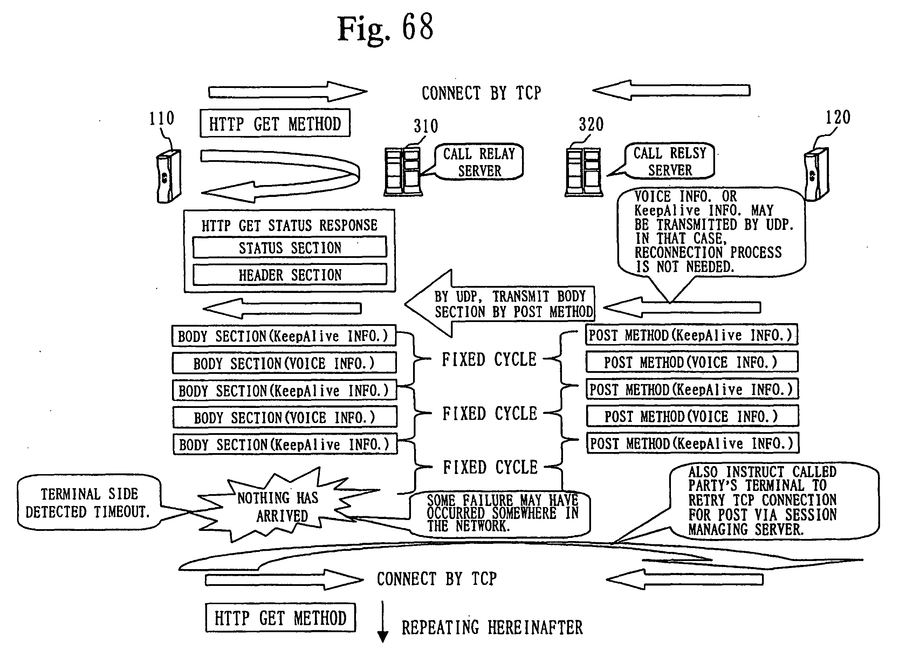

Then, as shown in Fig. 68, also with the transmission and reception of voice information, in the case of HTTP used somewhere in the voice information transmission and reception path, Keep-Alive information is transmitted and received in a fixed cycle through the same TCP connection, regardless of whether voice information exists or not. As a result, when a communication adapter as the destination of the voice information detects a timeout, the TCP connection may be retried. This may prevent the transmission and reception of voice information from being interrupted.

In addition, voice information may be transmitted and received with a single communication relay server or even two communication relay servers. With the latter case, the TCP reconnection is needed to be made not only by the communication adapter of the destination of the voice information, but also by the communication adapter of the transmitting source thereof. The instruction of this TCP reconnection may be transmitted to the communication adapter of the transmitting source through the session managing server in the same manner as that of the first embodiment where the off-hook information of the telephone is notified to the communication adapter of the destination. Thus, the TCP reconnection is made by the communication adapters on both sides of the transmitting source and the destination of the voice information. Hence, even if the TCP connection is cut somewhere on the Internet, the transmission of voice information is allowed to continue.

With referring to Fig. 68, the communication adapter 120 inserts "Keep-Alive information" between pieces of voice information in a fixed cycle, and transmits it to the communication adapter 110. The communication adapter 110 waits for the "Keep-Alive information" from the communication adapter 120. The communication adapter 110, if not receiving the "Keep-Alive information" with a timeout, makes a request for TCP reconnection to the calling party's call relay server 310. At the same time, the communication adapter 110 instructs the communication adapter 120 of the called party through the session managing server to reconnect the call relay server.

### Embodiment 14.

The communication adapters discussed hereinbefore transmit and receive voice data. The voice data is obtained by converting voice analog data inputted to the communication adapter through such as a telephone or a microphone speaker device which are connected with the communication adapter into voice digital data by means of an analog-to-digital conversion device or software installed in the communication adapter, and further converting the voice digital data into compressed voice data by means of a voice codec (a voice coder and decoder, or software) which is installed in the communication adapter.

Compressed voice data per unit time to be subject to voice encoding and decoding by this voice codec is called voice frame data. In the case of transmitting voice data over the IP network, one or more pieces of this voice frame data are accumulated to form an IP packet. The number of pieces of voice frame data to be stored in a single IP packet is determined by the communication adapter specifying a suitable accumulation time in consideration of quality based on the traffic congestion of the IP network and delay time. For example, the time length of voice frame data becomes 20msec, and the accumulation time becomes 60msec. In this case, three pieces of voice frame data are to be stored in a single IP packet.

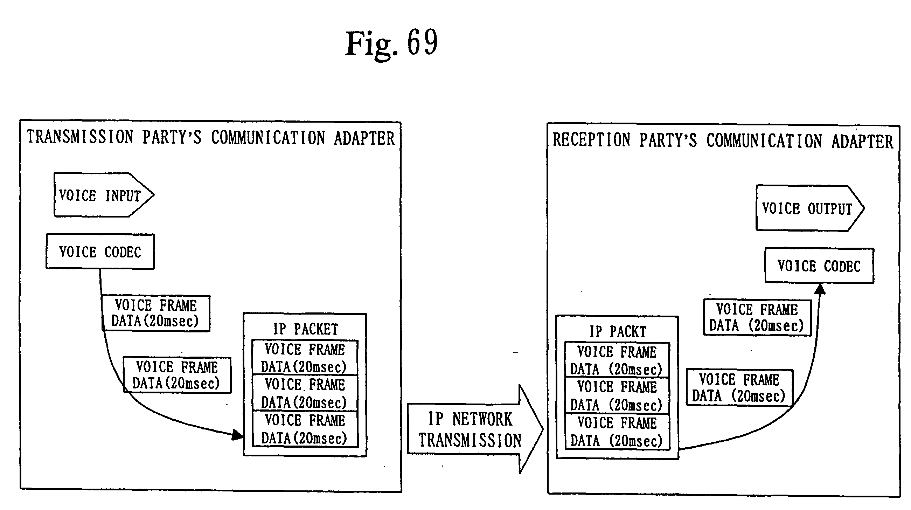

As shown in Fig. 69, according to the conventional method, voice frame data is generated after 20msec, and stored mechanically in an IP packet. Then, an IP packet is automatically transmitted after each 60msec.

On the other hand, there is a method called silent compression. According to this method, voice lower than a fixed level in quantity is regarded as silent. Hence, it is designed not to generate voice frame data so as not to transmit unnecessary IP packets.

Now, it is to be noted that the voice codec generates in many cases voice frame data indicating that ending is voiced when having silence after contiguous voiced sound. Based on the voice frame data indicating that ending is voiced, a voice codec is allowed to reproduce natural voice attenuation and disappearance on the reception side. On the other hand, bit information called marker bit may be turned ON with the first voice frame data after the sound changed from silence to voiced. This shows the voice codec on the reception side the resumption of voiced sound. Hence, voice may be reproduced with a natural rising edge. In addition, on the reception side, natural background sound is supplied to the user by reproducing suitable noise in silence with no voice data arriving.

The voice codec by the silent compression method on the reception side receives the voice frame data indicating that ending is voiced and the voice frame data having the marker bit turned ON indicating the resumption of voiced sound discussed hereinbefore. This allows reproducing natural shift between a voiced state and a silent state. On the other hand, if the voice codec on the reception side fails to receive either one of the voice frame data indicating that ending is voiced and the voice frame data having the marker bit indicating the resumption of voiced sound being turned ON, then loss may occur at the rising edge of voiced sound, unpleasant noise may occur, distortion may occur at the end of voiced sound, or the like.

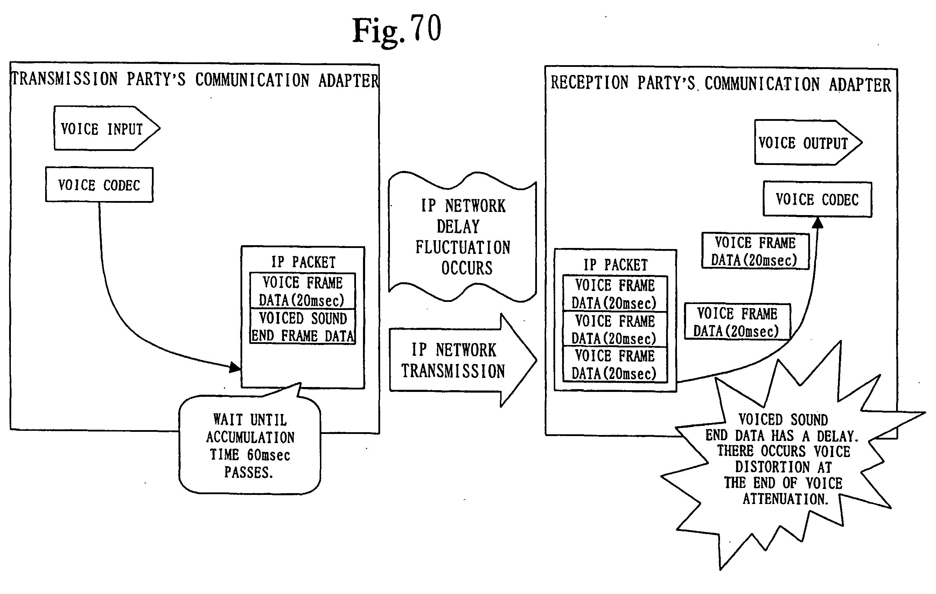

Consequently, as shown in Fig. 70, according to this conventional method, in the case where a substantive transmission delay fluctuation of IP packets occurs, only an IP packet including the voice frame data indicating that ending is voiced may arrive with a substantive delay from the preceding voiced voice frame data. In that case, silent compression based reproduction process of the voice codec on the reception side may be affected. As a result, distortion may occur at the end of voiced sound if the IP packet is not damaged.

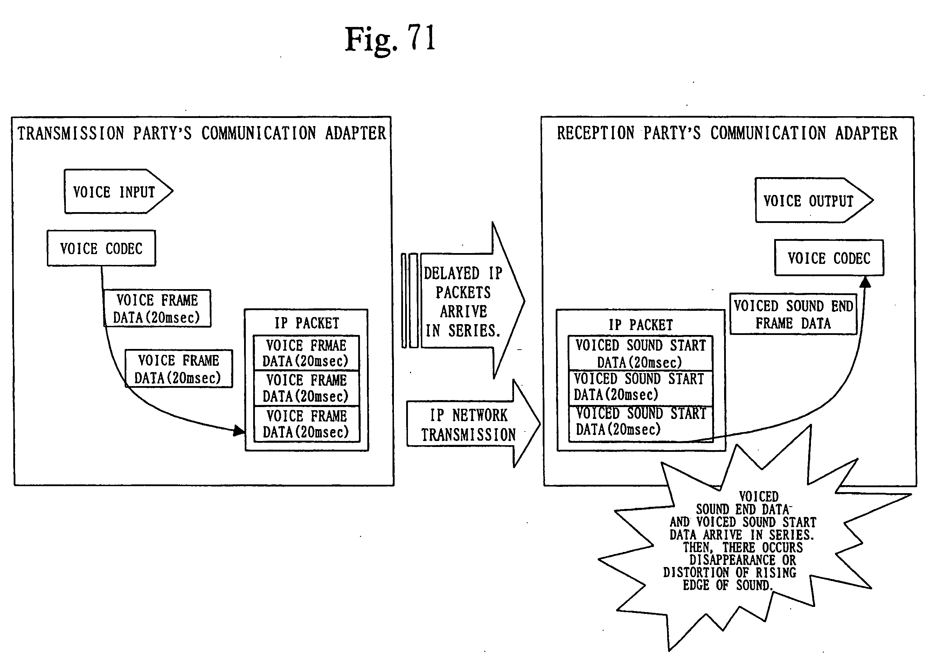

In addition, with referring to Fig. 71, an IP packet including the voice frame data indicating that the ending is voiced may arrive late as illustrated, and soon after that the voice frame data having the marker bit turned ON indicating the resumption of incoming voiced sound may arrive. In this case, the end of voiced sound and the start of voiced sound are instructed in series in a short time to the voice codec on the reception side. As a result, loss may occur at the rising edge of voiced sound, or unpleasant noise may occur.

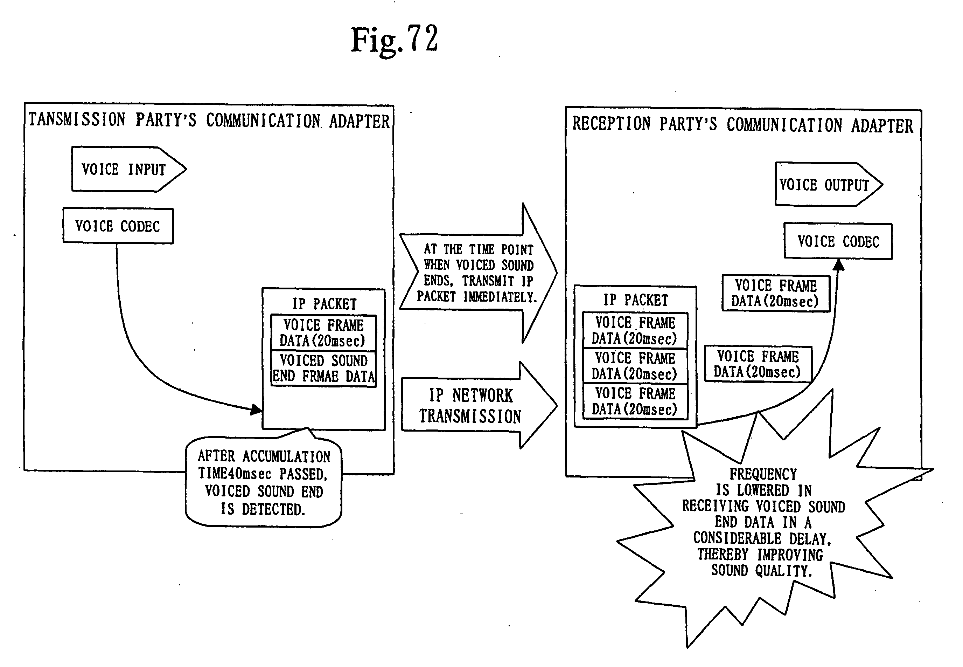

For that reason, as shown in Fig. 72, according to the present invention, it is designed to maintain the quality of voice even in the case where the IP network has substantive delay fluctuation as mentioned above. Specifically, in the case where the voice frame data indicating that ending is voiced is generated by the voice codec on the transmission side, the formation of an IP packet is immediately stopped there regardless of the accumulation time of an IP packet, and then the IP packet is transmitted over the IP network. As a result, the voice codec by the silent compression on the reception side is allowed to reproduce natural voice attenuation and disappearance and voice may be reproduced with a natural rising edge on the reception side.

### Industrial Applicability

As aforementioned, the called party's session managing server stores the fact that it has received the establishment request of a session from the calling party's communication adapter. This allows the calling party's communication adapter to make the establishment request of a session regardless of the communication state of the called party. Even if the called party's communication adapter was incapable of communicating at the time when the calling party's communication adapter made the establishment request of a session, the establishment request of a session by the calling party's communication adapter remains on the session managing server. Subsequently, the session is established between the calling party and the called party upon notification of a communication enable state from the called party's communication adapter. As a result, the user of the calling party is allowed to save labor of redialing.

In addition, the session managing server is identified by the server ID, and the communication adapter is identified by the adapter ID. Consequently, the adapter ID allows the session managing servers of the calling party and the called party to manage the establishment request of a session requested by the calling party's communication adapter. Furthermore, the adapter ID allows for specifying the called party's communication adapter with which the session is requested to be established. In addition, the server ID allows the communication adapter of the calling party or the called party to specify the session managing server which manages the communication adapter itself and the communication adapter of the other party.

In addition, according to the internet communication system, the assignment notification server notifies the communication adapter of the server ID of the session managing server which manages the communication adapter. For that reason, two or more session managing servers may be installed. In addition to that, the number of communication adapters to be managed by each session managing server may be equalized among the session managing servers, or determined according to a fixed condition.

In addition, according to the internet communication system, the called party's session managing server determines the called party's communication relay server for relaying data between the communication adapters of the calling party and the called party, and notifies the communication adapters of the calling party and the called party of the determined call relay server. For that reason, the communication adapter is allowed to reduce the processing load of determining the communication relay server.

In addition, the called party's communication relay server is identified by the communication relay server ID. For that reason, the communication relay server ID allows the communication adapters of the calling party and the called party to connect the called party's communication relay server for transmitting and receiving communication data.

In addition, according to the internet communication system, the calling party's session managing server determines the calling party's communication relay server for relaying data between the communication adapters of the calling party and the called party, and notifies the calling party's communication adapter and the called party's session managing server. The called party's session managing server notifies the called party's communication adapter of the notified calling party's communication relay server. As a result, the communication adapter is allowed to reduce the processing load of determining the communication relay server.

In addition, the calling party's communication relay server is identified by the communication relay server ID. For that reason, the communication relay server ID allows the communication adapters of the calling party and the called parity to connect the calling party's communication relay server for transmitting and receiving communication data.

In addition, according to the internet communication system, the adapter ID contains the identifier of an ISP. For that reason, in the case where the user already has a contract with a predetermined ISP, data may be transmitted and received between the calling party and the called party by connecting the Internet through the ISP. Furthermore, even if the users of the calling party and the called party have contracts with different ISPs from each other, since the adapter ID contains the identifier of each ISP, the calling party and the called party are allowed to connect the Internet through the different ISPs.

In addition, according to the internet communication system, the adapter ID contains the identifier of the area in which the communication adapter is installed. This allows the calling party's session managing server to select the nearest communication relay server to the area in which the calling party's communication adapter is installed, and allows the called party's session managing server to select a nearest communication relay server to the area in which the called party's communication adapter is installed. This may make a distance between the communication adapter and the communication relay server as close as possible. Hence, call cost through distance based calculation may be reduced. The distance here is not a geographical distance but the network route distance which is indicated by the number of hopping routers in a network route.

The session managing server is provided with the calling party's session managing unit and the called party's session managing unit. For that reason, this session managing server is allowed to be used by the calling party or by the called party.

The communication adapter is provided with the calling party's communication adapter and the called parity's communication adapter. For that reason, this communication adapter is allowed to be used by the calling party or by the called party.

The internet communication system carries out communications over the Internet between the calling party's communication adapter and the calling party's communication relay server by using HTTP. As a result, there is no problem in transmitting and receiving data between the calling party's communication adapter and the calling party's communication relay server, even if the environment in which the calling party's communication adapter is installed may be protected by firewall. In addition, between the called party's communication adapter and the called party's communication relay server, communications are carried out over the Internet by using HTTP. As a result, there is no problem in transmitting and receiving data between the called party's communication adapter and the called party's communication relay server, even if the environment in which the called party's communication adapter is installed may be protected by firewall. Still in addition, between the communication relay servers of the called party and the called party, communications are carried out by using a protocol other than HTTP. By using the protocol having an excellent real-time characteristic for communication processing, for example, communications qualitymaybe enhanced.

In particular, UDP which is the protocol having an excellent real-time characteristic for communication processing may be used as the protocol other than HTTP. Hence, communications quality may be enhanced.

In addition, RTP, in particular, which is the protocol having an excellent real-time characteristic for communication processing may be used as the protocol other than HTTP. Hence, communications quality may be enhanced.

In addition, in particular, the protocols which are designed for various types of applications created by using TCP and widely used as a protocol other than HTTP may be used. This may provide the easy use environment of this internet communication system to the user who has already set up the internet environment in which he/she is allowed to use the Internet.

In addition, the internet communication system connects the communication relay servers of the calling party and the called party through the private network of an ISP. For that reason, an existing server owned by the ISP is allowed to be used as the communication relay server. Furthermore, the ISP is allowed to use the existing network environment for managing this inventive internet communication system. As a result, the management of this inventive internet communication system may be implemented with a lower cost for launching a project if people in ISP business use it.

In addition, the communication relay server is provided with the HTTP communication unit and the UDP communication unit. For that reason, the communication relay server may be installed in the network environment using the protocol of HTTP or using the protocol of UDP.

The program which operates in the session managing server causes the computer to execute the session management process of the calling party and the session management process of the called party. For that reason, this session managing server may be installed as the calling party's session managing server or as the called party's session managing server.

The program which operates in the communication adapter causes the computer to execute the communication adapter process of the calling party and the communication adapter process of the called party. For that reason, this communication adapter may be installed as the calling party's communication adapter or as the called party's communication adapter.

The program which operates in the communication relay server causes the computer to execute the HTTP communication process and the UDP communication process. For that reason, this communication relay server may be used in the network environment of using the protocol of HTTP or using the protocol of UDP.

## Claims

1. An internet communication system for data communications carried out by using an internet, the internet communication system comprising:
a calling party's communication adapter;
a called party's communication adapter;
a calling party's session managing server which manages the calling party's communication adapter; and
a called party's session managing server which manages the called party's communication adapter;
wherein the calling party's communication adapter transmits an adapter ID of the called party's communication adapter to the calling party's session managing server,
wherein the calling party's session managing server receives the adapter ID of the called party's communication adapter from the calling party's communication adapter, and transmits back to the calling party's communication adapter a server ID of the called party's session managing server managing the called party's communication adapter which is identified by the adapter ID,
wherein the calling party's communication adapter receives the server ID of the called party's session managing server from the calling party's session managing server, transmits the adapter ID of the called party's communication adapter to the called party's session managing server which is identified by the server ID received, and transmits an establishment request of a session with the called party's communication adapter,
wherein the called party's session managing server receives the adapter ID of the called party's communication adapter from the calling party's communication adapter, and stores that the establishment request of the session with the adapter identified by the adapter ID received is received,
wherein the called party's communication adapter searches by using the adapter ID of self for the establishment request of the session if it is stored in the called party's session managing server, and transmits a communication enable state of the self to the called party's session managing server in a case where the establishment request of the session is stored in the called party's session managing server and also the self is in the communication enable state, and
wherein the called party's session managing server allows the calling party's communication adapter and the called party's communication adapter to establish the session by using the internet in a case where the communication enable state is notified from the called party's communication adapter.

2. The internet communication system according to claim 1, further comprising an assignment notification server which receives an adapter ID from a communication adapter, assigns a session managing server which manages the communication adapter based on the adapter ID, and notifies the communication adapter of a server ID of the session managing server assigned.

3. The internet communication system according to claim 1, further comprising a called party's communication relay server, which relays communications between the calling party's communication adapter and the called party's communication adapter,
wherein the called party's session managing server transmits a called party's communication relay server ID for identifying the called party's communication relay server to the calling party's communication adapter and the called party's communication adapter, and
wherein the calling party's communication adapter and the called party's communication adapter, upon reception of the called party's communication relay server ID, establish the session via the called party's communication relay server which is identified by the called party's communication relay server ID.

4. The internet communication system according to claim 1, further comprising a calling party's communication relay server, which relays communications between the calling party's communication adapter and the called party's communication adapter,
wherein the calling party's session managing server transmits a calling party's communication relay server ID for identifying the calling party's communication relay server to the calling party's communication adapter,
wherein the calling party's communication adapter receives the calling party's communication relay server ID, and transmits the calling party's communication relay server ID to the called party's session managing sever,
wherein the called party's session managing server transmits the calling party's communication relay server ID to the called party's communication adapter,
wherein the called party's communication adapter receives the calling party's communication relay server ID, and
wherein the calling party's communication adapter and the called party's communication adapter establish the session via the calledparty's communication relay serverwhich is identified by the calling party's communication relay server ID.

5. The internet communication system according to claim 1, wherein the adapter ID includes an identifier of an internet service provider (ISP).

6. The internet communication system according to claim 1, wherein the adapter ID includes an identifier of an area where the communication adapter is installed.

7. An internet communication method for carrying out data communications by using an internet, the internet communication method comprising:
making an inquiry with the calling party's sessionmanaging server for a called party's session managing server which manages a called party's communication adapter, by a calling party's communication adapter;
responding to the calling party's communication adapter about the called party's session managing server which manages the called party's communication adapter, by the calling party's session managing server;
transmitting an establishment request of a session with the called party's communication adapter to the called party's session managing server from the calling party's communication adapter;
storing in the called party's session managing server that the establishment request of the session with the called party's communication adapter has been issued, by the calling party's communication adapter;
making an inquiry with the called party's session managing server for the establishment request if it is issued, by the called party's communication adapter;
notifying the called party's session managing server that the called party's communication adapter is in a communication enable state, from the called party's communication adapter, in a case where the establishment request is issued and where the called party's communication adapter is in the communication enable state; and
allowing a session between the calling party's communication adapter and the called party's communication adapter to be established by using the internet by the called party's session managing server in a case where it is notified that the called party's communication adapter is in the communication enable state.

8. A session managing server, which is connected with a calling party's communication adapter and a called party's communication adapter, the session managing server comprising:
a calling party's session managing unit, which receives an adapter ID of the called party's communication adapter from the calling party's communication adapter, and transmits back to the calling party's communication adapter a server ID of a called party's session managing server which manages the called party's communication adapter identified by the adapter ID; and
a called party's session managing unit, which receives the adapter ID of the called party's communication adapter from the calling party's communication adapter, stores that an establishment request of a session with the adapter identified by the adapter ID received is received, makes the called party's communication adapter search for the establishment request of the session stored, and allows the session between the calling party's communication adapter and the called party's communication adapter using an internet to be established in a case where a communication enable state is notified by the called party's communication adapter.

9. A communication adapter, which is connected with a calling party's session managing server and a called party's session managing server, the communication adapter comprising:
a calling party's communication adapter unit, which transmits an adapter ID of a called party's communication adapter to the calling party's session managing server, receives from the calling party's session managing server a server ID of the called party's session managing server which manages the called party's communication adapter, transmits the adapter ID of the called party's communication adapter to the called party's session managing server which is identified by the server ID received, and transmits an establishment request of a session; and
a called party's communication adapter unit, which searches for the establishment request of the session whether it is stored in the called party's session managing server by using an adapter ID of self, and transmits to the called party's session managing server that the called party's communication adapter itself is in a communication enable state in a case where the establishment request of the session is stored in the called party's session managing server and where the called party's communication adapter itself is in the communication enable state.

10. An internet communication system, which carries out data communications by using an internet between a calling party's communication adapter and a called party's communication adapter, the internet communication system comprising:
a calling party's communication relay server, which carries out data communications with the calling party's communication adapter over the internet by using Hyper Text Transfer Protocol (HTTP); and
a called party's communication relay server, which carries out data communications with the called party's communication adapter over the internet by using HTTP, and also carries out data communications with the calling party's communication relay server by using a protocol other than HTTP.

11. The internet communication system according to claim 10, wherein the protocol other than HTTP is a User Datagram Protocol (UDP).

12. The internet communication system according to claim 10, wherein the protocol other than HTTP is a Real-time Transport Protocol (RTP).

13. The internet communication system according to claim 10, wherein the protocol other than HTTP is a protocol designed for an application based on Transmission Control Protocol (TCP)

14. The internet communication system according to claim 10, wherein the calling party's communication relay server and the called party's communication relay server are connected through a private network of an Internet Service Provider (ISP).

15. An internet communication method for carrying out data communications between a calling party's communication adapter and a called party's communication adapter by using an internet, the internet communication method comprising:
carrying out data communications between the calling party's communication adapter and the calling party's communication relay server over the internet by using Hyper Text Transfer Protocol (HTTP);
carrying out data communications between the calling party's communication relay server and the called party's communication relay server by using a protocol other than HTTP; and
carrying out data communications between the called party's communication relay server and the called party's communication adapter over the internet by using HTTP.

16. A communication relay server, which relays data communications between a communication adapter and a server apparatus, the communication relay server comprising:
an HTTP communication unit, which carries out data communications with the communication adapter over an internet by using Hyper Text Transfer Protocol (HTTP); and
a UDP communication unit, which carries out data communications with the server apparatus by using User Datagram Protocol (UDP).

17. A program operating with a session managing server which is connected with a calling party's communication adapter and a called party's communication adapter, the program causing a computer to carry out:
a calling party's session managing process for receiving an adapter ID of the called party's communication adapter from the calling party's communication adapter, and transmitting back to the calling party's communication adapter a server ID of a called party's session managing server which manages the called party's communication adapter identified by the adapter ID, and
a called party's session managing process for receiving the adapter ID of the called party's communication adapter from the calling party's communication adapter, storing that an establishment request of a session with the adapter identified by the adapter ID received has been received, making the called party's communication adapter search for the establishment request of the session stored, and allowing the session between the calling party's communication adapter and the called party's communication adapter using an internet to be established in a case where a communication enable state is notified from the called party's communication adapter.

18. A program operating with a communication adapter which is connected with a calling party's session managing server and a called party's session managing server, the program causing a computer to carry out:
a calling party's communication adapter process for transmitting an adapter ID of a called party's communication adapter to the calling party's session managing server, receiving a server ID of the called party's session managing server which manages the called party's communication adapter from the calling party's session managing server, transmitting the server ID of the called party's communication adapter to the called party's session managing server identified by the server ID received, and transmitting an establishment request of a session, and
a called party's communication adapter process for searching for the establishment request of the session stored in the called party's session managing server by using the adapter ID of the called party's communication adapter itself, and transmitting to the called party's session managing server that the called party's communication adapter itself is in a communication enable state in a case where the establishment request of the session is stored in the called party's session managing server and the called party's communication adapter itself is in the communication enable state.

19. A program which operates with a communication relay server for relaying data communications between a communication adapter and a server apparatus, the program causing a computer to carry out:
an HTTP communication process for carrying out data communications with the communication adapter over an internet by using Hyper Text Transfer Protocol (HTTP), and
a UDP communication process for carrying out data communications with the server apparatus by using User Datagram Protocol (UDP).

20. An internet communication system for data communications to be carried out by using an internet, the internet communication system comprising:
a calling party's communication adapter;
a called party's communication adapter;
a calling party's session managing server which manages the calling party's communication adapter; and
a called party's session managing server which manages the called party's communication adapter;
wherein the calling party's communication adapter transmits an establishment request of a session including an adapter ID of the called party's communication adapter to the calling party's session managing server,
wherein the calling party's session managing server receives the adapter ID of the called party's communication adapter from the calling party's communication adapter, searches for a server ID of the called party's session managing server which manages the called party's communication adapter, the server ID being identified by the adapter ID, transmits the adapter ID to the called party's session managing server identified by the server ID searched for, and transmits the establishment request of the session with the called party's communication adapter,
wherein the called party's session managing server receives the adapter ID of the called party's communication adapter from the calling party's session managing server, stores that the establishment request of the session with an identified adapter by the received adapter ID is received, receives a communication enable state from the called party's communication adapter, and allows the session between the calling party's session managing server and the called party's communication adapter using the internet to be established in a case where the establishment request of the session with the called party's communication adapter in the communication enable state received is stored,
wherein the called party's communication adapter, in the communication enable state, transmits that it is in the communication enable state to the calledparty's session managing server, and
wherein the calling party's communication adapter receives from the calling party's session managing server that the session using the internet is allowed to be established by the called party's session managing server.

21. The internet communication system according to claim 20, further comprising an assignment notification server which receives an adapter ID from a communication adapter, assigns a session managing server which manages the communication adapter based on the adapter ID, and notifies the communication adapter of a server ID of the session managing server assigned.

22. The internet communication system according to claim 20, further comprising a called party's communication relay server, which relays communications between the calling party's communication adapter and the called party's communication adapter,
wherein the called party's session managing server transmits a called party's communication relay server ID for identifying the called party's communication relay server to the calling party's communication adapter and the called party's communication adapter, and
wherein the calling party's communication adapter and the called party's communication adapter, upon reception of the called party's communication relay server ID, establish the session via the called party's communication relay server which is identified by the called party's communication relay server ID.

23. The internet communication system according to claim 20, further comprising a calling party's communication relay server, which relays communications between the calling party's communication adapter and the called party's communication adapter,
wherein the calling party's session managing server transmits a calling party's communication relay server ID for identifying the calling party's communication relay server to the calling party's communication adapter,
wherein the calling party's communication adapter receives the calling party's communication relay server ID, and transmits the calling party's communication relay server ID to the called party's session managing sever,
wherein the called party's session managing server transmits the calling party's communication relay server ID to the called party's communication adapter,
wherein the called party's communication adapter receives the calling party's communication relay server ID, and
wherein the calling party's communication adapter and the called party's communication adapter establish the session via the called party's communication relay server which is identified by the calling party's communication relay server ID.

24. The internet communication system according to claim 20, wherein the adapter ID includes an identifier of an internet service provider (ISP).

25. The internet communication system according to claim 20, wherein the adapter ID includes an identifier of an area in which the communication adapter is installed.

26. The internet communication system according to claim 5, wherein the adapter ID includes an identifier of a domain of a local IP (Internet Protocol) address which is managed by the internet service provider (ISP).

27. The internet communication system according to claim 1, wherein the adapter ID includes a group identifier for grouping communication adapters.

28. An internet communication method for carrying out data communications by using an internet, the internet communication method comprising:
transmitting an establishment request of a session with a called party's communication adapter to a calling party's session managing server from a calling party's communication adapter;
transmitting from the calling party's session managing server to a called party's session managing server which manages the called party's communication adapter the establishment request of the session received from the calling party's communication adapter;
storing in the called party's session managing server that the establishment request of the session with the called party's communication adapter has been received from the calling party's communication adapter;
notifying the called party's session managing server from the called party's communication adapter that the called party's communication adapter itself is in a communication enable state in a case where the called party's communication adapter is in the communication enable state;
allowing by the called party's session managing server the session between the calling party's session managing server and the called party's communication adapter using the internet to be established in a case where it is notified of the communication enable state from the called party's communication adapter, and where the establishment request of the session has been issued with the called party's communication adapter which is in the communication enable state; and
notifying by the calling party's session managing server the calling party's communication adapter that the session using the internet has been allowed to be established between the calling party's session managing server and the called party's communication adapter in a case where the session is allowed to be established.

29. A session managing server, which is connected with a calling party's communication adapter and a called party's communication adapter, the session managing server comprising:
a calling party's session managing unit, which receives an establishment request of a session including an adapter ID of the called party's communication adapter from the calling party's communication adapter, and transmits the establishment request of the session including the adapter ID of the called party's communication adapter received from the calling party's communication adapter to a called party's session managing server which manages the called party's communication adapter identified by the adapter ID, and
a called party's session managing unit, which receives the adapter ID of the called party's communication adapter from the calling party's session managing server, stores that the establishment request of the session with the adapter identified by the adapter ID received has been received, searches for the establishment request of the session stored and allows the session between the calling party's communication adapter and the called party's communication adapter using an internet to be established in a case where a communication enable state is notified from the called party's communication adapter.

30. The internet communication system according to claim 10, wherein the protocol other than HTTP is a protocol designed for an application based on Simple Control Transmission Protocol (SCTP).

31. The internet communication system according to claim 10, wherein the calling party's communication relay server and the called party's communication relay server are connected over the internet.

32. A program operating with a session managing server which is connected with a calling party's communication adapter and a called party's communication adapter, the program causing a computer to carry out:
a calling party's session managing process for receiving an establishment request of a session including an adapter ID of the called party's communication adapter from the calling party's communication adapter, and transmitting back to a called party's session managing server which manages the called party's communication adapter identified by the adapter ID the establishment request of the session received from the calling party's communication adapter, and
a called party's session managing process for receiving the establishment request of the session including the adapter ID of the called party's communication adapter from the calling party's session managing server, storing that the establishment request of the session with the adapter identified by the adapter ID received has been received, searching, in a case where a communication enable state of the called party's communication adapter is notified, for the establishment request of the session stored, allowing the session between the calling party's communication adapter and the called party's communication adapter using an internet to be established, and notifying the called party's communication adapter that the establishment request of the session has been received.

33. A program operating with a communication adapter which is connected with a calling party's session managing server and a called party's session managing server, the program causing a computer to carry out:
a calling party's communication adapter process for transmitting an establishment request of a session including an adapter ID of a called party's communication adapter to the calling party's session managing server, and
a called party's communication adapter process for transmitting to the called party's session managing server that the called party's communication adapter itself is in a communication enable state in a case where the called party's communication adapter itself is in the communication enable state, and receives from the called party's session managing server that the establishment request has been received.

34. A communication adapter, which is of a calling party, and connected with a calling party's session managing server and a called party's session managing server, and also connected to a communication apparatus which outputs information at least,
wherein the calling party's communication adapter makes the communication apparatus output that a called party's communication adapter is busy communicating and therefore is in a state of communication disenabled at a moment, upon reception from the called party's session managing server by way of the calling party's session managing server that the called party's communication adapter is busy communicating and therefore is in the state of communication disenabled at the moment.

35. A communication adapter, which is connected to a calling party's session managing server and a called party's session managing server, and
wherein the communication adapter transmits a start of a communication to the called party's session managing server in a case of starting the communication, and transmits an end of the communication to the called party's session managing server in a case of ending the communication.

36. The communication adapter according to claim 35, wherein the communication adapter starts the communication based on a predetermined call control method, and transmits the start of the communication to the called party's session managing server together with information for identifying the predetermined call control method.

37. The internet communication system according to claim 1, wherein the calling party's communication adapter connects a communication apparatus, which is capable at least of performing a predetermined operation, inputs information indicating that the predetermined operation has been performed from the communication apparatus, and transmits the information inputted for indicating that the predetermined operation has been performed to the calling party's session managing server,
wherein the calling party's session managing server transmits the information received indicating that the predetermined operation has been performed to the called party's session managing server, and
wherein the called party's session managing server transmits the information received indicating that the predetermined operation has been performed to the called party's communication adapter.

38. The internet communication system according to claim 1, wherein the calling party's communication adapter and the called party's communication adapter each are installed in a predetermined network environment and assigned an IP (Internet Protocol) address according to the predetermined network environment, and store a connection type of the communication adapter which is determined according to an assignment type of the IP address,
wherein the calling party's communication adapter transmits the connection type of the calling party's communication adapter to the calling party's session managing server,
wherein the called party's communication adapter transmits the connection type of the calledparty's communication adapter to the called party's session managing server,
wherein the called party's session managing server determines to communicate data with the called party's communication adapter by using one communication protocol of Hyper Text Transfer Protocol (HTTP) and User Datagram Protocol (UDP) based on the connection type transmitted from the called party's communication adapter, and then transmits information notifying of the one communication protocol determined to the called party's communication adapter,
wherein the calling party's session managing server determines to communicate data with the calling party's communication adapter by using one communication protocol of Hyper Text Transfer Protocol (HTTP) and User Datagram Protocol (UDP) based on the connection type transmitted from the calling party's communication adapter, and then transmits information notifying of the communication protocol determined to the calling party's communication adapter,
wherein the calling party's communication adapter communicates the data according to the information notifying of the communication protocol transmitted from the calling party's session managing server, and
wherein the called party's communication adapter communicates the data according to the information notifying of the communication protocol transmitted from the called party's session managing server.

39. The internet communication system according to claim 38, wherein the IP address to be assigned to the calling party's communication adapter according to the predetermined network environment and the IP address to be assigned to the called party's communication adapter according to the predetermined network environment are assigned based on at least one of cases in which a global IP (Internet Protocol) address is statically assigned, a private IP address is statically assigned, a global IP address is dynamically assigned by using Dynamic Host Configuration Protocol (DHCP), a private IP address dynamically assigned by using DHCP, and a further localized local IP address is assigned in one of those IP address environments by installing such as a router device which is equipped with a Network Address Translation (NAT facility) between the communication adapter and a connecting point of a network in the one of those IP address environments.

40. The internet communication system according to claim 1, wherein the called party's communication adapter issues a GET method of Hyper Text Transfer Protocol (HTTP) to the called party's session managing server in order to confirm that the establishment request of the session from the calling party's communication adapter is stored in the called party's session managing server; and
wherein the called party's session managing server, upon reception of the GET method issued by the called party's communication adapter, searches for the establishment request of the session with the called party's communication adapter which issued the GET method stored, and transmits a result of the establishment request of the session searched for, which is included in a GET response to the GET method, to the called party's communication adapter.

41. The internet communication system according to claim 1, wherein the called party's communication adapter connects a communication apparatus, which is capable of performing a predetermined operation, inputs information indicating contents of the predetermined operation of the communication apparatus connected, and transmits the information to the calling party's session managing server,
wherein the calling party's session managing server stores the information, which is transmitted from the called party's communication adapter, indicating the contents of the predetermined operation of the communication apparatus connected to the called party's communication adapter, and
wherein the calling party's communication adapter acquires the information, which is stored in the calling party's session managing server, indicating the contents of the predetermined operation of the communication apparatus connected to the called party's communication adapter by using a GET method of Hyper Text Transfer Protocol (HTTP).

42. The internet communication system according to claim 1, wherein the called party's communication adapter transmits a GET method of Hyper Text Transfer Protocol (HTTP) to the called party's session managing server at fixed intervals, and
wherein the called party's session managing server, upon reception of the GET method from the called party's communication adapter, transmits information to the called party's communication adapter indicating that there is no establishment request of the session from the calling party's communication adapter in a case where the establishment request of the session has been issued by the calling party's communication adapter but a communication has not been started yet between the calling party's communication adapter and the called party's communication adapter, and transmits information to the called party's communication adapter indicating that the establishment request of the session is received from the calling party's communication adapter in a case where the establishment request of the session has been issued by the calling party's communication adapter and a communication has been started between the calling party's communication adapter and the called party's communication adapter.

43. The internet communication system according to claim 1, wherein the called party's communication adapter transmits a GET method of Hyper Text Transfer Protocol (HTTP) to the called party's session managing server when one of applying power and preparing for a start of a call immediately after completing a call processing, and
wherein the called party's session managing server holds the GET method transmitted from the called party's communication adapter, and transmits to the called party's communication adapter as a response to the GET method held that the establishment request of the session is received from the calling party's communication adapter in a case where the establishment request of the session is received from the calling party's communication adapter.

44. The internet communication system according to claim 1, wherein the called party's communication adapter transmits a GET method of Hyper Text Transfer Protocol (HTTP) to the called party's session managing server when one of power being applied and a call being prepared to be started immediately after completing a call processing, and
wherein the called party's session managing server, upon reception of the GET method transmitted from the called party's communication adapter, continues transmitting to the called party's communication adapter alive confirmation information for maintaining a line connection between the called party's communication adapter and the called party's session managing server in a case where the establishment request of the session has not been issued by the calling party's communication adapter, and transmits to the called party's communication adapter that the establishment request of the session is received from the calling party's communication adapter in a case where the establishment request of the session has been issued by the calling party's communication adapter.

45. The internet communication system according to claim 44, wherein the called party's communication adapter transmits the GET method of Hyper Text Transfer Protocol (HTTP) again to the called party's session managing server in a case where the alive confirmation information has not been transmitted yet from the called party's session managing server even after a predetermined period of time.

46. The internet communication system according to claim 45, wherein the called party's communication adapter transmits the GET method of Hyper Text Transfer Protocol (HTTP) again to the called party's session managing server together with information indicating a repeated transmission.

47. The internet communication system according to claim 2, wherein the calling party's communication adapter transmits information notifying of an operational state of the calling party's communication adapter to the assignment notification server, and
wherein the assignment notification server checks the calling party's communication adapter if it is normal based on the information notifying of the operational state transmitted from the calling party's communication adapter, and transmits an operational state of the assignment notification server itself together with a check result to the calling party's communication adapter as a response to the information notifying of the operational state transmitted from the calling party's communication adapter.

48. The internet communication system according to claim 2, wherein the assignment notification server is configured with a plurality of server devices, the plurality of server devices including one as a primary server for acting as the assignment notification server and another as a secondary server, and wherein the assignment notification server is switched over from the primary server to the secondary server so that the secondary server acts as the assignment notification server, in case of the primary server operating abnormally, and notif ies the calling party's communication adapter that the secondary server is replaced to act as the assignment notification server.

49. The internet communication system according to claim 1, wherein the calling party's sessionmanaging server is configured with a plurality of server devices, the plurality of server devices including one as a primary server for acting as the calling party's session managing server and another as a secondary server, and wherein the calling party's session managing server is switched over from the primary server to the secondary server so that the secondary server acts as the calling party's session managing server, in case of the primary server operating abnormally, and notifies the calling party's communication adapter that the secondary server is replaced to act as the calling party's session managing server.

50. The internet communication system according to claim 1, wherein the called party's session managing server is configured with a plurality of server devices, the plurality of server devices including one as a primary server for acting as the called party's session managing server and another as a secondary server, and wherein the called party's session managing server is switched over from the primary server to the secondary server so that the secondary server acts as the called party's session managing server, in case of the primary server operating abnormally, and notifies the called party's communication adapter that the secondary server is replaced to act as the called party's session managing server.

51. The internet communication system according to claim 2, further comprising a customer management database for managing a service charge for a system for each calling party's communication adapter,
wherein the assignment notification server acquires the service charge for the calling party's communication adapter from the customer management database in a case of transmitting the server ID of the session managing server which manages the communication adapter to the calling party's communication adapter, and transmits the service charge acquired and the server ID to the calling party's communication adapter, and
wherein the calling party's communication adapter determines whether to set a communication function of itself to be inoperable based on the service charge received from the assignment notification server.

52. The internet communication system according to claim 51, wherein the calling party's communication adapter determines whether to set the communication function of itself to be operable based on the service charge received from the assignment notification server in a case where the communication function of itself is set to be inoperable.

53. The internet communication system according to claim 47, wherein the calling party's communication adapter installs a software, which includes version information, for executing a function of the communication adapter, and transmits the version information of the software together with the information notifying of the operational state of the calling party's communication adapter to the assignment notification server,
wherein the assignment notification server determines whether to replace the software installed in the calling party's communication adapter by another software with a different version based on the version information transmitted from the calling party's communication adapter, and transmits a determination result to the calling party's communication adapter.

54. The internet communication system according to claim 53, wherein the assignment notification server manages an address of a Web server which manages the software installed in the calling party's communication adapter, and transmits an address of a Web server of the another software with the different version to the calling party's communication adapter in a case of determining that the software installed in the calling party's communication adapter is to be replaced by the another software with the different version.

55. The internet communication system according to claim 4, wherein the session managing server manages a number of communication relaying by the calling party's communication relay server, and transmits to the calling party's communication adapter information on that relaying by the communication relay server is saturated in a case where the establishment request of the session is received from the calling party's communication adapter and the number of communication relaying exceeds a preset number of communication relaying,
wherein the calling party's communication adapter connects a communication apparatus, which is equipped with an information output function at least, andmakes the communication apparatus output information indicating that the relaying by the calling party's communication relay server is saturated and therefore no communication is available via the calling party's communication relay server upon reception of the information on that the relaying by the calling party's communication relay server is saturated from the session managing server.

56. The internet communication system according to claim 3, wherein the session managing server manages a number of communication relaying by the called party's communication relay server, and transmits to the calling party's communication adapter information on that relaying by the communication relay server is saturated in a case where the establishment request of the session is received from the calling party's communication adapter and the number of communication relaying exceeds a preset number of communication relaying,
wherein the calling party's communication adapter connects a communication apparatus, which is equipped with an information output function at least, andmakes the communication apparatus output information indicating that the relaying by the called party's communication relay server is saturated and therefore no communication is available by the called party's communication relay server upon reception of the information on that the relaying by the called party's communication relay server is saturated from the session managing server.

57. The internet communication system according to claim 55, further comprising a PSTN (Public Switched Telephone Network),
wherein the calling party's communication adapter, which connects the PSTN, calls the called party's communication adapter by using the PSTN upon reception of the information on that the relaying by the calling party's communication relay server is saturated from the session managing server.

58. The internet communication system according to claim 56, further comprising a PSTN (Public Switched Telephone Network),
wherein the calling party's communication adapter, which connects the PSTN, calls the called party's communication adapter by using the PSTN upon reception of the information on that the relaying by the called party's communication relay server is saturated from the session managing server.

59. The internet communication system according to claim 1, wherein the communication adapter, prior to a start of a communication with the session managing server, issues a connection request to the session managing server by using TCP (Transmission Control Protocol), cancels the connection request upon reception of no response from the session managing server to the connection request after a preset fixed timeout value, and repeats the connection request until one of the connection succeeds and a number of repetitions of the connection request reaches a preset maximum number.

60. The internet communication system according to claim 10, wherein the communication adapter, prior to a start of a communication with the communication relay server, issues a connection request to the communication relay server by using TCP (Transmission Control Protocol), cancels the connection request upon reception of no response from the communication relay server to the connection request after a preset fixed timeout value, and repeats the connection request until one of the connection succeeds and a number of repetitions of the connection request reaches a preset maximum number.

61. The internet communication system according to claim 59, wherein the communication adapter makes one of changes of increasing the timeout value and increasing the maximum number in a case where the request for making the connection by using TCP (Transmission control Protocol) ends in failure, and makes one of changes of educing the timeout value and decreasing the maximum number in a case where the request for making the connection using TCP (Transmission control Protocol) ends in success.

62. The internet communication system according to claim 60, wherein the communication adapter makes one of changes of increasing the timeout value and increasing the maximum number in a case where the request for making the connection using TCP (Transmission control Protocol) ends in failure, and makes one of changes of reducing the timeout value and decreasing the maximum number in a case where the request for making the connection using TCP (Transmission control Protocol) ends in success.

63. The internet communication system according to claim 59, wherein the communication adapter connects a communication apparatus which has at least an information output function, and makes the communication apparatus output information indicating that the communication cannot be relayed by using the internet, in one of cases where the request for making the connection by using TCP (Transmission Control Protocol) ends in failure after the preset fixed timeout value and the connection does not succeed after the preset maximum number.

64. The internet communication system according to claim 60, wherein the communication adapter makes one of changes of increasing the timeout value and increasing the maximum number of times in a case where the request for making the connection by using TCP (Transmission control Protocol) ends in failure, and makes one of changes of reducing the timeout value and decreasing the maximum number of times in a case where the request for making the connection by using TCP (Transmission control Protocol) ends in success.

65. The internet communication system according to claim 10, wherein the session managing server transmits a packet to the communication adapter managed by the session managing server and the communication relay server, measures an arrival time interval between a transmission of the packet and a reception of response information thereto from the communication adapter and the communication relay server, judges a level of congestion for each communication path, and transmits a judgement result to the communication adapter; and
wherein the communication adapter connects a communication apparatus which has an information output function at least, and makes the communication apparatus output the judgement result transmitted from the session managing server.

66. The internet communication system according to claim 10, wherein the communication relay server transmits a packet to the communication adapter and the session managing server, measures an arrival time interval between a transmission of the packet and a reception of response information thereto from the communication adapter and the session managing server, judges a level of congestion for each communication path, and transmits a judgement result of the level of congestion to the communication adapter; and
wherein the communication adapter connects a communication apparatus which has an information output function at least, and makes the communication apparatus output the judgement result transmitted from the communication relay server.

67. The internet communication system according to claim 65, further comprising a bypass communication relay server for bypassing communication path other than the communication relay server,
wherein the session managing server switches from a first communication path through which communications are relayed between the calling party's communication adapter and the called party's communication adapter by way of the communication relay server, to a second communication path through which communications are relayed between the calling party's communication adapter and the called party's communication adapter by way of the bypass communication relay server, based on the judgement result of the level of congestion of the communication path.

68. The internet communication system according to claim 67, wherein the bypass communication relay server is replaced with a plurality of bypass communication relay servers, and
wherein the session managing server transmits the packet to the plurality of bypass communication relay servers, measures an arrival time interval between a transmission of the packet and a reception of response information thereto from each of the plurality of bypass communication relay servers, judges a level of congestion for each communication path including one of the pluralityof bypass communication relay servers connected, selects one of the plurality of bypass communication relay servers whose communication path is less congested, and switches from the first communication path to the second communication path through which communications are relayed between the calling party's communication adapter and the called party's communication adapter by way of a selected one of the plurality of the bypass communication relay servers.

69. The internet communication system according to claim 68, wherein the session managing server transmits to the communication adapter that the first communication path is to be switched to the second communication path, and
wherein the communication adapter connects a communication apparatus having at least an information output function, and makes the communication apparatus output the information transmitted from the session managing server indicating that the first communication path is to be switched to the second communication path.

70. The internet communication system according to claim 1, further comprising a LAN (Local Area Network) which communicates by using extension number information available within a specific network area;
wherein the calling party's communication adapter and the calling party's session managing server are connected to the LAN;
wherein the calling party's communication adapter inputs the extension number information of a destination, and transmits the extension number information inputted to the calling party's session managing server; and
wherein the calling party's session managing server includes an extension_number_information_storing_unit which manages the extension number information and the adapter ID of the called party's communication adapter, making them correspond, acquires the adapter ID of the called party's communication adapter corresponding to the extension number information from the extension_number_information_storing_unit by using the extension number information transmitted from the calling party's communication adapter, and transmits the server ID of the called party's session managing server which is identified by the adapter ID acquired back to the calling party's communication adapter.

71. The internet communication system according to claim 20, further comprising a LAN (Local Area Network) which communicates by using extension number information available within a specific network area;
wherein the calling party's communication adapter and the calling party's session managing server are connected to the LAN;
wherein the calling party's communication adapter inputs the extension number information of a destination, and transmits the extension number information inputted to the calling party's session managing server; and
wherein the calling party's session managing server includes an extension_number_information_storing_unit which manages the extension number information and the adapter ID of the called party's communication adapter, making them correspond, acquires the adapter ID of the called party's communication adapter corresponding to the extension number information from the extension_number_information_storing_unit by using the extension number information transmitted from the calling party's communication adapter, transmits the adapter ID acquired and the server ID of the called party's session managing server which manages the called party's communication adapter identified by the adapter ID acquired to the called party's session managing server, and transmits the establishment request of the session with the called party's communication adapter.

72. The internet communication system according to claim 70 comprising a plurality of called party's communication adapters,
wherein the calling party's session managing server stores a group ID for grouping and managing the plurality of called party's communication adapters, the extension number information, and the adapter IDs of the called party's communication adapters making them correspond, in the extension_number_information_storing_unit, acquires an adapter ID of a called party's communication adapterwhose group ID is same as the group ID of a called party's communication adapter which is busy with a call from the extension_number_information_storing_unit in a case where the called party's communication adapter which is requested from the calling party's communication adapter to establish the session is busy with the call, and transmits the adapter ID acquired and a server ID of the called party's session managing server, which manages the called party's communication adapter identified by the adapter ID acquired, back to the calling party's communication adapter, and
wherein the calling party's communication adapter receives the adapter ID of the called party's communication adapter and the server ID of the called party's session managing server from the calling party's session managing server, transmits the adapter ID received to the called party's session managing server identified by the server ID received, and transmits the establishment request of the session with the called party's communication adapter.

73. The internet communication system according to claim 71, comprising a plurality of called party's communication adapters;
wherein the calling party's session managing server stores a group ID for grouping and managing the plurality of called party's communication adapters, the extension number information, and the adapter IDs of the called party's communication adapters, making them correspond, in the extension_number_information_storing_unit, acquires an adapter ID of a called party's communication adapter whose group ID is same as the group ID of a called party's communication adapter which is busy with a call from the extension_number_information_storing_unit in a case where the called party's communication adapter which is requested from the calling party's communication adapter to establish the session is busy with the call, transmits the adapter ID acquired to the called party's session managing server which manages the called party's communication adapter identified by the adapter ID acquired, and transmits the establishment request of the session with the called party's communication adapter.

74. The internet communication system according to claim 1, wherein the communication adapter forms an IP packet by accumulating at least one piece of voice frame data, which is an encoding and decoding unit of a voice codec (a device or software for voice encoding and decoding) within a specified period of time determined by the communication adapter, and transmits the IP packet, and wherein the communication adapter transmits the IP packet immediately after storing voice frame data indicating an end of a sequence in the IP packet, even before the specified period of time passes, at a time when voice frame data indicating the end is generated, at an end of the sequence of the voice data when it has silence.
